# EUROPEAN PATENT APPLICATION

(11) **EP 4 787 583 A1**
(43) Date of publication of application: **05.08.2026**
(21) Application number: 24870781.2
(22) Date of filing: 25.09.2024
(51) Int. Cl.: H01M 50/30, H01M 50/367, H01M 50/204, H01M 50/244

(54) **BATTERY MODULE, BATTERY PACK, EXPLOSION VENTING PIPE ASSEMBLY, INSTALLATION PLATFORM, AND BATTERY PACK ASSEMBLY**

(30) Priority: 28.09.2023 CN 202322654205 U; 25.12.2023 CN 202323536083 U; 29.02.2024 CN 202420382562 U; 26.04.2024 CN 202420882248 U; 26.04.2024 CN 202420882244 U; 31.05.2024 CN 202421223465 U; 22.07.2024 CN 202421735083 U
(71) Applicant: Aurora Power&Energy Holdings Pte. Ltd., Singapore 189652 (SG)
(72) Inventor: LEI, Zhengjun, Xi'an, Shaanxi 710075 (CN); CHEN, Mengqi, Xi'an, Shaanxi 710075 (CN); ZHANG, Sanxue, Xi'an, Shaanxi 710075 (CN)
(74) Representative: Winter, Brandl - Partnerschaft mbB
(86) International application number: PCT/CN2024/121096
(87) International publication number: WO 2025/067237

(57) **Abstract**

A battery module (15), a battery pack (16), an explosion venting pipe assembly (13), an installation platform, and a battery pack assembly. The battery module (15) comprises a case (11) and multiple cells (12) arranged in the case (11); an internal cavity of each cell (12) is in communication with an internal cavity of the case (11); explosion venting pipe assemblies (13) in communication with the internal cavity of the case (11) are disposed on the case (11); the explosion venting pipe assemblies (13) are configured to be connected to an explosion venting pipe manifold (19). The explosion venting pipe manifold (19) connects the explosion venting pipe assemblies (13) of all the battery modules (15) in the battery pack (16). When a cell (12) in any battery module (15) in the battery pack (16) undergoes thermal runaway, fumes generated during the thermal runaway of the cell (12) can be exhausted via the explosion venting pipe manifold (19), thereby reducing the risk of thermal runaway diffusion and burst of the battery modules (15) or even the battery pack (16) and an energy storage container.

## Description

### Technical Field

The present disclosure relates to the field of batteries, and particularly, to a battery module, a battery pack, an explosion venting pipe assembly, an installation platform, and a battery pack assembly.

### Background

Currently, with the continuous growth in global energy demand and the increasing awareness of environmental protection, energy storage technologies have gradually become one of the important means for addressing energy-related problems.

An energy storage container, as a novel energy storage device, has advantages such as portability, flexibility, high efficiency, and the like, and is widely used in fields comprising power systems, transportation, and aerospace. Existing energy storage containers on the market generally comprise a container body, a support frame located within the container body, and a plurality of battery packs disposed on the support frame. The battery packs are fixed to the support frame via respective battery pack support frames. Each battery pack comprises a plurality of battery modules (also referred to as battery assemblies or battery module groups), and each battery module comprises a housing and a plurality of battery cells disposed within the housing, the plurality of battery cells being connected in parallel, in series, or in a series-parallel combination.

Due to the high-density aggregation of battery cells within the energy storage container, thermal runaway is likely to be induced under the effect of factors such as overcharging, over-discharging, overheating, or the like of individual battery cells. If smoke generated during the thermal runaway may not be discharged in a timely and accurate manner, the thermal runaway may persist and propagate, and in severe cases, may result in rupture of the battery modules, the battery packs, or even the energy storage container.

### Summary

Some embodiments of the present disclosure provide a battery module, a battery pack, an explosion venting pipe assembly, an installation platform, and a battery pack assembly, thereby overcoming the safety problems arising from the inability to promptly and accurately discharge thermal runaway gases in conventional energy storage containers.

In an embodiment of the present disclosure a battery module is provided, including: a housing; a plurality of battery cells arranged within the housing, inner cavities of the plurality of battery cells being in communication with an inner cavity of the housing; and an explosion venting pipe assembly disposed on the housing and in communication with the inner cavity of the housing, the explosion venting pipe assembly being configured to be connected to an explosion vent manifold. Explosion venting pipe assemblies of all the battery modules within the battery pack are collected via the explosion vent manifold. When a battery cell in any battery module within the battery pack undergoes thermal runaway, the thermal runaway gases may be discharged via the explosion vent manifold, reducing the risk of thermal runaway propagation and minimizing the likelihood of rupture of the battery module, the battery pack, or the energy storage container.

Some embodiments of the present disclosure primarily include seven different embodiments of battery modules, with the main differences relating to the explosion venting pipe assemblies:

### First embodiment of battery module:

The explosion venting pipe assembly of the first embodiment of battery module includes a first explosion vent component and a second explosion vent component; the first explosion vent component includes a first hollow pipe member connected to the housing, and an explosion vent membrane is disposed within the first hollow pipe member; and the second explosion vent component is a three-way pipe, a first port of the second explosion vent component being configured to be sealed to the first explosion vent component, and a second port of the second explosion vent component and a third port of the second explosion vent component thereof being configured to be connected to flexible pipe segments forming an explosion vent manifold. The explosion venting pipe assembly of the battery modules is designed as a three-way pipe segment, with the three-way pipe segments of adjacent battery modules connected via flexible pipe segments to form an explosion vent manifold. Compared with an explosion vent manifold of a single-piece pipe structure, this design imposes relatively low requirements on the mounting accuracy of the explosion venting pipe assemblies of the battery modules. Any mounting deviations of the explosion venting pipe assemblies may be accommodated by deformation of the flexible pipe segments, reducing the difficulty of mounting the explosion vent manifold.

In an embodiment, the second explosion vent component is a union three-way pipe; external threads are disposed on an outer wall at an end of the first explosion vent component connected to the second explosion vent component; and a union joint of the second explosion vent component serves as a first port and is threaded to the external threads on the outer wall of the first explosion vent component. The first explosion vent component may be conveniently connected to the second explosion vent component via a union joint.

In an embodiment, the first explosion vent component further includes a second hollow pipe member connected to the first hollow pipe member; a material of the second hollow pipe member is an insulation material, allowing the explosion vent manifold to be insulated from the battery module at the battery module end, thereby enhancing safety; external threads are disposed on an outer wall at an end of the first hollow pipe member connected to the second hollow pipe member; the second hollow pipe member includes a connecting pipe and a union nut attached to one end of the connecting pipe; external threads are disposed on an outer wall at the other end of the connecting pipe; the union nut of the second hollow pipe member is threaded to the external threads on the outer wall of the first hollow pipe member; and the other end of the second hollow pipe member is threaded to the union joint of the second explosion vent component.

In an embodiment, sealing washers are disposed at connection parts between the second hollow pipe member, the first hollow pipe member, and the second explosion vent component, thereby further ensuring the sealing integrity of the connection parts.

### Second embodiment of battery module:

In the second embodiment of battery module, an explosion vent membrane is disposed within the explosion venting pipe assembly. The explosion venting pipe assembly is designed as a flexible hollow pipe member and is connected to a non-segmented, integral explosion vent manifold. This design imposes relatively low requirements on the mounting accuracy of the explosion venting pipe assemblies of the battery modules and on the spacing deviations between battery modules. Any mounting deviations of the explosion venting pipe assemblies or spacing variations between battery modules may be compensated for by deformation of the flexible hollow pipe member, reducing the difficulty of mounting the explosion venting pipe assemblies onto the explosion vent manifold. Moreover, by using a non-segmented, integral explosion vent manifold, the risk of leakage is reduced to some extent compared with a segmented flexible explosion vent manifold.

In an embodiment, the explosion venting pipe assembly further includes a first hollow pipe member, an explosion vent membrane is disposed within the first hollow pipe member, and the flexible hollow pipe member is connected to the housing via the first hollow pipe member. The flexible hollow pipe member and the first hollow pipe member are connected in a detachable manner, allowing the flexible hollow pipe member to be connected to the first hollow pipe member after the battery module has been assembled.

In an embodiment, the flexible hollow pipe member is a corrugated pipe having a union joint at least at one end, and the union joint of the flexible hollow pipe member is threaded to the first hollow pipe member.

In an embodiment, the explosion venting pipe assembly further includes a second hollow pipe member made of an insulation material, one end of the second hollow pipe member being connected to the first hollow pipe member, and the other end being connected to the flexible hollow pipe member. Insulation between the explosion vent manifold and the battery module may be achieved at the battery module end, thereby enhancing the safety of the battery pack.

In an embodiment, the flexible hollow pipe member is a corrugated pipe having union joints at two ends, the union joints at the two ends being connected to one end of the second hollow pipe member and to the explosion vent manifold, respectively. The union joints at two ends allow easy connection to the second hollow pipe member and the explosion vent manifold, further reducing the assembly difficulty of the battery pack.

In an embodiment, sealing washers are disposed at connection parts between the second hollow pipe member, the first hollow pipe member, and the flexible hollow pipe member.

### Third embodiment of battery module:

In the third embodiment of battery module, the explosion venting pipe assembly includes a first explosion vent component and a second explosion vent component; the first explosion vent component is a hollow pipe member connected to the housing, and an explosion vent membrane is disposed within the hollow pipe member; the second explosion vent component is a three-way pipe, a first port of the second explosion vent component being configured to be sealed to the first explosion vent component, and a second port of the second explosion vent component and a third port of the second explosion vent component thereof being configured to be connected to flexible pipe segments forming an explosion vent manifold; and the hollow pipe member and/or the three-way pipe is provided with a bending portion. The explosion venting pipe assembly of the battery modules is designed as a modular member, which includes a three-way pipe. The three-way pipes of adjacent battery modules are connected via flexible pipe segments to form an explosion vent manifold. Compared with an explosion vent manifold of a single-piece pipe structure, this design imposes relatively low requirements on the mounting accuracy of the explosion venting pipe assemblies of the battery modules. Any mounting deviations of the explosion venting pipe assemblies may be accommodated by deformation of the flexible pipe segments, reducing the difficulty of mounting the explosion vent manifold. Moreover, a bending portion is disposed in the hollow pipe member and/or the three-way pipe to avoid thermal runaway materials from backflowing into the inner cavity of the housing due to obstruction by a horizontal pipe segment of the three-way pipe, thereby further enhancing the safety of such battery modules.

In an embodiment, when a bending portion is disposed in the three-way pipe, the bending portion may be located in a vertical pipe segment of the three-way pipe or in a horizontal pipe segment of the three-way pipe. When the bending portion is located in the horizontal pipe segment of the three-way pipe, a Y-shaped three-way pipe is preferably used. The thermal runaway materials are discharged from the hollow pipe member and directly impinge on the bending portion of the horizontal pipe segment of the three-way pipe, where the flow direction is changed within the bending portion, such that most of the thermal runaway materials flow toward the horizontal pipe segment of the three-way pipe, reducing backflow.

In an embodiment, the second explosion vent component is a union three-way pipe; external threads are disposed on an outer wall at an end of the hollow pipe member connected to the second explosion vent component; and a union joint of the second explosion vent component serves as a first port and is threaded to the external threads on the outer wall of the hollow pipe member.

### Fourth embodiment of battery module:

An explosion vent port is disposed in a housing of the fourth embodiment of battery module, and the explosion venting pipe assembly includes a first pipe segment, a second pipe segment, and a third pipe segment connected in sequence; the first pipe segment is a metal pipe sealed to the explosion vent port; the second pipe segment is a high-temperature resistant insulating pipe; and the third pipe segment is a metal pipe configured to be connected to the explosion vent manifold. In the explosion venting pipe assembly, a high-temperature resistant insulating pipe is introduced, wherein the high temperature herein refers to the maximum temperature of thermal runaway gases. This configuration may avoid deformation of the insulating pipe due to high temperature and consequent leakage, and may also avoid the problem of the insulating pipe melting under a high-temperature environment and blocking the explosion vent port or the explosion vent manifold. In addition, metal pipes are connected to two ends of the high-temperature resistant insulating pipe, thereby facilitating the connection of the explosion venting pipe assembly to the explosion vent port of the battery module and the explosion vent manifold.

In an embodiment, the second pipe segment is a ceramic pipe, which, as compared with a metal pipe member having a high-temperature resistant insulating coating applied on a surface thereof, has a relatively simple structure and lower cost.

In an embodiment, clearance holes corresponding to polarity terminals of the plurality of battery cells are disposed in a top plate of the housing; the polarity terminals of the plurality of battery cells extend through the clearance holes, and regions of the top plate of the housing corresponding to the clearance holes are fixedly sealed to casings of the plurality of battery cells; heat transfer pipe clamping portions are disposed at the parts where the polarity terminals of the plurality of battery cells extend through the clearance holes; and heat transfer pipes are fixed to the heat transfer pipe clamping portions of the polarity terminals of the plurality of battery cells, the heat transfer pipes being insulated from the plurality of battery cells.

### Fifth embodiment of battery module:

A shared chamber is disposed in a housing of the fifth embodiment of battery module, and an inner cavity of the shared chamber is in communication with inner cavities of all of the plurality of battery cells. An explosion vent port is disposed in the housing. The explosion venting pipe assembly includes a first connecting pipe, a second connecting pipe, and a connecting assembly, wherein the first connecting pipe is configured to be connected to the explosion vent port of the battery module, and an explosion vent membrane is disposed within the first connecting pipe; the second connecting pipe is configured to be connected to the explosion vent manifold; the connecting assembly includes a pipe seat, an insulating sleeve, a sealing member, and a locking nut; the pipe seat is fixed to an end portion of the second connecting pipe, through holes being formed inside the pipe seat and external threads being disposed on an outer wall thereof; the insulating sleeve is sleeved over the first connecting pipe; first stepped holes are formed in the locking nut, a large-diameter portion of each of the first stepped holes being a threaded hole; the locking nut and the pipe seat are sleeved over the insulating sleeve, and the locking nut is threaded to the pipe seat; and the sealing member is sleeved over the insulating sleeve and is compressed between a stepped surface of the first stepped hole of the locking nut and an end surface of the pipe seat to achieve sealing between the pipe seat and the locking nut. Each battery module is connected to the explosion vent manifold via an explosion venting pipe assembly. The explosion venting pipe assembly is a sleeve-embodiment connector, which provides a reliable connection and good sealing performance. Moreover, the sleeve-embodiment connector allows for simple and quick connection between the battery module and the explosion vent manifold, offering high assembly efficiency and convenient disassembly. In addition, the insulating sleeve in the explosion venting pipe assembly provides reliable insulation between the battery module and the explosion vent manifold, ensuring the safety of the battery module during operation.

In an embodiment, the second connecting pipe is a three-way pipe, a first port of the second explosion vent component being configured to be sealed to the pipe seat, and a second port of the second explosion vent component and a third port of the second explosion vent component thereof being configured to be connected to flexible pipe segments forming an explosion vent manifold. This configuration imposes relatively low requirements on the mounting accuracy of each battery module with respect to the explosion vent manifold. Any mounting deviations of the explosion venting pipe assemblies may be accommodated by deformation of the flexible pipe segments, reducing the difficulty of mounting the explosion vent manifold.

In an embodiment, the second connecting pipe is a flexible hollow pipe member, one end of the flexible hollow pipe member being configured to be sealed to the pipe seat, and the other end being configured to be connected to the explosion vent manifold. The flexible hollow pipe member is connected to a non-segmented, integral explosion vent manifold, imposing relatively low requirements on the mounting accuracy of each battery module with respect to the explosion vent manifold. Any mounting deviations of the explosion venting pipe assemblies may be accommodated by deformation of the flexible hollow pipe members, reducing the difficulty of mounting the explosion venting pipe assemblies onto the explosion vent manifold. Moreover, by using a non-segmented, integral explosion vent manifold, the risk of leakage is reduced to some extent.

In an embodiment, in the explosion venting pipe assembly, the insulating sleeve is provided with an annular inner stop edge, which is compressed between an end surface of the first connecting pipe and a stepped surface of the second stepped hole of the pipe seat, achieving sealing between the pipe seat and the first connecting pipe. This connection method provides an additional sealing layer, enhancing the sealing integrity between the first connecting pipe and the second connecting pipe, and further ensuring the sealing reliability of the connection between the first connecting pipe and the second connecting pipe. Moreover, an inner diameter of the annular inner stop edge is smaller than an inner diameter of the first connecting pipe and is smaller than a small-diameter portion of the second stepped hole, such that the insulating sleeve completely wraps the end portion of the first connecting pipe, thereby enhancing the insulation performance between the first connecting pipe and the second connecting pipe.

In an embodiment, in the explosion venting pipe assembly, an outward annular outer stop edge is disposed on an end portion of the insulating sleeve close to the housing, and the annular outer stop edge is configured to abut against the housing of the battery module, further enhancing the insulation performance of the insulating sleeve.

In an embodiment, the sealing member includes a first sealing ring and a second sealing ring arranged axially; and the first sealing ring is in contact with the stepped surface of the first stepped hole of the locking nut to form a first conical seal, the second sealing ring is in contact with the end surface of the pipe seat to form a second conical seal, and the first sealing ring is in contact with the second sealing ring to form a third conical seal, mating angles of the first conical seal, the second conical seal, and the third conical seal being different. The first sealing ring and the second sealing ring form a triple-conical seal, which significantly enhances the sealing performance between the pipe seat and the locking nut, thereby ensuring the safety of the battery module during operation.

In an embodiment, an annular limiting boss is disposed on the first connecting pipe, the annular limiting boss being configured to cooperate with the explosion vent port of the battery module to fix the first connecting pipe. This connection method not only enables accurate mounting of the first connecting pipe but also facilitates sealing at the connection part between the first connecting pipe and the battery module.

### Sixth embodiment of battery module:

A shared chamber is disposed in a housing of the sixth embodiment of battery module, and an inner cavity of the shared chamber is in communication with inner cavities of all of the plurality of battery cells. An explosion vent port is disposed in the housing. The explosion venting pipe assembly includes a first connecting pipe, a second connecting pipe, and a connecting assembly, wherein the first connecting pipe is configured to be connected to the explosion vent port of the battery module, and an explosion vent membrane is disposed either within the first connecting pipe or within the explosion vent port of the battery module; the second connecting pipe is configured to be connected to the explosion vent manifold; the connecting assembly includes a ceramic pipe, a first sealing washer, and a second sealing washer; one end of the ceramic pipe is threaded to the first connecting pipe, and the first sealing washer is disposed at a connection part between the first connecting pipe and the ceramic pipe, achieving sealing between the first connecting pipe and the ceramic pipe; and the other end of the ceramic pipe is threaded to the second connecting pipe, and the second sealing washer is disposed at a connection part between the second connecting pipe and the ceramic pipe, achieving sealing between the second connecting pipe and the ceramic pipe. Each battery module is connected to the explosion vent manifold via the explosion venting pipe assembly. In particular, the first connecting pipe, the second connecting pipe, and the ceramic pipe are connected by threads. Moreover, sealing between the first connecting pipe, the second connecting pipe, and the ceramic pipe is primarily achieved by the threaded connections along with the first sealing washer and the second sealing washer. Since the first sealing washer and the second sealing washer provide additional sealing, the threaded length of the ceramic pipe may be configured relatively short. With a shorter threaded length, the assembly rotation resistance is low, rotation is easy, and the end surface of the ceramic pipe is less prone to cracking, thereby ensuring the reliability of the connection between the battery module and the explosion vent manifold. Moreover, the relatively short threaded length of the ceramic pipe also reduces the difficulty of manufacturing the ceramic pipe.

In an embodiment, external threads are disposed on one end of the ceramic pipe connected to the second connecting pipe; and the second sealing washer is a T-shaped sealing washer including a sealing portion and a bushing portion, the sealing portion being disposed on an end portion of the ceramic pipe, and the bushing portion being disposed inside the ceramic pipe. The bushing portion is disposed inside the ceramic pipe and, together with the sealing portion, completely wraps the end portion of the ceramic pipe, thereby protecting the end portion of the ceramic pipe and further avoiding damage to the ceramic pipe during mounting. In addition, after mounting, the bushing portion may position the entire second sealing washer, avoiding misalignment or deformation of the sealing portion that could lead to unreliable sealing, thereby further ensuring sealing reliability.

In an embodiment, the first sealing washer and the second sealing washer are made of polytetrafluoroethylene or of PEEK.

In an embodiment, an annular limiting boss is disposed on the first connecting pipe, the annular limiting boss being configured to cooperate with the explosion vent port of the battery module to achieve a fixed connection of the first connecting pipe. This connection method not only enables accurate mounting of the first connecting pipe but also facilitates sealing at the connection part between the first connecting pipe and the battery module.

In an embodiment, the second connecting pipe is a three-way pipe, a first port of the second explosion vent component being configured to be connected to the ceramic pipe, and a second port of the second explosion vent component and a third port of the second explosion vent component thereof being configured to be connected to flexible pipe segments forming an explosion vent manifold. This configuration imposes relatively low requirements on the mounting accuracy of each battery module with respect to the explosion vent manifold. Any mounting deviations of the explosion venting pipe assemblies may be accommodated by deformation of the flexible pipe segments, reducing the difficulty of mounting the explosion vent manifold.

In an embodiment, the second connecting pipe is a flexible hollow pipe member, one end of the flexible hollow pipe member being configured to be connected to the ceramic pipe, and the other end being configured to be connected to the explosion vent manifold.

In an embodiment, clearance holes corresponding to polarity terminals of the plurality of battery cells are disposed in a top plate of the housing; the polarity terminals of the plurality of battery cells extend through the clearance holes, and regions of the top plate of the housing corresponding to the clearance holes are fixedly sealed to casings of the plurality of battery cells; clamping portions are disposed at the parts where the polarity terminals of the plurality of battery cells extend through the clearance holes; and heat transfer pipes are fixed to the clamping portions of the polarity terminals of the plurality of battery cells, the heat transfer pipes being insulated from the plurality of battery cells. The heat transfer pipe performs heat exchange with the polarity terminals of the plurality of battery cells, and conducts the heat concentrated at the polarity terminals, where heat generation in the battery module is most significant, to the outside for dissipation, thereby ensuring that the battery module operates within an optimal temperature range.

### Seventh embodiment of battery module:

In the seventh embodiment of battery module, a plurality of battery cells are disposed in parallel within the housing; at least one first through hole is disposed in a casing of each of the plurality of battery cells; the housing is provided with an explosion venting pipe in communication with an interior of the housing; second through holes through which first polarity terminals and second polarity terminals of the plurality of battery cells extend are disposed in the top of the housing, a region of a top of the housing corresponding to each of the second through holes being fixedly sealed to a top of a casing of each of the plurality of battery cells corresponding to the second through hole; electrolytes within the plurality of battery cells are in communication with electrolytes within the housing, such that all of the plurality of battery cells are within a shared electrolyte system; the explosion venting pipe assembly includes the explosion venting pipe; and an explosion vent membrane is disposed within the explosion venting pipe.

In another embodiment of the present disclosure, a battery pack is provided, including an explosion vent manifold and at least two battery modules described above, wherein explosion venting pipe assemblies of the battery modules are in communication with the explosion vent manifold.

Corresponding to different battery modules, the battery packs specifically include the following seven embodiments:
First embodiment of battery pack: The battery pack includes at least two embodiment of battery modules described above, wherein second explosion vent components of two adjacent battery modules are connected via a flexible pipe segment, a free end of a second explosion vent component of one of the two outermost battery modules is sealed, and a free end of a second explosion vent component of the other of the two outermost battery modules is open, serving as a thermal runaway gas outlet of the battery pack.

In an embodiment, external threads are disposed on outer walls of joints at two ends of the second explosion vent component connected to the flexible pipe segment; union nuts are connected to two ends of the flexible pipe segment; and the union nuts of the flexible pipe segment are threaded to the external threads on the outer walls of the second explosion vent component.

Second embodiment of battery pack: The battery pack includes n second embodiment of battery modules, wherein n is an integer greater than 1; and flexible hollow pipe members of the battery modules are all connected to the explosion vent manifold, one end of the explosion vent manifold being sealed and the other end being open, serving as a thermal runaway gas outlet of the battery pack.

In an embodiment, the explosion vent manifold includes a main pipe and n branch pipes disposed on the main pipe; the n branch pipes are in a one-to-one correspondence with the flexible hollow pipe members of the n battery modules; and each of the n branch pipes is threaded to a union joint of a corresponding flexible hollow pipe member of the battery module.

Third embodiment of battery pack: The battery pack includes at least third embodiment of battery modules described above, wherein second explosion vent components of two adjacent battery modules are connected via a flexible pipe segment, a free end of a second explosion vent component of one of the two outermost battery modules is sealed, and a free end of a second explosion vent component of the other of the two outermost battery modules is open, serving as a thermal runaway gas outlet of the battery pack.

In an embodiment, external threads are disposed on outer walls of joints at two ends of the second explosion vent component connected to the flexible pipe segment; union nuts are connected to two ends of the flexible pipe segment; and the union nuts of the flexible pipe segment are threaded to the external threads on the outer walls of the second explosion vent component.

Fourth embodiment of battery pack: The battery pack includes a plurality of fourth embodiment of battery modules described above and further includes a battery pack support frame; the plurality of battery modules are fixed to the battery pack support frame; and third pipe segments of the explosion venting pipe assemblies of the battery modules are sealed to the explosion vent manifold.

In an embodiment, by optimizing the structure of the battery pack support frame or the explosion vent manifold, the energy density of the battery pack above may be enhanced. In particular, one side beam of the battery pack support frame may be designed as a hollow component to serve as the explosion vent manifold; the explosion vent manifold is provided with a plurality of branch pipes in a one-to-one correspondence with the battery modules; and each of the n branch pipes is sealed to the third pipe segment of the explosion venting pipe assembly of a corresponding battery module. The explosion vent manifold includes a plurality of three-way pipes in a one-to-one correspondence with the battery modules, and flexible pipe segments connected between adjacent three-way pipes; and a first port of each three-way pipe is sealed to the third pipe segment of the explosion venting pipe assembly of a corresponding battery module. One side beam of the battery pack support frame is made of I-shaped steel, and the explosion vent manifold is embedded between an upper flange and a lower flange of the I-shaped steel.

Fifth embodiment of battery pack: The battery pack includes n fifth embodiment of battery modules described above, wherein n is an integer greater than 1; and second connecting pipes of the battery modules are all connected to the explosion vent manifold, one end of the explosion vent manifold being sealed and the other end being open, serving as a thermal runaway gas outlet of the battery pack.

In an embodiment, the second connecting pipe is a three-way pipe, and the second connecting pipes of adjacent battery modules are connected via flexible pipe segments to form an explosion vent manifold.

In an embodiment, the second connecting pipe is a flexible hollow pipe member, and the explosion vent manifold includes a main pipe and n branch pipes disposed on the main pipe, the n branch pipes being connected in a one-to-one correspondence with the second connecting pipes of the n battery modules.

Sixth embodiment of battery pack: The battery pack includes n sixth embodiment of battery modules described above, wherein n is an integer greater than 1; and second connecting pipes of the battery modules are all connected to the explosion vent manifold, one end of the explosion vent manifold being sealed and the other end being open, serving as a thermal runaway gas outlet of the battery pack.

Seventh embodiment of battery pack: The battery pack includes an installation platform and N seventh embodiment of battery modules described above, wherein N is greater than or equal to 2; the installation platform is of a frame structure, and one side beam of the installation platform serves as an explosion vent manifold for thermal runaway gas; each battery module is sealingly and insulatedly connected to the explosion vent manifold via an explosion venting pipe assembly; the explosion venting pipe assembly further includes an insulating sealing sleeve and a mating pipe; the insulating sealing sleeve is sleeved over the explosion venting pipe; and the mating pipe is disposed on the explosion vent manifold and is inserted over the insulating sealing sleeve. Connection is achieved by inserting the explosion venting pipe into the mating pipe, with the two components remaining essentially coaxial. First, this configuration saves space and ensures the energy density of the energy storage device. Second, it shortens the flow path of thermal runaway gases from the explosion vent port to the explosion vent manifold, allowing for more timely gas discharge. Third, it enables quick coupling between the battery module and the explosion vent manifold. Furthermore, an insulating sealing sleeve is disposed between the explosion venting pipe and the mating pipe. During insertion, the insulating sealing sleeve deforms, ensuring a tight fit between the explosion venting pipe and the mating pipe and thereby guaranteeing sealing integrity. Moreover, the insulating sealing sleeve further ensures insulation between the battery module and the explosion vent manifold, ensuring safety.

In particular, to further ensure the reliability of the connection between the explosion venting pipe and the mating pipe and to enhance the airtightness of the explosion venting pipe assembly, the insulating sealing sleeve above is of a truncated cone structure.

In particular, to ensure the positioning of the insulating sealing sleeve during the connection of the explosion venting pipe and the mating pipe, and to avoid the mating pipe from coming into direct contact with the housing of the battery module, an annular plate is disposed on the insulating sealing sleeve above for abutting against a housing of the battery module.

In particular, to simplify the structure and reduce the manufacturing difficulty and fabrication cost of the explosion venting pipe, the explosion venting pipe above is configured as an aluminum straight pipe. One end of the explosion venting pipe is in communication with the interior of the battery module, and the other end is provided with an aluminum sheet serving as an explosion vent membrane.

In an embodiment, to ensure that the explosion vent membrane may vent in a timely manner, an annular groove is formed in a central region of the explosion vent membrane above to form a weakened explosion venting region.

In another embodiment of the present disclosure, another battery module different from the battery modules above is provided. For ease of distinction, the battery module may be defined as an eighth embodiment of battery module, including an explosion venting pipe assembly, a plurality of battery cells, and a shared chamber in communication with inner cavities of the plurality of battery cells. One end of the shared chamber serves as an explosion vent port. The explosion venting pipe assembly includes a first pipe segment, a second pipe segment, and a third pipe segment connected in sequence; the first pipe segment is a metal pipe sealed to the explosion vent port; the second pipe segment is a high-temperature resistant insulating pipe; and the third pipe segment is a metal pipe configured to be connected to the explosion vent manifold.

In an embodiment, the second pipe segment is a ceramic pipe.

In another embodiment of the present disclosure, another battery pack different from the battery packs above is provided, which may be defined as an eighth embodiment of battery pack. The battery pack includes a battery pack support frame, an explosion vent manifold, and a plurality of eighth embodiment of battery modules fixed to the battery pack support frame. A third pipe segment of an explosion vent transfer pipe of each battery module is sealed to the explosion vent manifold.

In another embodiment of the present disclosure, another battery pack different from the battery packs above is provided, which may be defined as a ninth embodiment of battery pack. In this battery pack, the structure of the battery modules is not specifically limited and may be any battery module known in the prior art. The battery pack includes N battery modules and an installation platform, wherein N is greater than or equal to 2; the installation platform is of a frame structure, and one side beam of the installation platform serves as an explosion vent manifold for thermal runaway gas; each battery module is sealingly and insulatedly connected to the explosion vent manifold via an explosion venting pipe assembly; the explosion venting pipe assembly includes an explosion venting pipe, an insulating sealing sleeve, and a mating pipe; the explosion venting pipe is disposed on a housing of the battery module, and an explosion vent membrane is disposed within the explosion venting pipe; the insulating sealing sleeve is sleeved over the explosion venting pipe; and the mating pipe is disposed on the explosion vent manifold and is inserted over the insulating sealing sleeve.

In another embodiment of the present disclosure, an explosion venting pipe assembly is provided, one end of which is configured to be connected to a battery module, and the other end is configured to be connected to an explosion vent manifold. The specific structure thereof has been described in the battery modules above.

In another embodiment of the present disclosure, an installation platform, applied to the seventh embodiment of or eighth embodiment of battery packs described above is provided, wherein the installation platform is of a frame structure, one side beam of the installation platform serves as an explosion vent manifold for thermal runaway gas, and a plurality of mating pipes are disposed on the explosion vent manifold. One side beam of the installation platform serves as the explosion vent manifold. Compared with providing a separate explosion vent manifold, this design saves space within the energy storage device and also reduces the complexity of the assembly process associated with separately mounting an explosion vent manifold.

In particular, the installation platform above further includes a plurality of pairs of support beams fixed within the frame structure, wherein each of the plurality of pairs of support beams serves as a mounting position for one battery module, and the support beams are insulated from the battery module. The support beams may also serve as sliding guides when the explosion venting pipe of the battery module is inserted into the mating pipe on the explosion vent manifold, thereby ensuring smoothness and reliability throughout the assembly process.

In another embodiment of the present disclosure, a battery pack assembly is provided, including the first embodiment of battery pack described above, as well as a mounting bracket and a battery pack support frame. The battery pack is fixed to the battery pack support frame via the mounting bracket.

In an embodiment, the battery pack support frame is a rectangular frame, including a U-shaped frame and a first beam detachably fixed to an opening end of the U-shaped frame.

In an embodiment, the U-shaped frame includes a second beam and third beams fixed to two ends of the second beam, the second beam is made of I-shaped steel, and the explosion vent manifold of the battery pack is positioned between an upper flange and a lower flange of the I-shaped steel. While ensuring the overall supporting strength of the battery pack support frame, the explosion vent manifold is positioned between the upper flange and the lower flange of the I-shaped steel, achieving a compact layout and enhancing the energy density of the entire battery pack assembly.

In another embodiment of the present disclosure, another battery pack assembly is provided, including a battery pack support frame and the second embodiment of battery pack above, which is fixed to the battery pack support frame, wherein one side beam of the battery pack support frame is made of I-shaped steel, and the explosion vent manifold is embedded into an inner space between an upper flange and a lower flange of the side beam.

In another embodiment of the present disclosure, another battery pack assembly is provided, including the third embodiment of battery pack above and a battery pack support frame, with the battery pack fixed to the battery pack support frame.

The advantageous effects of the present disclosure are as follows:
In the present disclosure, the explosion venting pipe assemblies of all the battery modules within the battery pack are collected via the explosion vent manifold. When a battery cell in any battery module in the battery pack undergoes thermal runaway, the thermal runaway gases may be discharged via the explosion vent manifold, reducing the risk of thermal runaway propagation and minimizing the likelihood of rupture of the battery module, the battery pack, or the energy storage container.

### Brief Description of the Drawings

FIG. 1 is a schematic structural diagram of a battery module according to Embodiment 1;
FIG. 2 is a first partial exploded structural diagram of a battery module according to Embodiment 1;
FIG. 3 is a second partial exploded structural diagram of a battery module according to Embodiment 1;
FIG. 4 is a partial exploded structural diagram of a battery module according to Embodiment 2;
FIG. 5 is a schematic structural diagram of a battery module according to Embodiment 2;
FIG. 6 is a cross-sectional view of a battery module according to Embodiment 2;
FIG. 7 is a partial schematic structural diagram of a battery pack according to Embodiment 3;
FIG. 8 is a schematic diagram of an assembly process of a battery pack according to Embodiment 3;
FIG. 9 is a partial schematic structural diagram of a battery pack assembly according to Embodiment 4;
FIG. 10 is a schematic structural diagram of a battery pack support frame according to Embodiment 4;
FIG. 11 is a schematic structural diagram of a first beam and a second beam according to Embodiment 4;
FIG. 12 is a schematic diagram of an assembly process of a battery pack assembly according to Embodiment 4;
FIG. 13 is a schematic structural diagram of a battery module according to Embodiment 5;
FIG. 14 is a partial schematic structural diagram of a battery module according to Embodiment 5 (after removal of a right end plate shown in FIG. 1);
FIG. 15 is a schematic structural diagram of a battery module having an insulating protective cover according to Embodiment 5;
FIG. 16 is a partial exploded view of a battery module according to Embodiment 6;
FIG. 17 is a schematic structural diagram of a battery module according to Embodiment 6;
FIG. 18 is a partial exploded view of a battery module according to Embodiment 7;
FIG. 19 is a partial cross-sectional view of a battery module according to Embodiment 7;
FIG. 20 is a partial cross-sectional exploded view of a battery module according to Embodiment 7;
FIG. 21 is a schematic structural diagram of a battery pack according to Embodiment 8;
FIG. 22 is a first partial exploded view of a battery pack according to Embodiment 8;
FIG. 23 is a second partial exploded view of a battery pack according to Embodiment 8;
FIG. 24 is a partial exploded schematic view of a battery pack having a segmented explosion vent manifold;
FIG. 25 is a schematic structural diagram of a battery pack having a segmented explosion vent manifold;
FIG. 26 is a schematic structural diagram of a battery pack according to Embodiment 9;
FIG. 27 is a partial exploded view of a battery pack according to Embodiment 9;
FIG. 28 is a schematic structural diagram of a battery module according to Embodiment 10;
FIG. 29 is a partial exploded schematic view of a battery module according to Embodiment 10;
FIG. 30 is a schematic diagram of a connection between adjacent battery modules according to Embodiment 10;
FIG. 31 is a partial exploded schematic view of a battery module having an insulating protective cover according to Embodiment 10;
FIG. 32 is a schematic structural diagram of a battery module according to Embodiment 11;
FIG. 33 is a partial exploded schematic view of a battery module according to Embodiment 11;
FIG. 34 is a schematic diagram of a connection between adjacent battery modules according to Embodiment 11;
FIG. 35 is a schematic structural diagram of one battery pack according to Embodiment 12;
FIG. 36 is a schematic structural diagram of another battery pack according to Embodiment 12;
FIG. 37 is a schematic structural diagram of one battery pack assembly according to Embodiment 13;
FIG. 38 is a schematic structural diagram of another battery pack assembly according to Embodiment 13;
FIG. 39 is a schematic structural diagram of a battery pack support frame according to Embodiment 13;
FIG. 40 is an exploded schematic view of a battery pack support frame according to Embodiment 13;
FIG. 41 is a schematic diagram of an assembly process of a battery pack assembly according to Embodiment 13;
FIG. 42 is a schematic structural diagram of an explosion venting pipe assembly according to Embodiment 14;
FIG. 43 is a cross-sectional view of an explosion venting pipe assembly according to Embodiment 14;
FIG. 44 is a schematic structural diagram of a battery module according to Embodiment 15;
FIG. 45 is a schematic structural diagram of a battery module according to Embodiment 16;
FIG. 46 is a partial exploded schematic view of a battery module according to Embodiment 16;
FIG. 47 is a schematic structural diagram of a battery module having an insulating protective cover according to Embodiment 16;
FIG. 48 is a partial exploded schematic view of a battery module having an insulating protective cover according to Embodiment 16;
FIG. 49 is a schematic structural diagram of a battery pack according to Embodiment 17;
FIG. 50 is a schematic structural diagram of a battery pack according to Embodiment 18;
FIG. 51 is a partial exploded structural diagram of a battery pack according to Embodiment 18;
FIG. 52 is a partial exploded schematic view of a battery pack according to Embodiment 18;
FIG. 53 is a schematic structural diagram of an explosion venting pipe assembly (with a second connecting pipe being a flexible hollow pipe member) according to Embodiment 19;
FIG. 54 is a cross-sectional view of an explosion venting pipe assembly according to Embodiment 19;
FIG. 55 is a schematic structural diagram of an explosion venting pipe assembly (with a second connecting pipe being a three-way pipe) according to Embodiment 19;
FIG. 56 is a schematic structural diagram of a battery module (with a second connecting pipe being a flexible hollow pipe member) according to Embodiment 20;
FIG. 57 is a schematic structural diagram of a battery module (with a second connecting pipe being a three-way pipe) according to Embodiment 20;
FIG. 58 is a schematic structural diagram of a battery module (with a front cover of a housing omitted) according to Embodiment 20;
FIG. 59 is an exploded view of a battery module according to Embodiment 20;
FIG. 60 is an exploded schematic view of a battery pack (with an explosion vent manifold being a segmented pipe) according to Embodiment 21;
FIG. 61 is a schematic structural diagram of a battery pack (with an explosion vent manifold being a segmented pipe) according to Embodiment 21;
FIG. 62 is a schematic structural diagram of a battery pack (with an explosion vent manifold being a single-piece pipe) according to Embodiment 21;
FIG. 63 is a schematic diagram of a connection between an explosion venting pipe assembly and a battery module according to Embodiment 22;
FIG. 64 is an exploded view of an explosion venting pipe assembly according to Embodiment 22;
FIG. 65 is a cross-sectional view of an explosion venting pipe assembly according to Embodiment 22;
FIG. 66 is a schematic structural diagram of a battery module (with a second connecting pipe being a flexible hollow pipe member) according to Embodiment 22;
FIG. 67 is a schematic structural diagram of a battery module according to Embodiment 23;
FIG. 68 is a schematic structural diagram of a battery module provided with a heat transfer pipe according to Embodiment 23;
FIG. 69 is an exploded view of a battery module according to Embodiment 23;
FIG. 70 is an exploded schematic view of a battery pack (with an explosion vent manifold being a segmented pipe) according to Embodiment 24;
FIG. 71 is a schematic structural diagram of a battery pack (with an explosion vent manifold being a segmented pipe) according to Embodiment 24;
FIG. 72 is a schematic structural diagram of a battery pack (with an explosion vent manifold being a single-piece pipe) according to Embodiment 24;
FIG. 73 is a schematic structural diagram of an explosion venting pipe assembly according to Embodiment 25;
FIG. 74 is a structural diagram of an insulating sealing sleeve according to Embodiment 25;
FIG. 75 is a structural diagram of an explosion vent manifold and a mating pipe according to Embodiment 25;
FIG. 76 is a structural diagram of a battery pack according to Embodiment 25;
FIG. 77 is a first-perspective structural view of a battery module according to Embodiment 25;
FIG. 78 is a second-perspective structural view of a battery module according to Embodiment 25; and
FIG. 79 is a structural diagram of an installation platform according to Embodiment 25.

The reference numerals in the drawings are as follows:
11. Housing; 111. Top plate of housing; 112. Bottom plate of housing; 113. Second side plate of housing; 114. Through hole; 115. First side plate of housing; 12. Battery cell; 121. Through groove; 122. Liquid cooling pipe; 123. Electrical connector; 124. Insulating protective cover; 125. Polarity terminal of battery cell; 13. Explosion venting pipe assembly; 131. First explosion vent component; 1311. First hollow pipe member; 1312. Second hollow pipe member; 132. Second explosion vent component; 1321. First port; 1322. Second port; 1323. Third port; 14. Flexible pipe segment; 15. Battery module; 16. Battery pack; 17. Mounting bracket; 18. Battery pack support frame; 181. U-shaped frame; 1811. Second beam; 1812. Third beam; 182. First beam; 183. Connecting plate; 19. Explosion vent manifold;
201. Three-way pipe; 202. Flexible pipe segment; 21. Battery module; 211. Housing; 2111. Top plate of housing; 2112. Bottom plate of housing; 212. Battery cell; 2121. Polarity terminal of battery cell; 213. Liquid cooling pipe; 2131. Inlet end of liquid cooling pipe; 2132. Outlet end of liquid cooling pipe; 214. Insulating protective cover; 2141. Slit; 215. Electrolyte shared chamber; 216. Gas shared chamber; 217. Explosion venting pipe assembly; 2171. Flexible hollow pipe member; 2172. First hollow pipe member; 21721. Second annular plate; 2173. Second hollow pipe member; 218. Support member; 219. First annular plate; 220. Electrical connector; 22. Battery pack; 221. Explosion vent manifold; 231. Battery pack support frame; 2311. Side beam;
31. Battery module; 311. Housing; 3111. Bottom plate of housing; 3112. Top plate of housing; 3113. First side plate; 3114. Second side plate; 3115. Through hole; 312. Battery cell; 3121. Polarity terminal; 313. Electrolyte shared chamber; 314. Gas shared chamber; 315. Explosion venting pipe assembly; 3151. First explosion vent component; 3152. Second explosion vent component; 31521. First port; 31522. Second port; 31523. Third port; 316. Liquid cooling pipe; 317. Insulating protective cover; 32. Flexible pipe segment; 33. Explosion vent manifold; 34. Battery pack support frame; 341. U-shaped frame; 3411. Second beam; 3412. Third beam; 342. First beam; 343. Connecting plate;
41. Explosion venting pipe assembly; 411. First pipe segment; 412. Second pipe segment; 413. Third pipe segment; 42. Battery module; 421. Shared chamber; 422. Battery cell; 4221. Polarity terminal; 423. Housing; 4231. Bottom plate of housing; 4232. End plate; 4233. Top plate of housing; 43. Explosion venting pipe; 44. Liquid cooling pipe; 45. Insulating protective cover; 46. Battery pack support frame; 461. I-shaped steel side beam; 462. U-shaped frame; 47. Explosion vent manifold; 471. Branch pipe; 472. Three-way pipe; 473. Flexible pipe segment;
51. Battery module; 52. Explosion venting pipe assembly; 53. Explosion vent manifold; 511. Housing; 512. Battery cell; 513. Polarity terminal; 514. Insulating sealing layer; 515. Insulating protective cover; 516. Heat transfer pipe; 5111. Gas shared chamber; 5112. Electrolyte shared chamber; 5113. Clearance hole; 5114. Explosion vent port; 5131. Through groove; 521. First connecting pipe; 522. Second connecting pipe; 523. Pipe seat; 524. Insulating sleeve; 525. Sealing member; 526. Locking nut; 5211. Explosion vent membrane; 5212. Annular limiting boss; 5241. Annular inner stop edge; 5242. Annular outer stop edge; 5251. First sealing ring; 5252. Second sealing ring; 5253. First conical seal; 5254. Second conical seal; 5255. Third conical seal; 531. Flexible pipe segment; 532. Main pipe; 533. Branch pipe;
61. Battery module; 62. Explosion venting pipe assembly; 63. Explosion vent manifold; 611. Housing; 612. Battery cell; 613. Polarity terminal; 614. Heat transfer pipe; 615. Insulating protective cover; 6111. Gas shared chamber; 6112. Electrolyte shared chamber; 6113. Explosion vent port; 621. First connecting pipe; 622. Second connecting pipe; 623. Ceramic pipe; 624. First sealing washer; 625. Second sealing washer; 6211. Explosion vent membrane; 6212. Annular limiting boss; 6241. Sealing portion; 6242. Bushing portion; 631. Flexible pipe segment; 632. Main pipe; 633. Branch pipe;
71. Battery module; 74. Explosion vent manifold; 76. Explosion venting pipe; 77. Insulating sealing sleeve; 78. Mating pipe; 79. Housing; 710. Explosion vent membrane; 711. Annular plate; 712. Installation platform; 713. Battery cell; 714. First polarity terminal; 715. Second polarity terminal; 716. Second through hole; 717. Hollow component; 718. Electrolyte channel; 719. Support beam.

### Detailed Description of the Embodiments

To make objects, features, and advantages described above of the present disclosure more apparent and understandable, a detailed description of specific implementations of the present disclosure is provided below with reference to the drawings. It is apparent that the described embodiments are part of the embodiments of the present disclosure, rather than all of the embodiments. All other embodiments obtained by a person of ordinary skill in the art on the basis of the embodiments in the present disclosure, without creative work, shall fall within the scope of protection of the present disclosure.

The following description provides many specific details to facilitate a comprehensive understanding of the present disclosure. However, the present disclosure may be implemented in other ways not specifically described herein. A person skilled in the art may make similar modifications or extensions without departing from the scope of the present disclosure. Therefore, the present disclosure is not limited to the specific embodiments disclosed below.

In the description of the present disclosure, it is to be noted that the terms "top", "bottom", and the like refer to orientations or positional relationships on the basis of orientations or positional relationships shown in the drawings. These terms are used merely to simplify and facilitate the description of the present disclosure, and are not intended to indicate or imply that the referenced apparatuses or elements have a specific orientation or be constructed and operated in a specific orientation. Therefore, such terms may not be construed as limitations of the present disclosure. In addition, the terms "first", "second", "third", "fourth", and the like are used solely for descriptive purposes and are not to be construed as indicating or implying relative importance.

In Embodiments 1 to 4, the battery module includes a housing and a plurality of battery cells. Each battery cell has an inner cavity including an electrolyte region and a gas region. The plurality of battery cells are arranged in the same direction within the housing, and an inner cavity of the housing is in communication with inner cavities of the plurality of battery cells.

The communication described above may be achieved by providing a shared chamber in the housing, such that the inner cavity of the shared chamber is in communication with the inner cavities of all of the plurality of battery cells.

The shared chamber above may be an electrolyte shared chamber. The electrolyte shared chamber allows the plurality of battery cells to be in a uniform electrolyte environment, ensuring the uniformity of the electrolyte within each battery cell and thereby enhancing the performance and charge/discharge cycle life of the battery module.

The shared chamber above may be a gas shared chamber. The gas shared chamber enables gas balance of all of the plurality of battery cells, which may also enhance the performance and charge/discharge cycle life of the battery module.

The shared chamber above may further be a gas-liquid shared chamber. A gas-liquid shared chamber allows the plurality of battery cells to be in a uniform electrolyte and gas environment, thereby enhancing the performance and charge/discharge cycle life of the battery module.

To enhance the heat dissipation performance of such battery modules, clearance holes corresponding to electrode post terminals of the battery cell are formed in the top plate of the housing. The polarity terminals of the plurality of battery cells extend through the corresponding clearance holes, and the regions of the top plate of the housing corresponding to the clearance holes are fixedly sealed to casings of the plurality of battery cells, thereby ensuring that the gap between the electrode post terminals and the clearance holes is sealed.

To discharge thermal runaway gases from the housing, an explosion venting pipe assembly is disposed on the housing and is in communication with the inner cavity of the housing. Under normal circumstances, the explosion venting pipe assembly is directly in communication with the shared chamber above.

To prevent thermal runaway gases from individual battery cells within a battery module from spreading throughout the entire container and causing safety problems, Embodiments 1 to 4 provide that the explosion venting pipe assemblies of all battery modules in the battery pack are collected via an explosion vent manifold. When a battery cell in any battery module in the battery pack undergoes thermal runaway, the thermal runaway gases may be discharged via the explosion vent manifold, reducing the risk of thermal runaway propagation and minimizing the likelihood of rupture of the battery module, the battery pack, or the energy storage container.

On the basis of the analysis above, a single-piece pipe may be selected as the explosion vent manifold, with a plurality of branch pipes provided thereon to connect to the explosion venting pipe assemblies of the battery modules. During assembly, all the battery modules are first arranged along the length direction of the explosion vent manifold. Then, the branch pipes of the explosion vent manifold are connected to the explosion venting pipe assemblies of the corresponding battery modules. During this connection, it is necessary to ensure coaxial alignment between the branch pipes and the explosion venting pipe assemblies. However, due to mounting errors of the explosion venting pipe assemblies, machining errors of the branch pipes, and spacing deviations between the battery modules, achieving coaxial alignment between the branch pipes and the explosion venting pipe assemblies may be difficult, making the assembly of the explosion vent manifold with the battery modules challenging.

To overcome the problems above, Embodiments 1 to 4 design the explosion venting pipe assemblies as modular members and also design the explosion vent manifold as a modular member, as detailed below:
In Embodiments 1 to 4, the explosion venting pipe assembly is designed as a two-part structure. For ease of description, this two-part structure may be defined as a first explosion vent component and a second explosion vent component. The first explosion vent component includes a first hollow pipe member provided with an explosion vent membrane in the interior and connected to the housing. The second explosion vent component is a three-way pipe, whose first port (the vertical pipe segment joint) is sealed to the first explosion vent component, and whose second port of the second explosion vent component and third port of the second explosion vent component (the two joints of the horizontal pipe segment) are configured to be connected to the flexible pipe segments forming an explosion vent manifold. That is, in Embodiments 1 to 4, the explosion vent manifold is formed by splicing the horizontal pipe segments of a plurality of three-way pipes with a plurality of flexible pipe segments.

During assembly, each three-way pipe member is fixed to the corresponding first explosion vent component to form a battery module with an explosion venting pipe assembly. Then, the plurality of battery modules are arranged in the predetermined direction, and finally, the adjacent three-way pipe members are connected using the flexible pipe segments.

In Embodiments 1 to 4, since the explosion vent manifold is of a segmented design and the intermediate connecting pipe segments are flexible pipe segments, the deformation of the flexible pipe segments may compensate for mounting errors of the explosion venting pipe assemblies and spacing deviations between battery modules, reducing the difficulty of mounting the explosion vent manifold.

It is to be noted that, to further enhance safety, the explosion vent manifold needs to be insulated from the battery modules. For example, flexible pipe segments and/or three-way pipe members made of an insulating and high-temperature-resistant material (capable of withstanding the temperature of thermal runaway gases) may be used. In addition, an insulating pipe segment may be disposed between the first explosion venting pipe and the three-way pipe.

The following provides a further description of Embodiments 1 to 4 with reference to the drawings.

### Embodiment 1

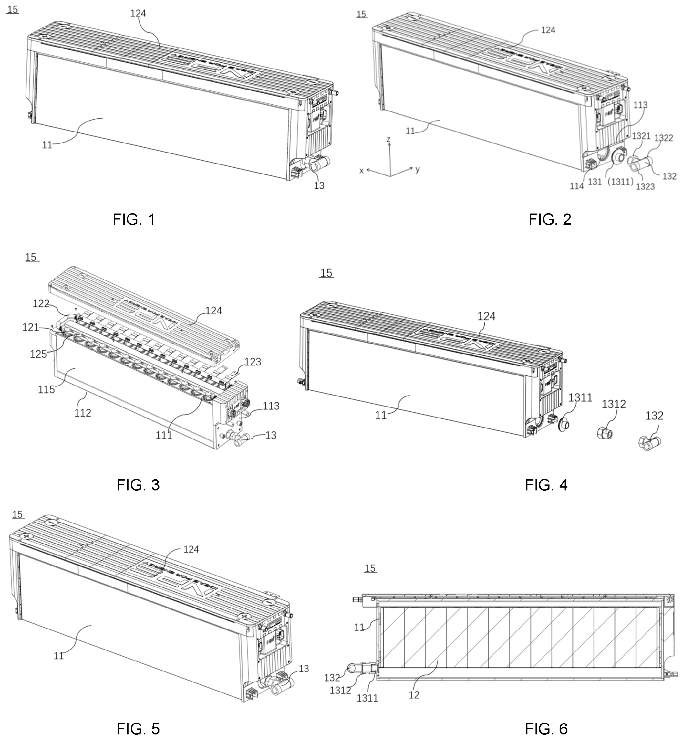

As shown in FIGS. 1 and 2, a battery module 15 in this embodiment includes a housing 11 and a plurality of battery cells 12 arranged in parallel within the housing 11.

In this embodiment, the plurality of battery cells 12 are prismatic batteries, with a total of thirteen cells. In other embodiments, the number may be adjusted according to actual needs. The inner cavity of each battery cell 12 includes an electrolyte region and a gas region.

For convenience of description, the length direction of the housing 11 is defined as an x direction, the width direction of the housing 11 is defined as a y direction, and the height direction of the housing 11 is defined as a z direction.

In a bottom plate 112 of the housing, an electrolyte shared chamber is disposed along the x direction. The inner cavity of the electrolyte shared chamber is in communication with the electrolyte region of the inner cavity of each battery cell 12.

In a top plate 111 of the housing, a gas shared chamber is disposed along the x direction. The inner cavity of the gas shared chamber is in communication with the gas region of the inner cavity of each battery cell 12.

In other embodiments, only the electrolyte shared chamber or the gas shared chamber may be disposed. Additionally, a gas-liquid shared chamber may be disposed along the x direction in the first side plate 115 (the side plate parallel to the xz plane) of the housing. The inner cavity of the gas-liquid shared chamber is in communication with the electrolyte region and the gas region of the inner cavity of each battery cell 12.

Through holes 114, in communication with the electrolyte shared chamber, are formed in the second side plate 113 (the side plate parallel to the xy plane) of the housing, and an explosion venting pipe assembly 13 is connected to the through hole 114.

In this embodiment, the explosion venting pipe assembly 13 includes a first explosion vent component 131 and a second explosion vent component 132. The first explosion vent component 131 includes a first hollow pipe member 1311 provided with an explosion vent membrane in the interior, configured to be connected to the housing 11. To fix the first hollow pipe member to the through hole 114 of the housing 11, in this embodiment, an annular plate is disposed on the outer wall at one end of the hollow pipe member, which is sealed to the periphery of the through hole 114 by friction welding. The second explosion vent component 132 is a three-way pipe, whose first port 1321 is sealed to the first explosion vent component 131, and whose second port of the second explosion vent component 1322 and third port of the second explosion vent component 1323 are configured to be connected to the flexible pipe segments 14 forming an explosion vent manifold. The first port 1321 is the joint of the vertical pipe segment of the three-way pipe (in FIG. 2, the pipe segment parallel to the x direction), while the second port of the second explosion vent component 1322 and the third port of the second explosion vent component 1323 are the joints at two ends of the horizontal pipe segment of the three-way pipe (in FIG. 2, the pipe segment parallel to the y direction).

The first port 1321 may be connected to the first explosion vent component 131 by threading, welding, or interference fit. In this embodiment, a union three-way pipe is used, in which one end of the vertical pipe segment of the three-way pipe is provided with a union nut as a union joint. External threads are disposed on the outer wall at the end of the first explosion vent component 131 connected to the second explosion vent component 132. The union joint of the second explosion vent component 132 is threaded to the external thread on the outer wall of the first explosion vent component 131. The union joint allows a convenient direct connection to the first explosion vent component 131. A sealing washer is disposed on the free end of the first explosion vent component 131 to ensure the sealing performance at the connection part.

As shown in FIG. 3, clearance holes through which the polarity terminals 125 of the plurality of battery cells may extend are formed in the top plate 111 of the housing of the battery module in this embodiment. The polarity terminals 125 of the plurality of battery cells extend through the corresponding clearance holes, and the regions of the housing 11 surrounding the clearance holes are fixedly sealed to the casings of the plurality of battery cells 12.

In this embodiment, a through groove 121 is formed in the part where the polarity terminals 125 of the plurality of battery cells extend through the clearance holes, serving as a clamping portion of a liquid cooling pipe 122. The liquid cooling pipe 122 is fixed within the through groove 121. When the temperature of the battery module 15 exceeds a set threshold, a lower-temperature heat transfer medium is introduced into the liquid cooling pipe 122 to cool the battery module 15. Conversely, when the temperature of the battery module 15 falls below the set threshold, a higher-temperature heat transfer medium is introduced into the liquid cooling pipe 122 to heat the battery module 15. By controlling the temperature of the heat transfer medium, the battery module 15 may be maintained within the normal operating temperature range.

To prevent condensation from the liquid cooling pipe 122 from causing safety problems, in this embodiment, an insulating sealing layer may be laid on the top plate 111 of the housing. Portions of the polarity terminals 125 of the plurality of battery cells are covered by the insulating sealing layer, while the electrical connection parts (i.e., the upper end surfaces) of the polarity terminals 125 of the plurality of battery cells extend through the insulating sealing layer to be connected to the electrical connectors 123. The main body part of the liquid cooling pipe 122 is entirely covered by the insulating sealing layer, while the inlet end and the outlet end of the liquid cooling pipe 122 extend through the insulating sealing layer for connection to a liquid cooling device.

Moreover, the electrode post terminals are directly exposed to the external environment, posing significant potential safety hazards during operation due to being live. On the basis of this, in this embodiment, an insulating protective cover 124 is disposed on a top of the battery module 15 to insulate the electrode post terminals. This avoids the potential safety hazards associated with exposed electrode posts during the operation of the battery module 15 and also avoids foreign objects from the external environment from falling onto the electrode post terminals and causing a short circuit of the battery module 15, thereby enhancing the safety of the battery module 15.

It is to be noted that if the insulating protective cover 124 completely encloses the electrode post terminals, the electrical connection of such battery modules 15 would be difficult. Therefore, in this embodiment, a slit is formed in the side wall of the insulating protective cover 124 parallel to the xz plane, through which the electrical connector 123 may be connected to the electrode post terminals, thereby enabling the electrical connection.

It is also to be noted that channels for the inlet end and the outlet end of the liquid cooling pipe 122 to extend through are further formed in the side wall of the insulating protective cover 124.

### Embodiment 2

Unlike Embodiment 1, as shown in FIGS. 4 to 6, in this embodiment, the first explosion vent component 131 further includes a second hollow pipe member 1312 made of an insulation material.

The second hollow pipe member 1312 is made of a PTFE pipe and includes a connecting pipe and a union nut attached to one end of the connecting pipe. External threads are disposed on an outer wall at the other end of the connecting pipe. The union nut of the second hollow pipe member 1312 is threaded to the external threads on the outer wall of the first hollow pipe member 1311. The other end of the second hollow pipe member 1312 is threaded to the union joint of the second explosion vent component 132.

In other embodiments, the second hollow pipe member 1312 may be made of other insulating and high-temperature-resistant materials.

On the basis of the second hollow component, insulation between the explosion vent manifold and the battery module 15 may be achieved at the battery module 15 end. In addition, to enhance the sealing integrity at the connection part, sealing washers may be disposed on the first hollow component and on the free end of the connecting pipe.

### Embodiment 3

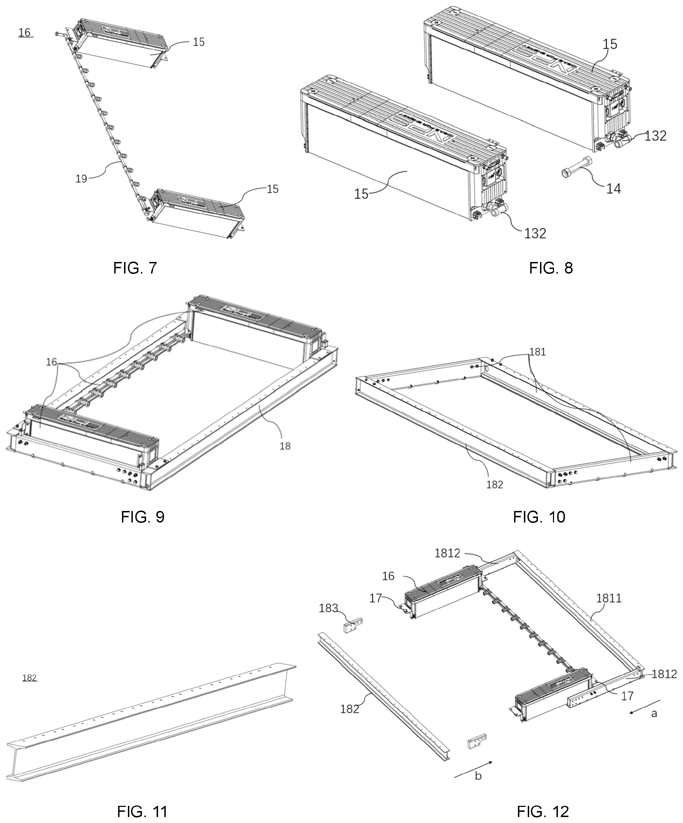

As shown in FIGS. 7 and 8, this embodiment provides a battery pack 16, which includes thirteen battery modules 15 from Embodiment 1 or Embodiment 2. The second explosion vent components 132 of two adjacent battery modules 15 are connected via flexible pipe segments 14. A free end of a second explosion vent component 132 of one of the two outermost battery modules 15 is sealed, while a free end of a second explosion vent component of the other of the two outermost battery modules 15 is open, serving as a thermal runaway gas outlet of the battery pack 16.

In this embodiment, the pipe segment connecting the second explosion vent component 132 and the first flexible pipe segment 14 is defined as the explosion vent manifold 19 (wherein the second explosion vent component 132 serves as a shared structure between the explosion venting pipe assembly 13 and the explosion vent manifold). Thermal runaway gases are discharged via the thermal runaway gas outlet.

To clearly show the explosion vent manifold, only the two outermost battery modules 15 are schematically illustrated in FIG. 7. In other embodiments, the number of battery modules 15 may be adjusted according to actual requirements.

The flexible pipe segment 14 may be connected to the second explosion vent component 132 by welding or by a threaded connection. Since welding is more complex than a threaded connection during assembly, this embodiment adopts a threaded connection. In this embodiment, the flexible pipe segment 14 is a metal corrugated pipe with union nuts at two ends, providing high-temperature resistance and a degree of flexibility. To connect it, external threads are disposed on the outer walls at two ends of the horizontal pipe segment of the second explosion vent component 132, and the union nuts of the flexible pipe segment 14 are threaded to the external threads on the outer walls of the second explosion vent component 132. To enhance the sealing integrity at the connection part, a sealing washer may be disposed at the connection part.

As shown in FIG. 8, in this embodiment, the battery pack 16 may be assembled by the following steps:
The thirteen battery modules 15 are arranged in the predetermined direction. Then, the second explosion vent components 132 of two adjacent battery modules 15 are connected using a flexible hose, and the free end of the second explosion vent component 132 of the outermost battery module 15 is sealed, thereby obtaining the battery pack 16 of this embodiment.

### Embodiment 4

This embodiment provides a battery pack assembly, which includes the battery pack 16 of Embodiment 3 and a battery pack support frame 18 for supporting the battery pack 16.

The structure of the battery pack support frame 18 is shown in FIGS. 9 and 10, which is a rectangular frame. To facilitate fixing the battery pack 16 to the battery pack support frame 18, in this embodiment, the battery pack support frame 18 is designed as a modular structure, including a U-shaped frame 181 and a first beam 182 fixed to an opening end of the U-shaped frame 181. The battery pack 16 is assembled by means of the opening end of the U-shaped frame 181.

In other embodiments, an integral rectangular frame may be used; however, compared with this embodiment, assembling the battery pack 16 with the rectangular frame is more difficult.

For ease of description, in this embodiment, the U-shaped frame 181 is divided into three parts: a second beam 1811 and two third beams 1812 fixed at two ends of the second beam 1811, respectively. To enhance the structural strength of the entire battery pack support frame 18, in this embodiment, the first beam 182 and the second beam 1811 opposite to the first beam 182 are made of I-shaped steel, as shown in FIG. 11. The third beams 1812 are made of square steel. In addition, to facilitate assembly of the battery pack assembly with the container, rollers are disposed at the bottom of the third beams 1812 in this embodiment.

During assembly, the corresponding mounting brackets 17 are first fixed to each battery module 15. After connecting the explosion venting pipe assemblies of adjacent battery modules 15 using the flexible pipe segments 14, the U-shaped frame 181 is moved in the direction indicated by arrow a in FIG. 12. The explosion vent manifold of the battery pack 16 is positioned between the upper flange and the lower flange of the I-shaped steel, and the portions of the mounting brackets 17 close to the second beam 1811 are located on the upper flange of the second beam 1811, indicating that the frame is in place. Then, the first beam 182 is fixed to the open end of the U-shaped frame 181 using the connecting plates 183. In particular, one end of each of the two connecting plates 183 is first fixed to the two ends of the first beam 182, respectively. Next, the first beam 182 with the connecting plates 183 attached is moved in the direction indicated by arrow b until the connecting plates 183 are inserted into the third beams 1812. Portions of the mounting brackets 17 close to the first beam 182 are located on the upper flange of the first beam 182, indicating that the beam is in place. Finally, the connecting plates 183 are fixed to the third beams 1812 with screws.

Finally, the mounting brackets 17 on each battery module 15 are fixed to the first beam 182 and the second beam 1811.

In other embodiments, the battery pack 16 may be pushed into the U-shaped frame 181 via the opening end and fixed to the battery pack support frame 18 via brackets of the battery pack 16. Then, the first beam 182 is fixed to the opening end of the U-shaped frame 181, and the brackets of the battery pack 16 on the other side are fixed to the first beam 182, completing the assembly.

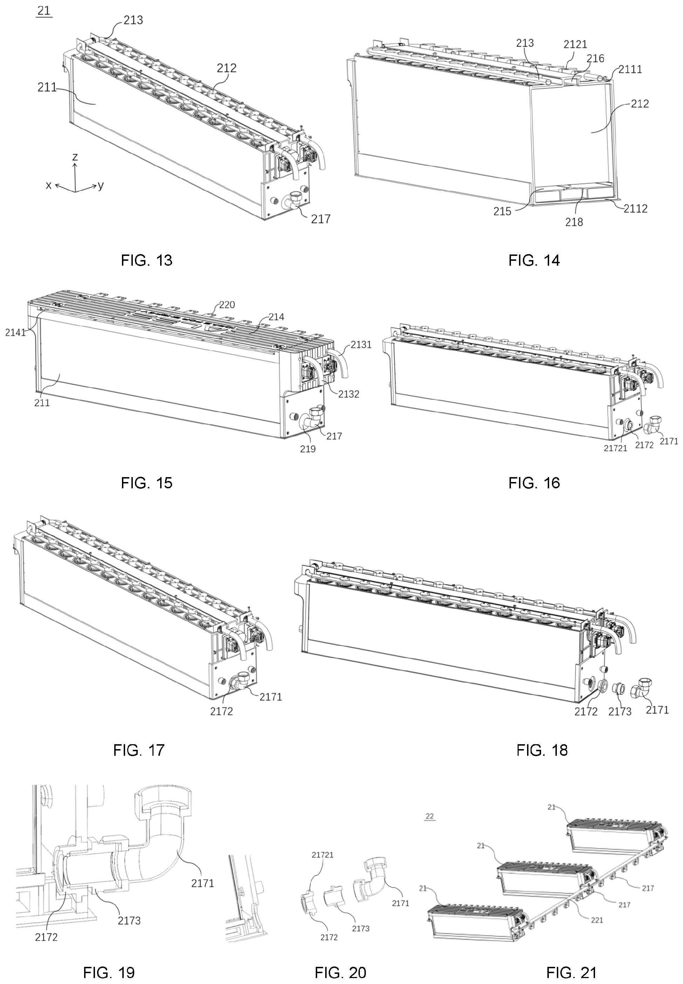

As shown in FIGS. 13 and 14, in Embodiments 5 to 9, the battery module 21 includes a housing 211 and a plurality of battery cells 212. Each battery cell 212 has an inner cavity including an electrolyte region and a gas region. The plurality of battery cells 212 are arranged in the same direction within the housing 211, and an inner cavity of the housing 211 is in communication with inner cavities of the plurality of battery cells 212.

Preferably, the communication described above may be achieved by providing a shared chamber in the housing 211, such that the inner cavity of the shared chamber is in communication with the inner cavities of all of the plurality of battery cells 212.

The shared chamber above may be an electrolyte shared chamber 215 (see FIG. 14). The electrolyte shared chamber 215 allows the plurality of battery cells 212 to be in a uniform electrolyte environment, ensuring the uniformity of the electrolyte within each battery cell 212 and thereby enhancing the performance and charge/discharge cycle life of the battery module 21.

The shared chamber above may be a gas shared chamber 216 (see FIG. 14). The gas shared chamber 216 enables gas balance of all of the plurality of battery cells 212, which may also enhance the performance and charge/discharge cycle life of the battery module 21.

The shared chamber above may further be a gas-liquid shared chamber. A gas-liquid shared chamber allows all of the plurality of battery cells 212 to be in a uniform electrolyte and gas environment, thereby enhancing the performance and charge/discharge cycle life of the battery module 21.

To enhance the heat dissipation performance of such battery modules 21, clearance holes corresponding to the polarity terminals 2121 of the plurality of battery cells are formed in the top plate 2111 of the housing. The polarity terminals 2121 of the plurality of battery cells extend through the corresponding clearance holes and serve as the polarity terminals of the battery module 21 (the polarity terminals 2121 of all of the plurality of battery cells on one side serve as the first polarity terminals of the battery module 21, and the polarity terminals 2121 of all of the plurality of battery cells on the other side serve as the second polarity terminals of the battery module 21). The regions of the top plate 2111 of the housing corresponding to the clearance holes are fixedly sealed to the casings of the plurality of battery cells 212, thereby sealing the gaps between the polarity terminals 2121 of the plurality of battery cells and the clearance holes.

It is to be noted that the polarity terminal 2121 of the battery cell described herein may be the electrode post terminal of the battery cell 212. If the electrode post terminal of the battery cell 212 may not smoothly extend through the clearance hole when used directly as the polarity terminal, an electrode post terminal adapter member may be connected to the electrode post terminal of the battery cell 212, and the combined structure of the electrode post terminal and the electrode post terminal adapter member of the battery cell 212 may serve as the polarity terminal 2121 of the battery cell.

A clamping portion of the liquid cooling pipe 213 is disposed on the polarity terminals of the battery module 21, and the liquid cooling pipe 213 is fixed within the clamping portion of the liquid cooling pipe 213, such that the liquid cooling pipe 213 is directly connected to the polarity terminals of the battery module 21. In this way, heat concentrated at the polarity terminals may be promptly conducted away, thereby enhancing the heat dissipation effect of the battery module 21. In addition, when the temperature of the battery module 21 falls below the set threshold, a higher-temperature heat transfer medium is introduced into the liquid cooling pipe 213 to heat the battery module 21. By controlling the temperature of the heat transfer medium, the battery module 21 may be maintained within the normal operating temperature range.

The polarity terminals 2121 of the plurality of battery cells are directly exposed to the external environment, posing significant potential safety hazards during operation due to the polarity terminals 2121 of the plurality of battery cells being live. On the basis of this, as shown in FIG. 15, an insulating protective cover 214 may be disposed on the top of the battery module 21 to provide insulation protection for the polarity terminals 2121 of the plurality of battery cells. This avoids potential safety hazards caused by exposed polarity terminals 2121 of the plurality of battery cells during operation of the battery module 21 and also avoids foreign objects from the external environment from falling onto the polarity terminals 2121 of the plurality of battery cells and causing a short circuit of the battery module 21, thereby enhancing the safety of the battery module 21.

It is to be noted that if the insulating protective cover 214 completely encloses the polarity terminals of the battery module 21, the electrical connection of such battery modules 21 would be difficult. Therefore, in Embodiments 5 to 9, a slit 2141 is formed in the side wall of the insulating protective cover 214, and the electrical connector 220 may be connected to the polarity terminals 2121 of the plurality of battery cells via the slit 2141, thereby enabling the electrical connection.

It is also to be noted that channels for the inlet end 2131 of the liquid cooling pipe and the outlet end 2132 of the liquid cooling pipe to extend through are further formed in the side wall of the insulating protective cover 214.

As shown in FIGS. 13 and 15, to discharge thermal runaway gases from the housing 211 of the battery module 21, an explosion venting pipe assembly 217 is disposed on the housing 211 and is in communication with the inner cavity of the housing 211. Under normal circumstances, the explosion venting pipe assembly 217 is directly in communication with the shared chamber above.

As shown in FIG. 21, Embodiments 5 to 9 further disclose a battery pack 22 including a plurality of battery modules 21 described above. To prevent thermal runaway gases from individual battery cells 212 within a battery module 21 from spreading throughout the entire container and causing safety problems, Embodiments 5 to 9 provide that the explosion venting pipe assemblies 217 of all battery modules 21 in the battery pack 22 are collected via an explosion vent manifold 221 (only three battery modules 21 are schematically shown in FIG. 21). When a battery cell 212 in any battery module 21 in the battery pack 22 undergoes thermal runaway, the thermal runaway gases may be discharged via the explosion vent manifold 221, reducing the risk of thermal runaway propagation and minimizing the likelihood of rupture of the battery module 21, the battery pack 22, or the energy storage container.

On the basis of the analysis above, a single-piece pipe may be selected as the explosion vent manifold 221, with branch pipes corresponding to the explosion venting pipe assemblies 217 of each battery module, provided on the explosion vent manifold 221. The explosion venting pipe assemblies 217 of the battery modules 21 are in communication with the explosion vent manifold 221 via the corresponding branch pipes. During assembly, all the battery modules 21 are first arranged along the length direction of the explosion vent manifold 221. Then, the explosion vent manifold 221 is connected to the explosion venting pipe assemblies 217 of the corresponding battery modules 21. During this connection, it is necessary to ensure coaxial alignment between the branch pipes and the explosion venting pipe assemblies 217. However, due to mounting errors of the explosion venting pipe assemblies 217, machining errors of the branch pipes, and spacing deviations between the battery modules 21, achieving coaxial alignment between the branch pipes and the explosion venting pipe assemblies 217 may be difficult, making the assembly of the explosion vent manifold 221 with the battery modules 21 challenging.

To overcome the problem above, in Embodiments 5 to 9, the explosion venting pipe assembly 217 is designed as a flexible hollow pipe member 2171.

During assembly, each flexible hollow pipe member 2171 is fixed to a corresponding battery module 21 to form a battery module 21 with an explosion venting pipe assembly 217. Next, a plurality of battery modules 21 with explosion venting pipe assemblies 217 are arranged along the length direction of the explosion vent manifold 221. Finally, the flexible hollow pipe members 2171 are connected to the explosion vent manifold 221.

In Embodiments 5 to 9, the explosion vent manifold 221 may be an explosion vent manifold 221 with branch pipes, each branch pipe is in a one-to-one correspondence with the explosion vent manifold 221 of each battery module 21, and each flexible hollow pipe member 2171 is connected to a corresponding branch pipe. Alternatively, in Embodiments 5 to 9, the explosion vent manifold 221 may be an explosion vent manifold 221 with holes in the pipe wall, each hole is in a one-to-one correspondence with the explosion vent manifold 221 of each battery module 21, and each flexible hollow pipe member 2171 is connected to a corresponding hole in the pipe wall.

Since Embodiments 5 to 9 use the flexible hollow pipe member 2171 as the explosion venting pipe assembly 217, the deformation of the flexible hollow pipe member 2171 may compensate for mounting errors of the explosion venting pipe assemblies 217 and spacing deviations between the battery modules 21, reducing the difficulty of mounting the explosion vent manifold 221.

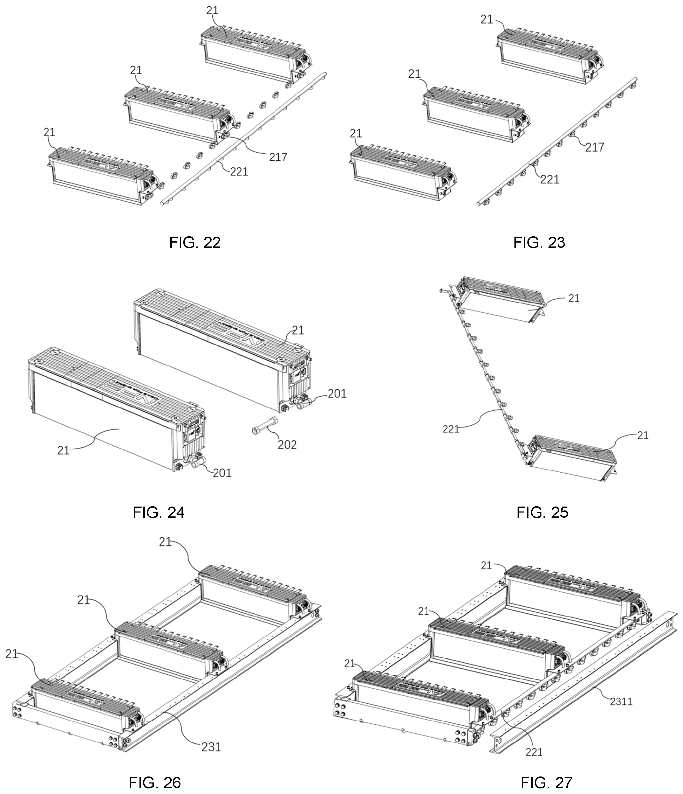

Another possible solution is to design the explosion venting pipe assembly 217 as a three-way structure and to design the explosion vent manifold 221 as a modular member including flexible pipe segments 202, as follows:
As shown in FIGS. 24 and 25, the explosion venting pipe assembly is a three-way pipe 201. Its first port (the vertical pipe segment joint) is sealed to the housing 211, while the second port of the second explosion vent component and the third port of the second explosion vent component (the two joints of the horizontal pipe segment) are configured to be connected to the flexible pipe segments 202 forming the explosion vent manifold 221. That is, in this solution, the explosion vent manifold 221 is formed by splicing the horizontal pipe segments of a plurality of three-way pipes 201 and a plurality of flexible pipe segments 202.

During assembly, each three-way pipe 201 is fixed to the housing 211 of a corresponding battery module 21 to form a battery module 21 with an explosion venting pipe assembly 217. Next, a plurality of battery modules 21 with explosion venting pipe assemblies 217 are arranged in the predetermined direction. Finally, the flexible pipe segments 202 are used to connect two adjacent three-way pipes 201.

Since this solution uses a segmented explosion vent manifold 221, with flexible pipe segments 202 as the intermediate connecting pipes, the deformation of the flexible pipe segments 202 may compensate for mounting errors of the explosion venting pipe assemblies 217 and spacing deviations between the battery modules 21, reducing the difficulty of mounting the explosion vent manifold 221.

However, compared with Embodiments 5 to 9, in this solution, the explosion vent manifold 221 is of segmented pipe segments. First, the segmented parts are prone to a plurality of leakage points, resulting in a higher risk of leakage, whereas the explosion vent manifold 221 in Embodiments 5 to 9 is a single-piece pipe with a lower leakage risk. Second, the connections of the explosion vent manifold 221 in this solution are more complex.

As shown in FIG. 26, Embodiments 5 to 9 further disclose a battery pack assembly, which includes a battery pack support frame 231 and the battery pack 22 above fixed to the battery pack support frame 231 (only three battery modules 21 are schematically shown in the battery pack in FIG. 26).

The following provides a further description of Embodiments 5 to 9 with reference to the drawings.

### Embodiment 5

As shown in FIGS. 13 and 14, a battery module 21 in this embodiment includes a housing 211 and a plurality of battery cells 212 arranged in parallel within the housing 211.

In this embodiment, the plurality of battery cells 212 are prismatic batteries, and the number thereof is thirteen. An inner cavity of each battery cell 212 includes an electrolyte region and a gas region. In other embodiments, the number of the plurality of battery cells 212 may be adjusted according to actual requirements, and the form of the plurality of battery cells 212 may be adjusted according to actual requirements.

As can be seen from the drawing, in this embodiment, a rectangular housing 211 is used. For convenience of description, the length direction of the housing 211 is defined as an x direction, the width direction of the housing 211 is defined as a y direction, and the height direction of the housing 211 is defined as a z direction.

Referring to FIG. 14, an electrolyte shared chamber 215 is disposed along the x direction between the bottom plate 2112 of the housing and each battery cell 212. The inner cavity of the electrolyte shared chamber 215 is in communication with the electrolyte regions of the inner cavities of the plurality of battery cells 212. It is to be noted here that the electrolyte shared chamber 215 is a liquid channel extending in the x direction, positioned between the bottom plate 2112 of the housing and the plurality of battery cells 212. This liquid channel may be integrally formed with the bottom plate 2112 of the housing, or it may be formed by disposing a support member 218 between the lower cover plate of the plurality of battery cells 212 and the bottom plate 2112 of the housing, as shown in FIG. 14.

In the top plate 2111 of the housing, a gas shared chamber 216 is disposed along the x direction. The inner cavity of the gas shared chamber 216 is in communication with the gas region of the inner cavity of each battery cell 212.

In other embodiments, only the electrolyte shared chamber 215 or the gas shared chamber 216 may be disposed. Additionally, a gas-liquid shared chamber may be disposed along the x direction in the first side plate (the side plate parallel to the xz plane) of the housing 211. The inner cavity of the gas-liquid shared chamber is in communication with the electrolyte region and the gas region of the inner cavity of each battery cell 212.

Through holes, in communication with the electrolyte shared chamber 215, are formed in the second side plate 211 (the side plate parallel to the yz plane) of the housing, and an explosion venting pipe assembly 217 is connected to the through hole.

Referring to FIG. 15, in this embodiment, the explosion venting pipe assembly 217 is a flexible hollow pipe member 2171, with an explosion vent membrane disposed within the flexible hollow pipe member 2171. One end of the flexible hollow pipe member 2171 is fixed to the through hole of the housing 211. In this embodiment, a first annular plate 219 is disposed on the outer wall at one end of the flexible hollow pipe member 2171. The first annular plate 219 is sealed to the periphery of the through hole by friction welding. In other embodiments, the flexible hollow pipe member 2171 may be fixed to the through hole of the housing 211 by a threaded connection, in which case the sealing integrity of the threaded connection part needs to be ensured.

The other end of the flexible hollow pipe member 2171 is configured to be connected to the explosion vent manifold 221. As can be seen from the drawing, in this embodiment, a union joint is disposed at the other end of the flexible hollow pipe member 2171, and the corresponding explosion vent manifold 221 is an explosion vent manifold 221 with branch pipes. The union joint allows the flexible hollow pipe member to be easily connected to the corresponding branch pipe of the explosion vent manifold 221. A sealing washer may be disposed at the connection part to ensure the sealing performance at the connection part.

In this embodiment, the flexible hollow pipe member 2171 is a corrugated pipe, which may be a metal corrugated pipe or a plastic corrugated pipe. However, such a corrugated pipe at least needs to satisfy the following two requirements:
1. High-temperature resistance (able to withstand the temperature of thermal runaway gases), that is, the corrugated pipe may not deform during a thermal runaway event.
2. Corrosion resistance, that is, the corrugated pipe may not be corroded or deformed upon contact with thermal runaway gases or any substances released during thermal runaway.

It is to be noted that, to further enhance safety, the explosion vent manifold 221 is to be insulated from the battery modules 21. In this embodiment, the flexible hollow pipe member 2171 and/or the explosion vent manifold 221 may be made of an insulation material.

As shown in FIG. 14, clearance holes through which the polarity terminals 2121 of the plurality of battery cells may extend are formed in the top plate 2111 of the housing of the battery module 21 in this embodiment. The polarity terminals 2121 of the plurality of battery cells extend through the corresponding clearance holes, and the regions of the housing 211 surrounding the clearance holes are fixedly sealed to the casings of the plurality of battery cells 212.

In this embodiment, a through groove is formed in the part where the polarity terminals 2121 of the plurality of battery cells extend through the clearance holes, serving as a clamping portion of a liquid cooling pipe 213. The liquid cooling pipe 213 is fixed within the through groove. When the temperature of the battery module 21 exceeds a set threshold, a lower-temperature heat transfer medium is introduced into the liquid cooling pipe 213 to cool the battery module 21. Conversely, when the temperature of the battery module 21 falls below the set threshold, a higher-temperature heat transfer medium is introduced into the liquid cooling pipe 213 to heat the battery module 21. By controlling the temperature of the heat transfer medium, the battery module 21 may be maintained within the normal operating temperature range.

To prevent condensation from the liquid cooling pipe 213 from causing safety problems, in this embodiment, an insulating sealing layer may be laid on the top plate 2111 of the housing. Portions of the polarity terminals 2121 of the plurality of battery cells are covered by the insulating sealing layer, while the electrical connection parts (i.e., the upper end surfaces) of the polarity terminals 2121 of the plurality of battery cells extend through the insulating sealing layer to be connected to the electrical connectors 220. The main body part of the liquid cooling pipe 213 is entirely covered by the insulating sealing layer, while the inlet end 2131 and the outlet end of the liquid cooling pipe extend through the insulating sealing layer for connection to a liquid cooling device.

Moreover, the electrode post terminals are directly exposed to the external environment, posing significant potential safety hazards during operation due to being live. On the basis of this, as shown in FIG. 15, in this embodiment, an insulating protective cover 214 is disposed on a top of the battery module 21 to insulate the electrode post terminals. This avoids the potential safety hazards associated with exposed electrode posts during the operation of the battery module 21 and also avoids foreign objects from the external environment from falling onto the electrode post terminals and causing a short circuit of the battery module 21, thereby enhancing the safety of the battery module 21.

It is to be noted that if the insulating protective cover 214 completely encloses the electrode post terminals, the electrical connection of such battery modules 21 would be difficult. Therefore, in this embodiment, a slit 2141 is formed in the side wall of the insulating protective cover 214 parallel to the xz plane, and the electrical connector 220 may be connected to the electrode post terminals via the slit 2141, thereby enabling the electrical connection.

It is also to be noted that channels for the inlet end 2131 of the liquid cooling pipe and the outlet end 2132 of the liquid cooling pipe to extend through are further formed in the side wall of the insulating protective cover 214.

### Embodiment 6

Unlike Embodiment 5, as shown in FIGS. 16 and 17, in this embodiment, the explosion venting pipe assembly 217 further includes a first hollow pipe member 2172, with an explosion vent membrane disposed within the first hollow pipe member 2172. The flexible hollow pipe member 2171 is connected to the housing 211 via the first hollow pipe member 2172.

One end of the first hollow pipe member 2172 is connected to the housing 211. To fix it to the through hole of the housing 211, in this embodiment, a second annular plate 21721 is disposed on the outer wall at one end of the first hollow pipe member 2172. The second annular plate is sealed to the periphery of the through hole by friction welding.

External threads are disposed on the other end of the first hollow pipe member 2172, and union joints are disposed on two ends of the flexible hollow pipe member 2171.

The flexible hollow pipe member 2171 is threaded to the first hollow pipe member 2172 via the union joint at one end.

Compared with Embodiment 5, in this embodiment, after the battery modules 21 (excluding the flexible hollow pipe members 2171) are fabricated, the flexible hollow pipe members 2171 may be connected to the battery modules 21 during the assembly stage of the battery pack 22.

### Embodiment 7

Unlike the embodiments above, as shown in FIGS. 18 to 20, in this embodiment, the explosion venting pipe assembly 217 further includes a second hollow pipe member 2173 made of an insulation material.

Similar to Embodiment 6, in this embodiment, the explosion vent membrane is disposed inside the first hollow pipe member 2172. One end of the first hollow pipe member 2172 is connected to the housing 211. To fix it to the through hole of the housing 211, a second annular plate 21721 is disposed on the outer wall at one end of the first hollow pipe member 2172, and the second annular plate 21721 is sealed to the periphery of the through hole by friction welding. Internal threads are disposed on the other end of the first hollow pipe member 2172 for connection to the second hollow pipe member 2173.

In this embodiment, the second hollow pipe member 2173 is made of a PTFE pipe. As can be seen from FIGS. 19 and 20, one end of the PTFE pipe has a smaller outer diameter and is provided with external threads to be connected to the internal threads of the first hollow pipe member 2172. The other end of the PTFE pipe has a larger outer diameter and is provided with external threads to be connected to the union joint of the flexible hollow pipe member 2171.

In other embodiments, the second hollow pipe member 2173 may be made of other insulating and high-temperature-resistant materials.

On the basis of the second hollow component, insulation between the explosion vent manifold 221 and the battery module 21 may be achieved at the battery module 21 end. In addition, to enhance the sealing integrity at the connection parts, a sealing washer may be disposed at the connection parts.

### Embodiment 8

As shown in FIG. 21, this embodiment provides a battery pack 22, which includes an explosion vent manifold 221 and the thirteen battery modules 21 from the embodiments above. The flexible hollow pipe members 2171 of each battery module 21 are all connected to the explosion vent manifold 221. One end of the explosion vent manifold 221 is sealed, while the other end is open, serving as the thermal runaway gas outlet of the battery pack 22.

In this embodiment, the explosion vent manifold 221 includes a main pipe and thirteen branch pipes disposed on the main pipe. The thirteen branch pipes are in a one-to-one correspondence with the flexible hollow pipe members 2171 of the thirteen battery modules 21, and each of the n branch pipes is connected to the flexible hollow pipe member 2171 of a corresponding battery module 21.

To clearly illustrate the explosion vent manifold 221, only three battery modules 21 are schematically shown in FIG. 21. In other embodiments, the number of battery modules 21 may be adjusted according to actual requirements.

The flexible hollow pipe members 2171 and the branch pipes of the explosion vent manifold 221 may be connected either by welding or by a threaded connection. Since welding is more complex than threaded assembly, this embodiment adopts the threaded connection method.

In this embodiment, the flexible hollow pipe members 2171 are metal corrugated pipes with union joints at two ends, providing high-temperature resistance along with a degree of flexibility. To connect them, external threads are disposed on the outer walls of the branch pipes of the explosion vent manifold 221, and the union joints of the flexible hollow pipe members 2171 are threaded to the external threads on the outer walls of the branch pipes of the explosion vent manifold 221. To enhance the sealing integrity at the connection part, a sealing washer may be disposed at the connection part.

In this embodiment, the battery pack 22 (for example, including thirteen battery modules 21 from Embodiment 7) may be assembled by the following steps:
As shown in FIG. 22, the flexible hollow pipe members 2171 are first fixed to each battery module 21. The thirteen battery modules 21 are then arranged in the predetermined direction, and the flexible hollow pipe members 2171 of each battery module 21 are connected to the branch pipes of the explosion vent manifold 221, thereby obtaining the battery pack 22 of this embodiment.

Alternatively, as shown in FIG. 23, the flexible hollow pipe members 2171 may first be connected to the branch pipes of the explosion vent manifold 221, and then the flexible hollow pipe members 2171 are connected to the second hollow pipe members 2173 of the corresponding battery modules 21, thereby obtaining the battery pack 22 of this embodiment.

When battery modules from Embodiment 6 are used, the flexible hollow pipe members 2171 are connected to the first hollow pipe members of the corresponding battery modules 21.

When battery modules from Embodiment 5 are used, the assembly method shown in FIG. 22 is preferably employed.

### Embodiment 9

As shown in FIGS. 26 and 27, this embodiment provides a battery pack assembly, which includes the battery pack 22 from any of the embodiments above and a battery pack support frame 231 for supporting the battery pack 22.

One of the side beams 2311 of the battery pack support frame 231 is made of I-shaped steel, and the explosion vent manifold 221 is embedded in the inner space between the upper flange and the lower flange of this side beam 2311.

In this embodiment, the explosion vent manifold 221 is directly embedded in the space between the upper flange and the lower flange of the side beam 2311, without occupying additional space, thereby enabling the battery pack 22 to achieve a higher energy density.

Moreover, by using I-shaped steel for the side beam 2311, the upper flange of the side beam 2311 may serve as the mounting surface for the battery modules 21. The upper flange, being the maximum load-bearing surface of the I-shaped steel, provides the support of the battery pack 22 with excellent structural strength, eliminating the need for additional supporting structural members and thereby further enhancing the overall energy density of the battery pack 22.

Embodiments 10 to 13 provide another type of battery module, which includes a housing and a plurality of battery cells. Each battery cell has an inner cavity including an electrolyte region and a gas region. The plurality of battery cells are arranged in the same direction within the housing, and an inner cavity of the housing is in communication with inner cavities of the plurality of battery cells.

The communication described above may be achieved by providing a shared chamber in the housing, such that the inner cavity of the shared chamber is in communication with the inner cavities of all of the plurality of battery cells.

The shared chamber above may be an electrolyte shared chamber. The electrolyte shared chamber allows the plurality of battery cells to be in a uniform electrolyte environment, ensuring the uniformity of the electrolyte within each battery cell and thereby enhancing the performance and charge/discharge cycle life of the battery module.

The shared chamber above may be a gas shared chamber. The gas shared chamber enables gas balance of all of the plurality of battery cells, which may also enhance the performance and charge/discharge cycle life of the battery module.

The shared chamber above may further be a gas-liquid shared chamber. A gas-liquid shared chamber allows the plurality of battery cells to be in a uniform electrolyte and gas environment, thereby enhancing the performance and charge/discharge cycle life of the battery module.

To discharge thermal runaway gases from the housing, in Embodiments 10 to 13, an explosion venting pipe assembly is disposed on the housing and is in communication with the inner cavity of the housing. Under normal circumstances, the explosion venting pipe assembly is directly in communication with the shared chamber above.

Embodiments 10 to 13 further provide a battery pack constructed from at least two of the battery modules above. To prevent thermal runaway gases from individual battery cells within a battery module from spreading throughout the entire container and causing safety problems, Embodiments 10 to 13 provide that the explosion venting pipe assemblies of all battery modules in the battery pack are collected via an explosion vent manifold. When a battery cell in any battery module in the battery pack undergoes thermal runaway, the thermal runaway gases may be discharged via the explosion vent manifold, reducing the risk of thermal runaway propagation and minimizing the likelihood of rupture of the battery module, the battery pack, or the energy storage container.

On the basis of the analysis above, a single-piece pipe may be selected as the explosion vent manifold, with a plurality of branch pipes provided thereon to connect to the explosion venting pipe assemblies of the battery modules. During assembly, all the battery modules are first arranged along the length direction of the explosion vent manifold. Then, the branch pipes of the explosion vent manifold are connected to the explosion venting pipe assemblies of the corresponding battery modules. During this connection, it is necessary to ensure coaxial alignment between the branch pipes and the explosion venting pipe assemblies. However, due to mounting errors of the explosion venting pipe assemblies, machining errors of the branch pipes, and spacing deviations between the battery modules, achieving coaxial alignment between the branch pipes and the explosion venting pipe assemblies may be difficult, making the assembly of the explosion vent manifold with the battery modules challenging.

To overcome the problems above, Embodiments 10 to 13 design the explosion venting pipe assemblies of the battery modules as modular members and also design the explosion vent manifold as a modular member, as detailed below:
In Embodiments 10 to 13, the explosion venting pipe assembly is designed as a two-part structure. For ease of description, this two-part structure may be defined as a first explosion vent component and a second explosion vent component. The first explosion vent component includes a hollow pipe member provided with an explosion vent membrane in the interior and is connected to the housing of the battery module. The second explosion vent component is a three-way pipe, whose first port (the vertical pipe segment joint) is sealed to the hollow pipe member, and whose second port of the second explosion vent component and third port of the second explosion vent component (the two joints of the horizontal pipe segment) are configured to be connected to the flexible pipe segments forming an explosion vent manifold. That is, in Embodiments 10 to 13, the explosion vent manifold is formed by splicing the horizontal pipe segments of a plurality of three-way pipes with a plurality of flexible pipe segments.

During assembly, each three-way pipe member is fixed to the corresponding hollow pipe member to form a battery module with an explosion venting pipe assembly. Then, the plurality of battery modules are arranged in the predetermined direction, and finally, the adjacent three-way pipe members are connected using the flexible pipe segments.

In Embodiments 10 to 13, since the explosion vent manifold is of a segmented design and the intermediate connecting pipe segments are flexible pipe segments, the deformation of the flexible pipe segments may compensate for mounting errors of the explosion venting pipe assemblies and spacing deviations between battery modules, reducing the difficulty of mounting the explosion vent manifold.

It is to be noted that, to further enhance safety, the explosion vent manifold needs to be insulated from the battery modules. For example, flexible pipe segments and/or three-way pipes made of an insulating and high-temperature-resistant material (capable of withstanding the temperature of thermal runaway gases) may be used. In addition, an insulating pipe segment may be disposed between the hollow pipe member and the three-way pipe member.

In addition, if the hollow pipe member is perpendicular to the horizontal pipe segment of the three-way pipe, during a thermal runaway event, the thermal runaway materials in the inner cavity of the housing (including thermal runaway gases and part ejected electrolyte) break through the explosion vent membrane and enter the horizontal pipe segment of the three-way pipe perpendicularly from the hollow pipe member. The horizontal pipe segment then obstructs the flow, causing part of the thermal runaway materials to backflow into the interior of the housing, which may cause a safety problem.

To address this problem, Embodiments 10 to 13 bend the hollow pipe member and/or the vertical pipe segment of the three-way pipe. At the bending portion, the direction of the thermal runaway materials changes, which provides two advantages: first, the flow velocity of the thermal runaway materials is reduced when reaching the horizontal pipe segment of the three-way pipe, preventing excessive impact in the horizontal pipe segment of the three-way pipe and reducing backflow; second, even if part of the thermal runaway materials backflow into the hollow pipe member and/or the vertical section pipe of the three-way pipe, the bending portion acts as a barrier, preventing a significant amount of thermal runaway materials from entering the inner cavity of the housing.

In addition, Embodiments 10 to 13 may also bend the horizontal pipe segment of the three-way pipe (at the connection part with the vertical pipe segment of the three-way pipe, bending it away from the vertical pipe segment of the three-way pipe) to address the problem above.

The thermal runaway materials are discharged from the hollow pipe member and directly impinge on the bending portion of the horizontal pipe segment of the three-way pipe, where the flow direction is changed within the bending portion, such that most of the thermal runaway materials flow toward the horizontal pipe segment of the three-way pipe, reducing backflow.

The following provides a further description of Embodiments 10 to 13 with reference to the drawings.

### Embodiment 10

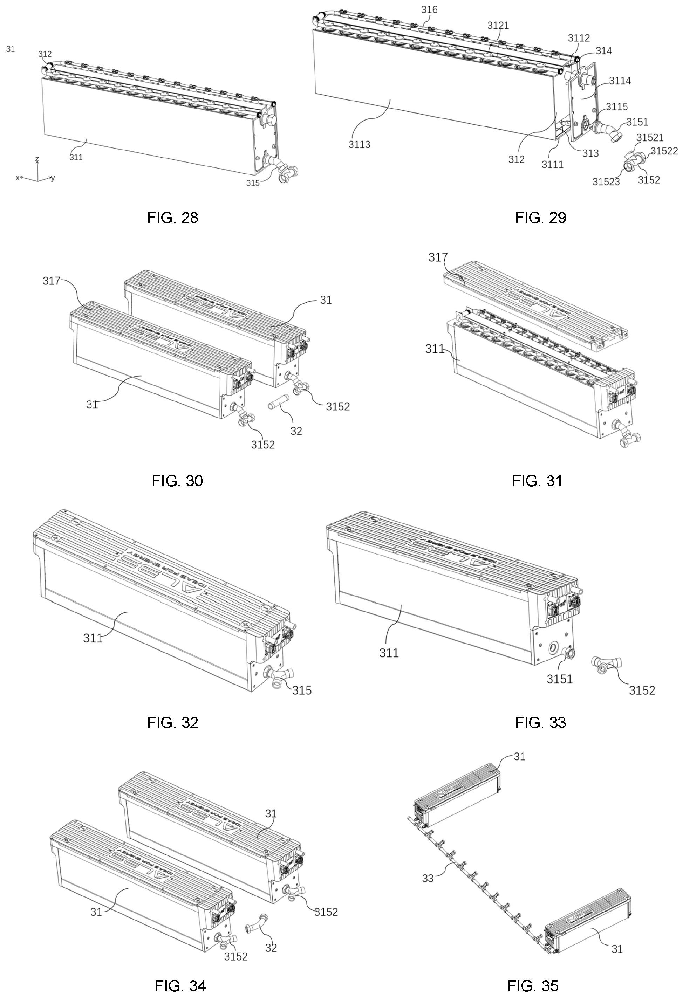

As shown in FIGS. 28 and 29, a battery module 31 in this embodiment includes a housing 311 and a plurality of battery cells 312 arranged in parallel within the housing 311.

In this embodiment, the plurality of battery cells 312 are prismatic batteries, with a total of thirteen cells. In other embodiments, the number may be adjusted according to actual needs. The inner cavity of each battery cell 312 includes an electrolyte region and a gas region.

For convenience of description, the length direction of the housing 311 is defined as an x direction, the width direction of the housing 311 is defined as a y direction, and the height direction of the housing 311 is defined as a z direction.

In the bottom plate 3111 of the housing, an electrolyte shared chamber 313 is disposed along the x direction. The inner cavity of the electrolyte shared chamber 313 is in communication with the electrolyte region of the inner cavity of each battery cell 312.

In the top plate 3112 of the housing, a gas shared chamber 314 is disposed along the x direction. The inner cavity of the gas shared chamber 314 is in communication with the gas region of the inner cavity of each battery cell 312.

In other embodiments, only the electrolyte shared chamber 313 or the gas shared chamber 314 may be disposed. Additionally, a gas-liquid shared chamber may be disposed along the x direction in the first side plate 3113 (the side plate parallel to the xz plane) of the housing 311. The inner cavity of the gas-liquid shared chamber is in communication with the electrolyte region and the gas region of the inner cavity of each battery cell 312.

Through holes 3115, in communication with the electrolyte shared chamber 313, are formed in the second side plate 3114 (the side plate parallel to the yz plane) of the housing 311, and an explosion venting pipe assembly 315 is connected to the through hole 3115.

In this embodiment, the explosion venting pipe assembly 315 includes a first explosion vent component 3151 and a second explosion vent component 3152. The first explosion vent component 3151 includes a hollow pipe member provided with an explosion vent membrane in the interior, configured to be connected to the housing 311. To fix the first hollow pipe member to the through hole 3115 of the housing 311, in this embodiment, an annular plate is disposed on the outer wall at one end of the first explosion vent component 3151, which is sealed to the periphery of the through hole 3115 by friction welding. The second explosion vent component 3152 is a three-way pipe, whose first port 31521 is sealed to the first explosion vent component 3151, and whose second port of the second explosion vent component 31522 and third port of the second explosion vent component 31523 are configured to be connected to the flexible pipe segments 32 forming an explosion vent manifold 33. The first port 31521 is the joint of the vertical pipe segment of the three-way pipe, while the second port of the second explosion vent component 31522 and the third port of the second explosion vent component 31523 are the joints at two ends of the horizontal pipe segment of the three-way pipe (in FIG. 29, the pipe segment parallel to the y direction).

The first port 31521 may be connected to the first explosion vent component 3151 by threading, welding, or interference fit. In this embodiment, a union three-way pipe is used, in which one end of the vertical pipe segment of the three-way pipe is provided with a union nut as a union joint. External threads are disposed on the outer wall at the end of the first explosion vent component 3151 connected to the second explosion vent component 3152. The union joint of the second explosion vent component 3152 is threaded to the external thread on the outer wall of the hollow pipe member. The union joint allows a convenient direct connection to the first explosion vent component 3151. A sealing washer is disposed on the free end of the first explosion vent component 3151 to ensure the sealing performance at the connection part.

As can be seen from FIGS. 28 to 30, in this embodiment, the first explosion vent member 3151 is provided with a bending portion, which may also be understood as the first explosion vent component 3151 being formed as a bent pipe, preferably bending downward. During a thermal runaway event, the thermal runaway materials break through the explosion vent membrane and enter the first explosion vent component 3151. At the bending portion, the flow velocity of the thermal runaway materials is reduced when reaching the horizontal pipe segment of the three-way pipe, preventing excessive impact in the horizontal pipe segment of the three-way pipe and reducing backflow. Inevitably, part of the thermal runaway materials may backflow into the hollow pipe member, but the bending portion acts as a barrier, preventing a significant amount of thermal runaway materials from entering the inner cavity of the housing.

In other embodiments, a bending portion may be disposed in the vertical pipe segment of the three-way pipe, serving the same function as the bending portion of the first explosion vent component 3151 in this embodiment.

As shown in FIG. 29, clearance holes through which the polarity terminals 3121 of the plurality of battery cells 312 may extend are formed in the top plate 3112 of the housing of the battery module 31 in this embodiment. The polarity terminals 3121 of the plurality of battery cells 312 extend through the corresponding clearance holes, and the regions of the housing 311 surrounding the clearance holes are fixedly sealed to the casings of the plurality of battery cells 312.

In this embodiment, a through groove is formed in the part where the polarity terminals 3121 of the plurality of battery cells 312 extend through the clearance holes, serving as a clamping portion of a liquid cooling pipe 316. The liquid cooling pipe 316 is fixed within the through groove. When the temperature of the battery module 31 exceeds a set threshold, a lower-temperature heat transfer medium is introduced into the liquid cooling pipe 316 to cool the battery module 31. Conversely, when the temperature of the battery module 31 falls below the set threshold, a higher-temperature heat transfer medium is introduced into the liquid cooling pipe 316 to heat the battery module 31. By controlling the temperature of the heat transfer medium, the battery module 31 may be maintained within the normal operating temperature range.

To prevent condensation from the liquid cooling pipe 316 from causing safety problems, in this embodiment, an insulating sealing layer may be laid on the top plate 3112 of the housing. Portions of the polarity terminals 3121 of the plurality of battery cells 312 are covered by the insulating sealing layer, while the electrical connection parts (i.e., the upper end surfaces) of the polarity terminals 3121 of the plurality of battery cells 312 extend through the insulating sealing layer to be connected to the electrical connectors (on the basis of which the plurality of battery cells 312 may be connected in parallel, or the battery modules 31 may be connected in series). The main body part of the liquid cooling pipe 316 is entirely covered by the insulating sealing layer, while the inlet end and the outlet end of the liquid cooling pipe 316 extend through the insulating sealing layer for connection to a liquid cooling device.

Moreover, the polarity terminals 3121 are directly exposed to the external environment, posing significant potential safety hazards during operation due to the polarity terminals 3121 being live. On the basis of this, as shown in FIGS. 30 and 31, in this embodiment, an insulating protective cover 317 may be disposed on the top of the battery module 31 to provide insulation protection for the polarity terminals 3121. This avoids potential safety hazards caused by exposed polarity terminals 3121 during operation of the battery module 31 and also avoids foreign objects from the external environment from falling onto the polarity terminals 3121 and causing a short circuit of the battery module 31, thereby enhancing the safety of the battery module 31.

It is to be noted that if the insulating protective cover 317 completely encloses the polarity terminals 3121, the electrical connection of such battery modules 31 would be difficult. Therefore, in this embodiment, a slit is formed in the side wall of the insulating protective cover 317 parallel to the xz plane, through which the electrical connector may be connected to the polarity terminals 3121, thereby enabling the electrical connection.

It is also to be noted that channels for the inlet end and the outlet end of the liquid cooling pipe 316 to extend through are further formed in the side wall of the insulating protective cover 317.

### Embodiment 11

As shown in FIGS. 32, 33, and 34, unlike Embodiment 10, in this embodiment, a bending portion is disposed in the horizontal pipe segment of the three-way pipe.

As can be seen from the drawings, the connection part between the horizontal pipe segment of the three-way pipe and the vertical pipe segment of the three-way pipe is bent, bending it away from the vertical pipe segment of the three-way pipe.

In this embodiment, a Y-shaped three-way pipe may be directly used.

The thermal runaway materials are discharged from the hollow pipe member and directly impinge on the bending portion of the horizontal pipe segment of the three-way pipe, where the flow direction is changed within the bending portion, such that most of the thermal runaway materials flow toward the horizontal pipe segment of the three-way pipe, reducing backflow.

### Embodiment 12

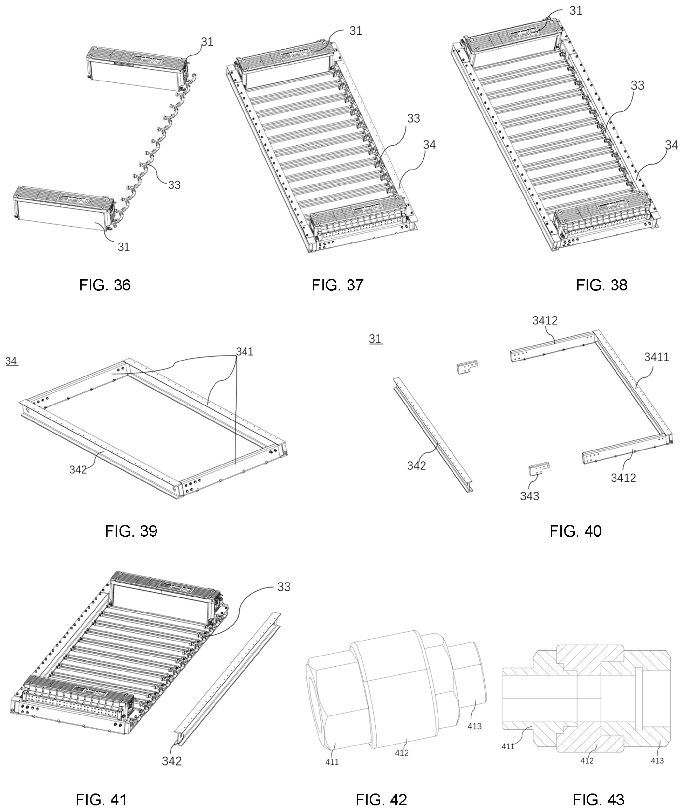

As shown in FIGS. 35 and 36, schematic diagrams of the battery pack in this embodiment are illustrated. The battery pack includes thirteen battery modules 31 from Embodiment 10 or Embodiment 11. The second explosion vent components 3152 of two adjacent battery modules 31 are connected via flexible pipe segments 32 (referring to FIGS. 30 and 34). A free end of a second explosion vent component 3152 of one of the two outermost battery modules 31 is sealed, while a free end of a second explosion vent component of the other of the two outermost battery modules 31 is open, serving as a thermal runaway gas outlet of the battery pack.

In this embodiment, the pipe segment connecting the second explosion vent component 3152 and the flexible pipe segment 32 is defined as the explosion vent manifold 33 (wherein the second explosion vent component 3152 serves as a shared structure between the explosion venting pipe assembly 315 and the explosion vent manifold 33). Thermal runaway gases are discharged via the thermal runaway gas outlet.

As can be seen from FIG. 36, when battery modules from Embodiment 11 are used, each flexible pipe segment 32, together with the Y-shaped three-way pipes connected at two ends, forms a semicircular-like pipe. Thermal runaway materials are discharged from the hollow pipe member and flow into the semicircular-like pipes on two sides, which may further reduce backflow.

To clearly show the explosion vent manifold 33, only the two outermost battery modules 31 are schematically illustrated in FIGS. 35 and 36. In other embodiments, the number of battery modules 31 may be adjusted according to actual requirements.

The flexible pipe segment 32 may be connected to the second explosion vent component 3152 by welding or by a threaded connection. Since welding is more complex than a threaded connection during assembly, this embodiment adopts a threaded connection. In this embodiment, the flexible pipe segment 32 is a metal corrugated pipe with union nuts at two ends, providing high-temperature resistance and a degree of flexibility. To connect it, external threads are disposed on the outer walls at two ends of the horizontal pipe segment of the second explosion vent component 3152, and the union nuts of the flexible pipe segment 32 are threaded to the external threads on the outer walls of the second explosion vent component 3152. To enhance the sealing integrity at the connection part, a sealing washer may be disposed at the connection part.

In this embodiment, the battery pack may be assembled by the following steps:
The thirteen battery modules 31 are arranged in the predetermined direction. Then, the second explosion vent components 3152 of two adjacent battery modules 31 are connected using a flexible pipe segment 32, and the free end of the second explosion vent component 3152 of the outermost battery module 31 is sealed, thereby obtaining the battery pack of this embodiment.

### Embodiment 13

As shown in FIGS. 37 and 38, schematic structural diagrams of the battery pack assembly in this embodiment are illustrated, which includes the battery pack from Embodiment 12 and a battery pack support frame 34 for supporting the battery pack.

The structure of the battery pack support frame 34 is shown in FIGS. 38 and 39, which is a rectangular frame. To facilitate fixing the battery pack to the battery pack support frame 34, in this embodiment, the battery pack support frame 34 is designed as a modular structure, including a U-shaped frame 341 and a first beam 342 fixed to an opening end of the U-shaped frame 341. For ease of description, in this embodiment, the U-shaped frame 341 is divided into three parts: a second beam 3411 and two third beams 3412 fixed at two ends of the second beam 3411, respectively. To enhance the structural strength of the entire battery pack support frame 34, in this embodiment, the first beam 342 and the second beam 3411 opposite to the first beam 342 are made of I-shaped steel, as shown in FIGS. 39 and 40. The third beams 3412 are made of square steel. In addition, to facilitate assembly of the battery pack assembly with the container, rollers are disposed at the bottom of the third beams 3412 in this embodiment.

During assembly, the battery pack is first fixed onto the U-shaped frame 341. The first beam 342 is then fixed to the open end of the U-shaped frame 341 using connecting plates 343, ensuring that the explosion vent manifold 33 is embedded within the inner space between the upper flange and the lower flange of the first beam 342 (see FIGS. 37, 38, and 41). This allows the explosion vent manifold 33 to occupy no additional space, thereby enhancing the energy density of the battery pack assembly.

In other embodiments, an integral rectangular frame may be used; however, compared with this embodiment, assembling the battery pack with the rectangular frame is more difficult.

To prevent thermal runaway gases from individual battery cells within a battery module from spreading throughout the entire container and causing safety problems, Embodiments 14 to 18 provide that the explosion vent ports of all battery modules in the battery pack (each explosion vent port is provided with an explosion vent membrane and is in communication with the inner cavities of all of the plurality of battery cells within the battery module, or with the explosion vent ports of all of the plurality of battery cells within the battery module) are collected via an explosion vent manifold. When a battery cell within any battery module in the battery pack undergoes thermal runaway, the thermal runaway gases may be discharged via the explosion vent manifold, reducing the risk of thermal runaway propagation and minimizing the likelihood of rupture of the battery module, the battery pack, or the energy storage container.

To further enhance safety, the explosion vent manifold is to be insulated from the battery modules. Typically, a high-performance insulation material like PTFE pipe is used to connect the explosion vent manifold to the explosion vent ports of the battery modules. However, during actual use, it has been found that PTFE pipe may deform as the thermal runaway temperature rises, compromising the sealing integrity at this part. This may lead to thermal runaway gases leaking from this part, potentially spreading throughout the entire container. Even more critically, at high temperatures, the PTFE pipe may melt, potentially blocking the explosion vent ports or the explosion vent manifold, which may lead to even more severe safety hazards.

On the basis of this, Embodiments 14 to 18 provide an explosion venting pipe assembly in which a high-temperature resistant insulating pipe is introduced, and the high temperature herein refers to the maximum temperature of the thermal runaway gases. To facilitate the connection of the explosion venting pipe assembly with the explosion vent ports of the battery module and the explosion vent manifold, metal pipes are connected to two ends of the high-temperature resistant insulating pipe in Embodiments 14 to 18. In other words, the explosion venting pipe assembly of Embodiments 14 to 18 includes three parts. For ease of description, these three parts may be defined as a first pipe segment, a second pipe segment, and a third pipe segment. The first pipe segment is a metal pipe configured to be sealed to an explosion vent port of the battery module. The second pipe segment is a high-temperature resistant insulating pipe. The third pipe segment is a metal pipe configured to be connected to the explosion vent manifold.

It is to be noted that:
1. The explosion venting pipe assembly of Embodiments 14 to 18 may be applied to various battery modules with different structures. For example, it may be applied to the battery modules disclosed in Chinese patent applications CN117477186A, CN117477063A, and CN115275453A.

Such battery modules all include a plurality of battery cells and a shared chamber in communication with the inner cavities of the plurality of battery cells (the shared chamber here corresponds to the first hollow component or the second hollow component in CN117477186A, the hollow component in CN117477063A, or the electrolyte shared channel in CN115275453A).

Embodiments 14 to 18 use one end of the shared chamber above as the explosion vent port of the battery module, which is sealed to the first pipe segment of the explosion venting pipe assembly.

The explosion venting pipe assembly of Embodiments 14 to 18 may also be applied to the battery modules disclosed in Chinese patent application CN220324596U. Such a battery module includes a housing and a plurality of battery cells arranged within the housing. The inner cavities of the plurality of battery cells are in communication with the inner cavity of the housing, and the housing is provided with an explosion vent port. In Embodiments 14 to 18, the first pipe segment of the explosion venting pipe assembly is sealed to this explosion vent port.

2. The explosion venting pipe assembly of Embodiments 14 to 18 may also be applied to battery cells and be in communication with the explosion vent ports of the plurality of battery cells. For example, it may serve as the explosion venting pipe in the battery disclosed in Chinese patent application CN113725552A, communicating the explosion vent ports of the plurality of battery cells with the explosion vent manifold.

In the following embodiments, the description mainly takes applicability to different battery modules as an example.

Embodiments 14 to 18 further provide a battery module, which includes a battery module and the explosion venting pipe assembly above sealed to the explosion vent port of the battery module.

Embodiments 14 to 18 further provide a battery pack including the battery modules above, including a battery pack support frame, an explosion vent manifold, and a plurality of battery modules above fixed to the battery pack support frame. A third pipe segment of an explosion venting pipe assembly in each battery module is sealed to the explosion vent manifold.

The following provides a further description of Embodiments 14 to 18 with reference to the drawings.

### Embodiment 14

This embodiment provides an explosion venting pipe assembly 41, the structure of which is shown in FIGS. 42 and 43. It mainly includes three pipe segments segmented together. In the left-to-right direction shown in the drawings, the three pipe segments may be defined as the first pipe segment 411, the second pipe segment 412, and the third pipe segment 413, respectively.

The first pipe segment 411 is a metal pipe for sealingly connecting to the battery explosion vent port. It is typically made of aluminum, which is the same material as the housing of the battery, but other metals, such as stainless steel, may be used. The sealing connection to the battery explosion vent port may be achieved by welding, a threaded connection, an interference fit, or the like.

The second pipe segment 412 is a high-temperature resistant insulating pipe, of which at least part of the structure is made of insulation material. Its main function is to provide insulation, isolating the explosion vent manifold from each battery (where the battery herein refers to a battery module or a battery cell).

It is to be noted that at least part of the structure is made of insulation material, which mainly includes the following two configurations:
1. The entire structure of the second pipe segment 412 is made of insulation material.
2. The main structure of the second pipe segment 412 may be a metal pipe, with a layer made of insulation material coated over the entire surface.

After thermal runaway occurs, the battery temperature rises sharply, reaching over 500°C. If the selected insulation material may not remain stable at this temperature, the following problems may arise:
a. If the entire structure of the second pipe segment 412 is made of such insulation material, the sealing integrity at the connection parts between the second pipe segment 412 and the first pipe segment 411 and the third pipe segment 413 may not be guaranteed, leading to leakage of thermal runaway gases. More seriously, if the second pipe segment 412 melts due to high temperature, it may block the explosion vent port or the explosion vent manifold, causing even more severe safety hazards.
b. If the entire surface of the second pipe segment 412 is coated with a layer made of insulation material, melting or deformation of the coating layer may cause thermal runaway gases to leak from the connection parts between the second pipe segment 412 and the first pipe segment 411 and the third pipe segment 413, while also compromising the insulation performance of the second pipe segment 412.

On the basis of the problems above, the insulation material selected in Embodiments 14 to 18 is also to have certain high-temperature resistance to ensure that the properties remain unchanged, and it may remain stable when thermal runaway occurs.

A commonly used high-temperature resistant insulation material is ceramic. In this embodiment, a ceramic pipe member is directly selected as the second pipe segment 412, which is relatively simple in terms of cost and processing. For example, ceramic materials such as cubic boron nitride, hexagonal boron nitride, aluminum oxide, silicon carbide, or the like may be selected.

In other embodiments, the second pipe segment 412 may be formed by spraying a high-temperature resistant insulating coating on the surface of a metal pipe member. The high-temperature resistant insulating coating may be a phosphate-based inorganic binder coating, a plasma-sprayed Al₂O₃ coating, or the like. However, compared with this embodiment, the cost and processing are relatively more complex.

The third pipe segment 413 is a metal pipe for connection to the explosion vent manifold. Its material may be the same as that of the first pipe segment 411, typically aluminum metal, which is the same as the material of the housing of the battery, but other metals may be used. The sealing connection to the explosion vent manifold may be achieved by welding, a threaded connection, an interference fit, or the like.

As can be seen from FIG. 43, in this embodiment, the second pipe segment 412 is connected to the first pipe segment 411 and the third pipe segment 413 in a sleeving manner, and a stepped structure is disposed at the sleeving part to enhance the sealing integrity at the sleeving part. At the sleeving part, conventional methods for connecting ceramic and metal may be used to achieve sealed fixation. For example, adhesive bonding, brazing, solid-state diffusion bonding, or the like may be used.

### Embodiment 15

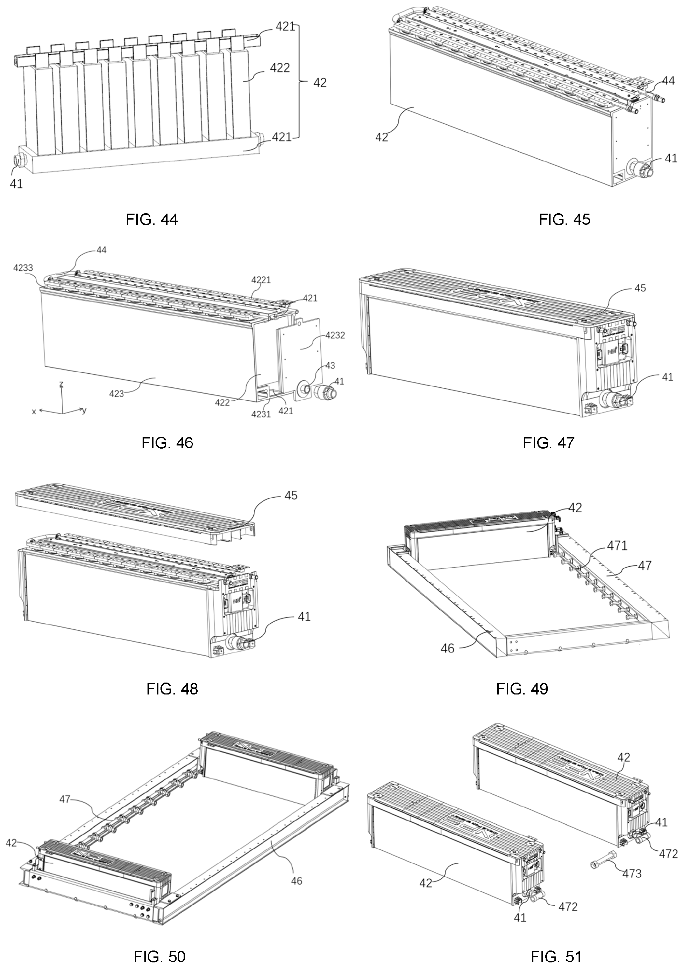

This embodiment provides a battery module having the explosion venting pipe assembly 41 of Embodiment 14. The specific structure is shown in FIG. 44 and includes a battery module 42 and the explosion venting pipe assembly 41 from Embodiment 14.

The battery module 42 includes a plurality of battery cells 422 and a shared chamber 421 in communication with the inner cavities of the plurality of battery cells 422.

It is to be noted that:
1. The shared chamber 421 described above may be an electrolyte shared chamber (the shared chamber 421 located at the bottom of each battery cell 422 in FIG. 44). The electrolyte shared chamber allows the plurality of battery cells 422 to be in a uniform electrolyte environment, ensuring the uniformity of the electrolyte within each battery cell 422 and thereby enhancing the performance and charge/discharge cycle life of the battery pack. The shared chamber 421 above may be a gas shared chamber(the shared chamber 421 located at the top of each battery cell 422 in FIG. 44). The gas shared chamber enables gas balance of all of the plurality of battery cells 422, which may also enhance the performance and charge/discharge cycle life of the battery pack. The shared chamber 421 above may further be a gas-liquid shared chamber (see Chinese patent application CN117477063A). A gas-liquid shared chamber allows the plurality of battery cells 422 to be in a uniform electrolyte and gas environment, thereby enhancing the performance and charge/discharge cycle life of the battery pack.
2. The battery cell 422 described above is a prismatic battery, which includes an upper cover plate, a lower cover plate, a cylindrical body, a core assembly, and an electrolyte. The upper cover plate, the lower cover plate, and the cylindrical body may be integrally formed.

In Embodiments 14 to 18, the core assembly described herein may be referred to as an electrode assembly, which is arranged in the order of a positive electrode, a separator, and a negative electrode, and is assembled using a stacking or winding process. The upper cover plate, the cylindrical body, and the lower cover plate form the housing of the battery cell 422, with the core assembly and electrolyte located within the housing of the battery cell 422. The inner cavity of the housing is in communication with the inner cavity of the shared chamber 421 via an opening in the housing.

In Embodiments 14 to 18, the core assembly described herein may be a commercially available prismatic battery with through holes, which is in communication with the inner cavity of the shared chamber 421 via the through holes and the opening in the housing.

As can be seen from FIG. 44, in this embodiment, an explosion vent port is disposed on one end of the electrolyte shared chamber, and the explosion venting pipe assembly 41 is connected to the explosion vent port. In particular, the first pipe segment 411 of the explosion venting pipe assembly 41 may be welded to one end of the electrolyte shared chamber and in communication with the explosion vent port.

### Embodiment 16

This embodiment provides another battery module having the explosion venting pipe assembly 41 of Embodiment 14. The specific structure is shown in FIGS. 45 and 46, and includes a battery module 42 and the explosion venting pipe assembly 41 from Embodiment 14.

The battery module 42 in this embodiment includes a housing 423 and a plurality of battery cells 422 arranged in parallel within the housing 423.

In this embodiment, the plurality of battery cells 422 are prismatic batteries, with a total of thirteen cells. In other embodiments, the number may be adjusted according to actual needs. The inner cavity of each battery cell 422 includes an electrolyte region and a gas region.

The inner cavity of the housing 423 is in communication with the inner cavity of each battery cell 422. The communication described above may be achieved by providing a shared chamber 421 in the housing 423, such that the inner cavity of the shared chamber 421 is in communication with the inner cavities of all of the plurality of battery cells 422.

For convenience of description, in this embodiment, the length direction of the housing 423 is defined as an x direction, the width direction of the housing 423 is defined as a y direction, and the height direction of the housing 423 is defined as a z direction.

As shown in FIG. 46, in a bottom plate 4231 of the housing, an electrolyte shared chamber is disposed along the x direction (the shared chamber 421 located at the bottom of each battery cell 422 in FIG. 46). The inner cavity of the electrolyte shared chamber is in communication with the electrolyte region of the inner cavity of each battery cell 422.

In a top plate 4233 of the housing, a gas shared chamber is disposed along the x direction (the shared chamber 421 located at the top of each battery cell 422 in FIG. 46). The inner cavity of the gas shared chamber is in communication with the gas region of the inner cavity of each battery cell 422.

In other embodiments, only the electrolyte shared chamber or the gas shared chamber may be disposed. Additionally, a gas-liquid shared chamber may be disposed along the x direction in the first side plate (the side plate parallel to the xz plane) of the housing 423. The inner cavity of the gas-liquid shared chamber is in communication with the electrolyte region and the gas region of the inner cavity of each battery cell 422.

Through holes, in communication with the electrolyte shared chamber, are formed in the end plate 4232 (the side plate parallel to the yz plane) of the housing 423, and an explosion venting pipe 43 is connected to the through hole. An explosion vent membrane is fixed within the explosion venting pipe 43, serving as the explosion vent port of the battery module 42. The explosion venting pipe assembly 41 is connected to the explosion venting pipe 43. In particular, the first pipe segment 411 of the explosion venting pipe assembly 41 is sealed to the explosion venting pipe 43 by a threaded connection.

In other embodiments, the explosion vent membrane may be directly fixed in the through hole of the end plate 4232 of the housing 423 to serve as the explosion vent port of the battery module 42, with the first pipe segment 411 of the explosion venting pipe assembly 41 welded to the end plate 4232 of the housing 423 and in communication with the explosion vent port.

As shown in FIGS. 45 and 46, clearance holes through which the polarity terminals 4221 of the plurality of battery cells 422 may extend are formed in the top plate 4233 of the housing of the battery pack in this embodiment. The polarity terminals 4221 of the plurality of battery cells 422 extend through the corresponding clearance holes, and the regions of the housing 423 surrounding the clearance holes are fixedly sealed to the casings of the plurality of battery cells 422.

It is to be noted that the polarity terminal 4221 of the battery cell 422 described herein may be the electrode post terminal of the battery cell 422. If the electrode post terminal of the battery cell 422 may not smoothly extend through the clearance hole when used directly as the polarity terminal 4221, an electrode post terminal adapter member may be connected to the electrode post terminal of the battery cell 422, and the combined structure of the electrode post terminal and the electrode post terminal adapter member of the battery cell 422 may serve as the polarity terminal 4221 of the battery cell 422.

In this embodiment, the integrated structure formed by the electrode post terminal and the electrode post terminal adapter member of the battery cell 422 is regarded as the polarity terminal 4221 of the battery cell 422.

In this embodiment, a through groove is formed in the part where the polarity terminals 4221 of the plurality of battery cells 422 extend through the clearance holes, serving as a clamping portion of a liquid cooling pipe 44. The liquid cooling pipe 44 is fixed within the through groove. When the temperature of the battery module 42 exceeds a set threshold, a lower-temperature heat transfer medium is introduced into the liquid cooling pipe 44 to cool the battery module 42. Conversely, when the temperature of the battery module 42 falls below the set threshold, a higher-temperature heat transfer medium is introduced into the liquid cooling pipe 44 to heat the battery module 42. By controlling the temperature of the heat transfer medium, the battery module 42 may be maintained within the normal operating temperature range.

To prevent condensation from the liquid cooling pipe 44 from causing safety problems, in this embodiment, an insulating sealing layer may be laid on the top plate 4233 of the housing. Portions of the polarity terminals 4221 of the plurality of battery cells 422 are covered by the insulating sealing layer, while the electrical connection parts (i.e., the upper end surfaces) of the polarity terminals 4221 of the plurality of battery cells 422 extend through the insulating sealing layer to be connected to the electrical connectors (on the basis of which the plurality of battery cells 422 may be connected in parallel, or the plurality of battery modules 42 may be connected in series). The main body part of the liquid cooling pipe 44 is entirely covered by the insulating sealing layer, while the inlet end and the outlet end of the liquid cooling pipe 44 extend through the insulating sealing layer for connection to a liquid cooling device.

Moreover, the polarity terminals 4221 are directly exposed to the external environment, posing significant potential safety hazards during operation due to the polarity terminals 4221 being live. On the basis of this, as shown in FIGS. 47 and 48, in this embodiment, an insulating protective cover 45 may be disposed on the top of the battery module 42 to provide insulation protection for the polarity terminals 4221. This avoids potential safety hazards caused by exposed polarity terminals 4221 during operation of the battery module 42 and also avoids foreign objects from the external environment from falling onto the polarity terminals 4221 and causing a short circuit of the battery module 42, thereby enhancing the safety of the battery module 42.

It is to be noted that if the insulating protective cover 45 completely encloses the polarity terminals 4221, the electrical connection of such battery modules 42 would be difficult. Therefore, in this embodiment, a slit is formed in the side wall of the insulating protective cover 45 parallel to the xz plane, through which the electrical connector may be connected to the polarity terminals 4221, thereby enabling the electrical connection.

It is also to be noted that channels for the inlet end and the outlet end of the liquid cooling pipe 44 to extend through are further formed in the side wall of the insulating protective cover 45.

### Embodiment 17

This embodiment provides a battery pack, the structure of which is shown in FIG. 49. The battery pack includes a battery pack support frame 46 and a plurality of battery modules according to the embodiments above fixed to the battery pack support frame 46. In this embodiment, the battery module of Embodiment 16 is taken as an example (only one of the battery modules is schematically shown in FIG. 49).

As can be seen from FIG. 49, the battery pack support frame 46 in this embodiment has a rectangular frame structure and is formed by four side beams. To enhance the energy density of the battery pack, in this embodiment, one of the side beams of the battery pack support frame 46 is a hollow component (hollow pipe member), and a plurality of branch pipes 471 in a one-to-one correspondence with the battery modules 42 are fixed thereon. Each of the plurality of branch pipes 471 may be fixed to the hollow component by a threaded connection, welding, or integral formation. The side beam is used as an explosion vent manifold 47. When the battery modules are fixed to the battery pack support frame 46, each of the plurality of branch pipes 471 is sealed to the third pipe segment 413 of the explosion venting pipe assembly 41 of the corresponding battery module, which may, for example, be achieved by an interference fit to ensure a sealed connection.

### Embodiment 18

This embodiment provides another battery pack, the structure of which is shown in FIG. 50. Unlike Embodiment 17, one side beam of the battery pack support frame 46 in this embodiment is made of I-shaped steel. The space between the upper flange and the lower flange of the I-shaped steel serves as a receiving space for the explosion vent manifold 47, allowing the manifold 47 to occupy no additional space, thereby also enhancing the energy density of the battery pack.

As shown in FIG. 51, in this embodiment, the explosion vent manifold 47 includes a plurality of three-way pipes 472 in a one-to-one correspondence with the battery modules, and flexible pipe segments 473 connecting adjacent three-way pipes 472. The first port of each three-way pipe 472 is sealed to the third pipe segment 413 of the explosion venting pipe assembly 41 of the corresponding battery module, which may be achieved, for example, by a threaded connection.

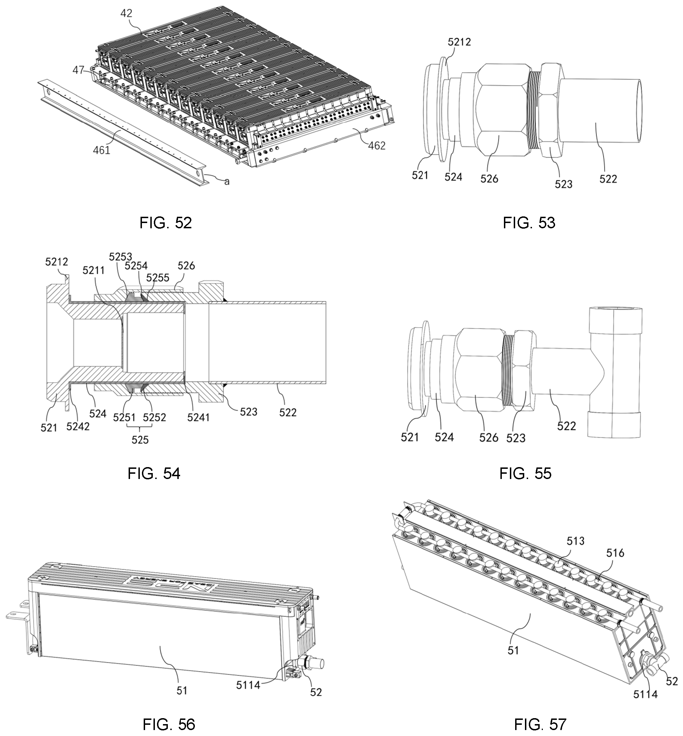

As shown in FIG. 52, to facilitate fixing the battery module to the battery pack support frame 46, in this embodiment, the battery pack support frame 46 is designed as a modular structure, including a U-shaped frame 462 and an I-shaped steel side beam 461 fixed to an opening end of the U-shaped frame 462.

During assembly, each three-way pipe is first fixed to the corresponding third pipe segment 413. The battery modules equipped with the three-way pipes are then arranged in the predetermined direction, and two adjacent three-way pipes are connected using the flexible pipe segments. Subsequently, the plurality of battery modules with the explosion vent manifold described above are fixed to the U-shaped frame 462. The I-shaped steel side beam 461 is then fixed to the open end of the U-shaped frame 462, with the explosion vent manifold 47 embedded within the inner space between the upper flange and the lower flange of the I-shaped steel side beam 461 (the region shown in FIG. 52(a)). This allows the explosion vent manifold 47 to occupy no additional space, thereby enhancing the energy density of the battery pack.

In Embodiments 14 to 18, since the explosion vent manifold is of a segmented design and the intermediate connecting pipe segments are flexible pipe segments, the deformation of the flexible pipe segments may compensate for spacing deviations between battery modules, reducing the difficulty of mounting the explosion vent manifold.

To prevent thermal runaway gases from individual battery cells within a battery module from spreading throughout the entire container and causing safety problems, Embodiments 19 to 21 collect the thermal runaway gases from all battery modules in the battery pack via an explosion vent manifold. When a battery cell in any battery module in the battery pack undergoes thermal runaway, the thermal runaway gases may be discharged via the explosion vent manifold, reducing the risk of thermal runaway propagation and minimizing the likelihood of fire or explosion of the battery modules or the battery pack.

To further enhance the safety of the battery modules, the connection between the explosion vent manifold and the battery modules needs to ensure sealing integrity and insulation. On the basis of this, Embodiments 19 to 21 provide an explosion venting pipe assembly that establishes a reliable, sealed, and insulated connection between the battery modules and the explosion vent manifold, enabling the thermal runaway gases from all battery modules in the battery pack to be collected via the explosion vent manifold.

The explosion venting pipe assembly above may be applied to various battery modules with different structures. For example, it may be applied to the battery modules disclosed in Chinese patent applications CN117477186A, CN117477063A, and CN115275453A. Each of these battery modules includes a plurality of battery cells and a shared chamber in communication with inner cavities of the plurality of battery cells (the shared chamber herein refers to the first hollow component or the second hollow component in CN117477186A, the hollow component in CN117477063A, and the electrolyte shared channel in CN115275453A). In Embodiments 19 to 21, one end of the shared chamber above serves as the explosion vent port of the battery module and is connected to the explosion venting pipe assembly.

The explosion venting pipe assembly above may also be applied to the battery module disclosed in Chinese patent application CN220324596U. Such a battery module includes a housing and a plurality of battery cells arranged within the housing. The inner cavities of the plurality of battery cells are in communication with the inner cavity of the housing, and the housing is provided with an explosion vent port. In Embodiments 19 to 21, the explosion venting pipe assembly is sealed to this explosion vent port.

The explosion venting pipe assembly above may also be applied to battery cells and be in communication with the explosion vent ports of the plurality of battery cells. For example, it may serve as the explosion venting pipe in the battery disclosed in Chinese patent application CN113725552A, communicating the explosion vent ports of the plurality of battery cells with the explosion vent manifold.

The structure of the explosion venting pipe assembly is described in detail below in an example of a battery module that includes a housing and a plurality of battery cells arranged within the housing.

### Embodiment 19

As shown in FIGS. 53 to 55, this embodiment provides an explosion venting pipe assembly 52, which is primarily configured to connect the battery module to the explosion vent manifold, thereby enabling the controlled discharge of thermal runaway gases from the battery module. The explosion venting pipe assembly 52 includes a first connecting pipe 521, a second connecting pipe 522, and a connecting assembly. The first connecting pipe 521 is configured to be sealed to the explosion vent port 5114 of the battery module 51, and an explosion vent membrane 5211 is disposed within the first connecting pipe 521. The second connecting pipe 522 is configured to be connected to the explosion vent manifold 53. The connecting assembly enables the connection between the first connecting pipe 521 and the second connecting pipe 522. This connecting assembly has a structure similar to a sleeve-type connector and is configured to achieve a quick, reliable, sealed, and insulated connection between the battery module 51 and the explosion vent manifold 53.

The first connecting pipe 521 above is a straight metal pipe configured to be sealed to the explosion vent port 5114 of the battery module 51. It is generally made of aluminum, the same metal as the housing 511 of the battery module 51, but other metals, such as stainless steel, may be used. The first connecting pipe may be sealed to the explosion vent port 5114 of the battery module 51 by welding, a threaded connection, or an interference fit. After connection, it is necessary to ensure that the first connecting pipe 521 is in communication with the inner cavity of the housing 511 of the battery module 51.

During the specific connection, as shown in FIGS. 53 and 54, the first connecting pipe 521 above is provided with an annular limiting boss 5212, and the annular limiting boss 5212 is inserted into the explosion vent port 5114 of the battery module 51 to fix the first connecting pipe 521. This connection method not only enables accurate mounting of the first connecting pipe 521 but also facilitates sealing at the connection part between the first connecting pipe 521 and the battery module 51.

As shown in FIG. 54, an explosion vent membrane 5211 is mounted within the first connecting pipe 521 above. The explosion vent membrane 5211 may be made of either a plastic sheet or a metal sheet. If a plastic sheet is used, the explosion vent membrane 5211 would need to be fixed to the first connecting pipe 521 by bonding. However, bonding may not provide sufficient pressure resistance, potentially causing unintended venting. Therefore, in this embodiment, the explosion vent membrane 5211 is made of a metal sheet and is fixed to the first connecting pipe 521 by welding. To facilitate welding, the explosion vent membrane 5211 is preferably made of an aluminum sheet. To facilitate welding of the explosion vent membrane 5211, in this embodiment, the explosion vent membrane 5211 is welded to the port of the side of the first connecting pipe 521 away from the explosion vent port 5114 of the battery module 51. In addition, to further ensure that the explosion vent membrane 5211 may rupture to relieve pressure under the force of thermal runaway gases, an annular groove is formed in the central region of the explosion vent membrane 5211 to create a weakened explosion venting region. The annular groove may effectively ensure that the weakened explosion venting region ruptures when the pressure rises to 0.6 MPa to 0.8 MPa.

The second connecting pipe 522 above is configured to be connected to the explosion vent manifold 53, and the explosion vent manifold 53 directs the thermal runaway gases from a plurality of battery modules 51 for collection. The second connecting pipe 522 may specifically adopt the following structures:
1. As shown in FIG. 55, the second connecting pipe 522 is a three-way pipe, a first port of the second explosion vent component being configured to be sealed to the pipe seat 523, and a second port of the second explosion vent component and a third port of the second explosion vent component thereof being configured to be connected to flexible pipe segments forming an explosion vent manifold.

The second connecting pipe 522 is a three-way pipe, with the three-way pipe segments of adjacent battery modules 51 connected via flexible pipe segments to form an explosion vent manifold 53. This design imposes relatively low requirements on the mounting accuracy of the explosion venting pipe assemblies 52 of the battery modules 51. Any mounting deviations of the explosion venting pipe assemblies 52 may be accommodated by deformation of the flexible pipe segments 531, reducing the difficulty of mounting the explosion vent manifold 53.

2. As shown in FIGS. 53 and 54, the second connecting pipe 522 is a flexible hollow pipe member, one end of the flexible hollow pipe member being configured to be sealed to the pipe seat 523, and the other end being configured to be connected to the explosion vent manifold 53. In a specific connection, the second connecting pipe 522 may be fixed to the explosion vent manifold 53 by welding or by a threaded connection. The flexible hollow pipe member is a corrugated pipe, which may be a metal corrugated pipe or a plastic corrugated pipe. However, such a corrugated pipe needs to meet at least the following two requirements: 1. High-temperature resistance (able to withstand the temperature of thermal runaway gases), that is, the corrugated pipe may not deform during a thermal runaway event. 2. Corrosion resistance, that is, the corrugated pipe may not be corroded or deformed upon contact with thermal runaway gases or any substances released during thermal runaway.

The second connecting pipe 522 is a flexible hollow pipe member. The flexible hollow pipe member is connected to a non-segmented, integral explosion vent manifold 53, imposing relatively low requirements on the mounting accuracy of the explosion venting pipe assemblies 52 of the battery modules 51. Any mounting deviations of the explosion venting pipe assemblies 52 may be accommodated by deformation of the flexible hollow pipe members, reducing the difficulty of mounting the explosion vent manifold 53. Moreover, by using a non-segmented, integral explosion vent manifold 53, the risk of leakage is reduced to some extent.

The first connecting pipe 521 and the second connecting pipe 522 described above are sealingly and insulatedly connected via the connecting assembly. After connection, the first connecting pipe 521 is insulated from the second connecting pipe 522, and a reliable seal is maintained between the first connecting pipe 521 and the second connecting pipe 522.

As shown in FIG. 54, in this embodiment, the connecting assembly includes a pipe seat 523, an insulating sleeve 524, a sealing member 525, and a locking nut 526. The pipe seat 523 is fixed to an end portion of the second connecting pipe 522, through holes being formed inside the pipe seat and external threads being disposed on an outer wall thereof. The insulating sleeve 524 is sleeved over the first connecting pipe 521. First stepped holes are formed in the locking nut 526, a large-diameter portion of each of the first stepped holes being a threaded hole. The locking nut 526 and the pipe seat 523 are sleeved over the insulating sleeve 524, and the locking nut 526 is threaded to the pipe seat 523. The sealing member 525 is sleeved over the insulating sleeve 524 and is compressed between a stepped surface of the first stepped hole of the locking nut 526 and an end surface of the pipe seat 523 to achieve sealing between the pipe seat 523 and the locking nut 526.

The pipe seat 523 above is connected to the second connecting pipe 522. In a specific connection, it may be fixed to the end portion of the second connecting pipe 522 by welding, a threaded connection, or the like.

The insulating sleeve 524 above is sleeved over the first connecting pipe 521 and primarily serves to provide insulation between the first connecting pipe 521 and the second connecting pipe 522. Since thermal runaway gases are at high temperatures and may contain corrosive gases or molten impurities, the insulating sealing sleeve needs to be made of a material that is resistant to high temperatures and corrosion.

In this embodiment, the insulating sleeve 524 may be made of a perfluoro rubber sleeve. Perfluoro rubber sleeves are generally suitable for continuous use at temperatures of 260°C to 290°C, may withstand long-term exposure up to 316°C, and may tolerate short-term exposure up to 360°C. Moreover, at room temperature, the insulation resistance of perfluoro rubber is generally above 10¹³ Ω, a level of electrical insulation that other high-temperature rubber materials typically do not provide. Furthermore, the insulation resistance of perfluoro rubber increases with rising temperature and may maintain a sufficient level of insulation even at high temperatures.

The sealing member 525 above primarily ensures the sealing integrity between the locking nut 526 and the pipe seat 523. It may specifically take the form of an O-ring or other sealing ring structures. After mounting, the sealing member 525 is compressed between the stepped surface of the first stepped hole of the locking nut 526 and the end surface of the pipe seat 523, thereby achieving sealing.

As shown in FIG. 54, in this embodiment, the sealing member 525 includes a first sealing ring 5251 and a second sealing ring 5252 disposed along the axial direction. The first sealing ring 5251 is in contact with the stepped surface of the locking nut 526 to form a first conical seal 5253, while the second sealing ring 5252 is in contact with the end surface of the pipe seat 523 to form a second conical seal 5254. The first sealing ring 5251 is in contact with the second sealing ring 5252 to form a third conical seal 5255. Mating angles of the first conical seal 5253, the second conical seal 5254, and the third conical seal 5255 are different. The first sealing ring 5251 and the second sealing ring 5252 form a triple-conical seal, which significantly enhances the sealing performance between the pipe seat 523 and the locking nut 526, thereby ensuring the safety of the battery module 51 during operation.

In addition, in this embodiment, as shown in FIG. 54, an inward annular inner stop edge 5241 is disposed on the end portion of the insulating sleeve 524 close to the second connecting pipe 522. The through hole in the pipe seat 523 is a second stepped hole. The annular inner stop edge 5241 is compressed between the end surface of the first connecting pipe 521 and the stepped surface of the second stepped hole, thereby achieving sealing between the pipe seat 523 and the first connecting pipe 521. An inner diameter of the annular inner stop edge 5241 is smaller than an inner diameter of the first connecting pipe 521 and is smaller than a small-diameter portion of the second stepped hole. The annular inner stop edge 5241 of the insulating sleeve 524 is compressed between an end surface of the first connecting pipe 521 and a stepped surface of the second stepped hole of the pipe seat 523, achieving sealing between the pipe seat 523 and the first connecting pipe 521. This connection method provides an additional sealing layer, enhancing the sealing integrity between the first connecting pipe 521 and the second connecting pipe 522, and further ensuring the reliability of the connection between the first connecting pipe 521 and the second connecting pipe 522.

Moreover, an inner diameter of the annular inner stop edge 5241 is smaller than an inner diameter of the first connecting pipe 521 and is smaller than a small-diameter portion of the second stepped hole, such that the insulating sleeve 524 completely wraps the end portion of the first connecting pipe 521, thereby enhancing the insulation performance between the first connecting pipe 521 and the second connecting pipe 522.

In addition, an outward annular outer stop edge 5242 is disposed on an end portion of the insulating sleeve 524 close to the housing 511, and the annular outer stop edge 5242 is configured to abut against the housing 511 of the battery module 51, further enhancing the insulation performance of the insulating sleeve 524.

During connection of the connecting assembly above, the pipe seat 523 is first fixed to the second connecting pipe 522, and the insulating sleeve 524 is sleeved over the first connecting pipe 521. The locking nut 526 and the pipe seat 523 are then sleeved over the insulating sleeve 524. Finally, the locking nut 526 is threaded to the pipe seat 523. By rotating the locking nut 526, the sealing member 525 is compressed between the stepped surface of the first stepped hole of the locking nut 526 and the end surface of the pipe seat 523, thereby achieving sealing between the first connecting pipe 521 and the second connecting pipe 522.

### Embodiment 20

As shown in FIGS. 56 to 59, this embodiment provides a battery module 51, which includes a housing 511 and a plurality of battery cells 512 arranged within the housing 511 in the same direction. In this embodiment, the plurality of battery cells 512 are prismatic batteries, and the number thereof may be adjusted according to actual requirements. The inner cavity of each battery cell 512 includes an electrolyte region and a gas region. After the plurality of battery cells 512 are arranged within the housing 511 in the same direction, clearance holes 5113 corresponding to the polarity terminals 513 of the plurality of battery cells 512 are formed in the top plate of the housing 511. The polarity terminals 513 of the plurality of battery cells 512 extend through the corresponding clearance holes 5113 to serve as the polarity terminals 513 of the battery module 51 (the polarity terminals 513 of all of the plurality of battery cells 512 on one side serve as the positive polarity terminal of the battery module 51, while the polarity terminals 513 of all of the plurality of battery cells 512 on the other side serve as the negative polarity terminal of the battery module 51). The regions of the top plate of the housing 511 corresponding to the clearance holes 5113 are fixedly sealed to the casings of the plurality of battery cells 512.

It is to be noted that the polarity terminal 513 of the battery cell 512 described herein may be the electrode post terminal of the battery cell 512. If the electrode post terminal of the battery cell 512 may not smoothly extend through the clearance hole 5113 when used directly as the polarity terminal, an electrode post terminal adapter member may be connected to the electrode post terminal of the battery cell 512, and the combined structure of the electrode post terminal and the electrode post terminal adapter member of the battery cell 512 may serve as the polarity terminal 513 of the battery cell 512.

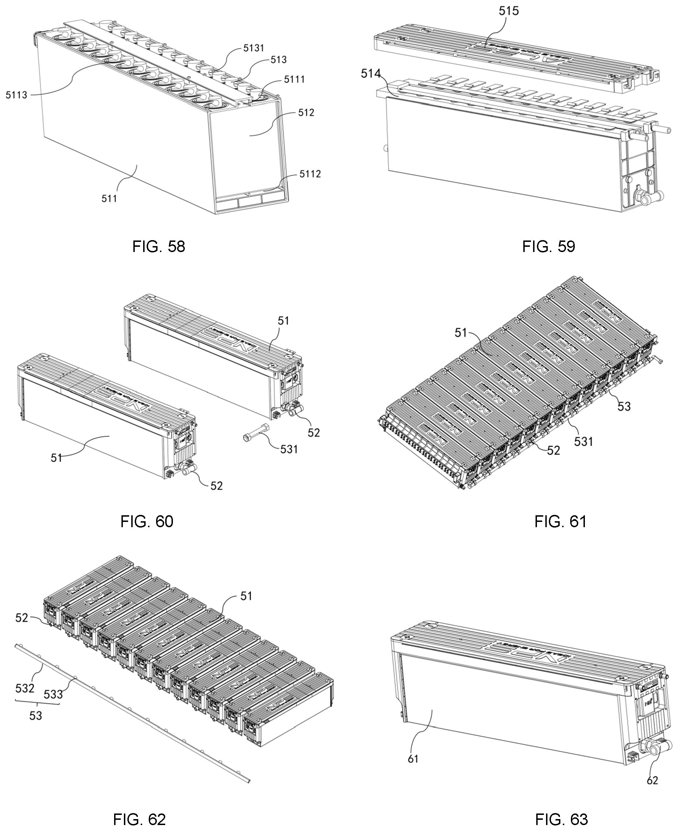

As shown in FIG. 58, the inner cavity of the housing 511 above is in communication with the inner cavities of the plurality of battery cells 512. The communication described above may be achieved by providing a shared chamber in the housing 511, such that the inner cavity of the shared chamber is in communication with the inner cavities of all of the plurality of battery cells 512.

The shared chamber above may be an electrolyte shared chamber 5112. The inner cavity of the electrolyte shared chamber 5112 is in communication with the electrolyte regions of the inner cavities of all of the plurality of battery cells 512. The electrolyte shared chamber 5112 allows the plurality of battery cells 512 to be in a uniform electrolyte environment, ensuring the uniformity of the electrolyte within each battery cell 512 and thereby enhancing the performance and charge/discharge cycle life of the battery module 51. In this embodiment, the electrolyte shared chamber 5112 is a liquid channel disposed between the bottom plate of the housing 511 and the bottoms of the plurality of battery cells 512.

The shared chamber above may be a gas shared chamber 5111. The inner cavity of the gas shared chamber 5111 is in communication with the gas regions of the inner cavities of all of the plurality of battery cells 512. The gas shared chamber 5111 enables gas balance of all of the plurality of battery cells 512, which may also enhance the performance and charge/discharge cycle life of the battery module 51. In this embodiment, the gas shared chamber 5111 is a gas channel disposed in the top plate of the housing 511. In this case, a protrusion extending along the arrangement direction of the plurality of battery cells 512 is disposed on the top plate of the housing 511, with a gas channel formed at the protrusion part.

The shared chamber above may be a gas-liquid shared chamber. The inner cavity of the gas-liquid shared chamber is in communication with the electrolyte regions and the gas regions of the inner cavities of all of the plurality of battery cells 512. A gas-liquid shared chamber allows the plurality of battery cells 512 to be in a uniform electrolyte and gas environment, thereby enhancing the performance and charge/discharge cycle life of the battery module 51.

As shown in FIG. 58, in this embodiment, a through groove 5131 is formed in the part where the polarity terminals 513 of the plurality of battery cells 512 extend through the clearance holes 5113. The heat transfer pipe 516 is fixed within the through groove 5131. When the temperature of the battery module 51 exceeds a set threshold, a lower-temperature heat transfer medium is introduced into the heat transfer pipe 516 to cool the battery module 51. Conversely, when the temperature of the battery module 51 falls below the set threshold, a higher-temperature heat transfer medium is introduced into the heat transfer pipe 516 to heat the battery module 51. By controlling the temperature of the heat transfer medium, the battery module 51 may be maintained within the normal operating temperature range.

As shown in FIG. 59, to prevent condensation from the heat transfer pipe 516 from causing safety problems, in this embodiment, an insulating sealing layer 514 may be laid on the top plate of the housing 511. Portions of the polarity terminals 513 of the plurality of battery cells 512 are covered by the insulating sealing layer 514, while the electrical connection parts (i.e., the upper end surfaces) of the polarity terminals 513 of the plurality of battery cells 512 extend through the insulating sealing layer 514 to be connected to the electrical connectors (on the basis of which the plurality of battery cells 512 may be connected in parallel, or the plurality of battery modules 51 may be connected in series). The main body part of the heat transfer pipe 516 is entirely covered by the insulating sealing layer 514, while the inlet end and the outlet end of the heat transfer pipe 516 extend through the insulating sealing layer 514 for connection to a liquid cooling device.

The polarity terminals 513 above are directly exposed to the external environment, posing significant potential safety hazards during operation due to the polarity terminals 513 being live. On the basis of this, an insulating protective cover 515 may be disposed on the top of the battery module 51 to provide insulation protection for the polarity terminals 513. This avoids potential safety hazards caused by exposed polarity terminals 513 during operation of the battery module 51 and also avoids foreign objects from the external environment from falling onto the polarity terminals 513 and causing a short circuit of the battery module 51, thereby enhancing the safety of the battery module 51.

It is to be noted that if the insulating protective cover 515 completely encloses the polarity terminals 513, the electrical connection of such battery modules 51 would be difficult. Therefore, in this embodiment, a slit is formed in the side wall of the insulating protective cover 515, through which the electrical connector may be connected to the polarity terminals 513, thereby enabling the electrical connection. It is also to be noted that channels for the inlet end and the outlet end of the heat transfer pipe 516 to extend through are further formed in the side wall of the insulating protective cover 515.

As shown in FIGS. 56 and 57, to discharge thermal runaway gases from the housing 511 of the battery module 51 above, in this embodiment, explosion vent ports 5114 are formed in the housing 511 and are in communication with the inner cavity of the housing 511. Under normal circumstances, the explosion vent ports 5114 are in communication with the shared chamber above. An explosion venting pipe assembly 52, as described in Embodiment 19, is connected to the explosion vent port 5114. The explosion venting pipe assembly 52 directs the thermal runaway gases generated during thermal runaway of any battery cell 512 in the battery module 51 into the explosion vent manifold 53 in a controlled manner, avoiding potential safety hazards such as fire or explosion of the battery module 51.

### Embodiment 21

As shown in FIGS. 61 and 62, this embodiment provides a battery pack that includes at least two battery modules 51 as described in Embodiment 20. This configuration is intended to prevent thermal runaway gases from battery cells 512 within any single battery module 51 from spreading throughout the entire container, avoiding potential safety hazards. In this embodiment, the explosion venting pipe assemblies 52 of all the battery modules 51 in the battery pack are connected via the explosion vent manifold 53. After connection, one end of the explosion vent manifold 53 is sealed, while the other end remains open, serving as the thermal runaway gas outlet of the battery pack. When a battery cell 512 in any battery module 51 within the battery pack undergoes thermal runaway, the thermal runaway gases may be discharged via the explosion vent manifold 53, reducing the risk of fire or explosion of the battery module 51 or the battery pack.

When the explosion vent manifold 53 above is connected to the explosion venting pipe assemblies 52, it may specifically adopt the following structures:
1. The explosion vent manifold 53 may be a segmented structure, suitable when the second connecting pipe 522 is a three-way pipe.

As shown in FIGS. 60 and 61, the second connecting pipes 522 of adjacent battery modules 51 are connected via flexible pipe segments 531 to form the explosion vent manifold 53. The second connecting pipe 522 is a three-way pipe, including a horizontal pipe segment and a vertical pipe segment. The vertical pipe segment is fixedly connected to the pipe seat 523, i.e., the first port of the second explosion vent component is sealed to the pipe seat 523. The horizontal pipe segment is connected to two ends of the flexible pipe segment 531 by welding or by a threaded connection, i.e., the second port of the second explosion vent component and the third port of the second explosion vent component are connected to the flexible pipe segments 531. The flexible pipe segment 531 may specifically be a metal corrugated pipe, providing high-temperature resistance and a degree of flexibility. When the explosion vent manifold 53 is formed using the flexible pipe segments 531, the requirements on the mounting accuracy of the explosion venting pipe assemblies 52 of the battery module 51 are reduced. Any mounting deviations of the explosion venting pipe assemblies 52 may be accommodated by deformation of the flexible pipe segments 531, reducing the difficulty of mounting the explosion vent manifold 53. The assembly process of the explosion vent manifold 53 with the explosion venting pipe assemblies 52 in this structure is as follows:
First, the pipe seats 523 are fixedly connected to the first ports of the second connecting pipes 522. Then, the horizontal pipe segments of the second connecting pipes 522 are connected to two ends of the flexible pipe segments 531 by welding or by a threaded connection.

Next, the insulating sleeve 524 is sleeved over the first connecting pipe 521, and then the locking nut 526 and the pipe seat 523 are sleeved over the insulating sleeve 524.

Finally, the locking nut 526 is threaded to the pipe seat 523. By continuing to rotate the locking nut 526, the sealing member 525 is compressed between the stepped surface of the first stepped hole of the locking nut 526 and the end surface of the pipe seat 523, thereby achieving sealing between the pipe seat 523 and the locking nut 526.

In the segmented explosion vent manifold 53 above, part of the pipe segments of the explosion vent manifold 53 are flexible pipe segments 531. The deformation of the flexible pipe segments 531 may compensate for mounting errors of the explosion venting pipe assemblies 52 and spacing deviations between the battery modules 51, reducing the difficulty of mounting the explosion vent manifold 53.

2. The explosion vent manifold 53 may adopt a single-piece pipe structure, suitable when the second connecting pipe 522 is a flexible hollow pipe member.

As shown in FIG. 62, the explosion vent manifold 53 includes a main pipe 532 and a plurality of branch pipes 533 disposed on the main pipe 532. Each of the plurality of branch pipes 533 is correspondingly connected to the flexible hollow pipe member of a battery module 51. The flexible hollow pipe member may be connected to the branch pipe 533 of the explosion vent manifold 53 by welding or by a threaded connection.

During assembly of the explosion vent manifold 53 with the explosion venting pipe assemblies 52 in this structure, the process is as follows: First, the pipe seats 523 are fixedly connected to one end of each second connecting pipe 522, and then the other ends of the plurality of second connecting pipes 522 are connect to the plurality of branch pipes 533 on the main pipe 532, respectively. Next, the insulating sleeve 524 is sleeved over the first connecting pipe 521, and then the locking nut 526 and the pipe seat 523 are sleeved over the insulating sleeve 524. Finally, the locking nut 526 is threadingly connected to the pipe seat 523. By continuing to rotate the locking nut 526, the sealing member 525 is compressed between the stepped surface of the first stepped hole of the locking nut 526 and the end surface of the pipe seat 523, thereby achieving sealing between the pipe seat 523 and the locking nut 526.

In this connection structure, the flexible hollow pipe member is connected to a non-segmented, integral explosion vent manifold 53. This design imposes relatively low requirements on the mounting accuracy of the explosion venting pipe assemblies 52 of the battery modules 51 and on the spacing deviations between battery modules 51. Any mounting deviations of the explosion venting pipe assemblies 52 or spacing variations between battery modules 51 may be compensated for by deformation of the flexible hollow pipe member, reducing the difficulty of mounting the explosion venting pipe assemblies onto the explosion vent manifold 53. Moreover, by using a non-segmented, integral explosion vent manifold 53, the risk of leakage is reduced to some extent compared with a segmented explosion vent manifold 53.

To prevent thermal runaway gases from individual battery cells within a battery module from spreading throughout the entire energy storage container and causing safety problems, Embodiments 22 to 24 collect the thermal runaway gases from all battery modules in the battery pack via an explosion vent manifold. When a battery cell in any battery module in the battery pack undergoes thermal runaway, the thermal runaway gases may be discharged via the explosion vent manifold, reducing the risk of thermal runaway propagation and minimizing the likelihood of fire or explosion of the battery modules or the battery pack.

To further enhance the safety of the battery modules, the connection between the explosion vent manifold and the battery modules needs to ensure sealing and insulation. On the basis of this, Embodiments 22 to 24 provide an explosion venting pipe assembly that establishes a sealed, insulated, and high-temperature-resistant connection between the battery modules and the explosion vent manifold, enabling the thermal runaway gases from all battery modules in the battery pack to be collected via the explosion vent manifold.

The explosion venting pipe assembly above specifically includes a first connecting pipe, a second connecting pipe, and a ceramic pipe. The first connecting pipe is configured to be connected to the explosion vent port of the battery module, and the second connecting pipe is configured to be connected to the explosion vent manifold. The first connecting pipe is connected to the second connecting pipe via the ceramic pipe. The ceramic pipe is an insulating pipe, effectively providing insulation between the explosion vent manifold and the battery module. Moreover, the ceramic pipe is high-temperature resistant, avoiding deformation caused by elevated temperatures and avoiding potential leakage.

The ceramic pipe above is fixedly connected to the first connecting pipe and the second connecting pipe by threaded connections. After connection, sealing is primarily achieved by the relatively long threaded connecting segments between the ceramic pipe and the first connecting pipe and the second connecting pipe. However, during actual mounting, when the ceramic pipe is rotated and tightened with the first connecting pipe and the second connecting pipe, the relatively long threaded segments may make rotation difficult and may cause cracking at the end surfaces of the ceramic pipe, leading to an unreliable connection.

On the basis of this, the structure above is optimized by shortening the original threaded segments of the ceramic pipe. A first sealing washer and a second sealing washer are disposed at two ends of the ceramic pipe, respectively, achieving the sealing at the connection parts between the ceramic pipe and the first connecting pipe and the second connecting pipe. Since the threaded segments of the ceramic pipe are shortened, the first connecting pipe and the second connecting pipe encounter less rotational resistance when threaded onto the ceramic pipe, allowing for smoother rotation during assembly and making assembly easier. Moreover, the first sealing washer and the second sealing washer fully enclose the end surfaces of the ceramic pipe, avoiding any cracking of the end surfaces of the ceramic pipe. In addition, shortening the threaded lengths of the ceramic pipe also reduces the difficulty of manufacturing the ceramic pipe.

The ceramic pipe above, together with the first sealing washer and the second sealing washer, provides a sealed and insulated connection between the battery module and the explosion vent manifold, thereby ensuring the safety of the battery module during operation. Moreover, the structure of the explosion venting pipe assembly is relatively simple and offers excellent sealing integrity. It enables a quick and easy connection between the battery module and the explosion vent manifold, providing high assembly efficiency and facilitating convenient disassembly.

The explosion venting pipe assembly above may be applied to various battery modules with different structures. For example, it may be applied to the battery modules disclosed in Chinese patent applications CN117477186A, CN117477063A, and CN115275453A. Each of these battery modules includes a plurality of battery cells and a shared chamber in communication with inner cavities of the plurality of battery cells (the shared chamber herein refers to the first hollow component or the second hollow component in CN117477186A, the hollow component in CN117477063A, and the electrolyte shared channel in CN115275453A). In Embodiments 22 to 24, one end of the shared chamber above serves as the explosion vent port of the battery module and is connected to the explosion venting pipe assembly.

The explosion venting pipe assembly above may also be applied to the battery module disclosed in Chinese patent application CN220324596U. Such a battery module includes a housing and a plurality of battery cells arranged within the housing. The inner cavities of the plurality of battery cells are in communication with the inner cavity of the housing, and the housing is provided with an explosion vent port. In Embodiments 22 to 24, the explosion venting pipe assembly is connected to this explosion vent port.

The explosion venting pipe assembly above may also be applied to battery cells and be in communication with the explosion vent ports of the plurality of battery cells. For example, it may serve as the explosion venting pipe in the battery disclosed in Chinese patent application CN113725552A, communicating the explosion vent ports of the plurality of battery cells with the explosion vent manifold.

The structure of the explosion venting pipe assembly is described in detail below in an example of a battery module that includes a housing and a plurality of battery cells arranged within the housing.

### Embodiment 22

As shown in FIGS. 63 to 65, this embodiment provides an explosion venting pipe assembly 62, which is primarily configured to connect the battery module 61 to the explosion vent manifold, thereby enabling the controlled discharge of thermal runaway gases from the battery module 61. The explosion venting pipe assembly 62 includes a first connecting pipe 621, a second connecting pipe 622, and a connecting assembly. The first connecting pipe 621 is configured to be connected to the explosion vent port 6113 of the battery module 61, and an explosion vent membrane 6211 is disposed either within the explosion vent port 6113 of the battery module 61 or within the first connecting pipe 621. The second connecting pipe 622 is configured to be connected to the explosion vent manifold. The connecting assembly includes a ceramic pipe 623, a first sealing washer 624, and a second sealing washer 625. The two ends of the ceramic pipe 623 are connected to the first connecting pipe 621 and the second connecting pipe 622, respectively, and the first sealing washer 624 and the second sealing washer 625 ensure sealing between the ceramic pipe 623 and the first second connecting pipes 621 and the second connecting pipe 622, respectively.

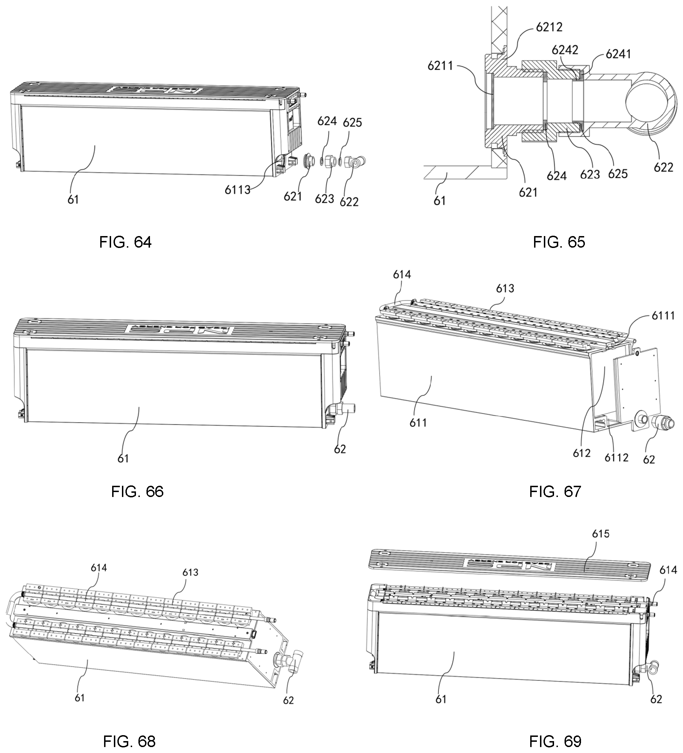

As shown in FIG. 64, the first connecting pipe 621 above is a straight metal pipe configured to be sealed to the explosion vent port 6113 of the battery module 61. It is generally made of aluminum, the same metal as the housing of the battery module 61, but other metals, such as stainless steel, may be used. The first connecting pipe may be sealed to the explosion vent port 6113 of the battery module 61 by welding, a threaded connection, or an interference fit. After connection, it is necessary to ensure that the first connecting pipe 621 is in communication with the inner cavity of the housing of the battery module 61.

During the specific connection, as shown in FIGS. 64 and 65, the first connecting pipe 621 above is provided with an annular limiting boss 6212, and the annular limiting boss 6212 is inserted into the explosion vent port 6113 of the battery module 61 to fix the first connecting pipe 621. This connection method not only enables accurate mounting of the first connecting pipe 621 but also facilitates sealing at the connection part between the first connecting pipe 621 and the battery module 61.

As shown in FIG. 65, an explosion vent membrane 6211 is mounted either within the explosion vent port 6113 of the battery module 61 above or within the first connecting pipe 621 above. The explosion vent membrane 6211 may be made of either a plastic sheet or a metal sheet. If a plastic sheet is used, the explosion vent membrane 6211 would need to be fixed by bonding. However, bonding may not provide sufficient pressure resistance, potentially causing unintended venting. Therefore, in this embodiment, the explosion vent membrane 6211 is made of a metal sheet and is fixed by welding. To facilitate welding, the explosion vent membrane 6211 is preferably made of an aluminum sheet. To facilitate welding of the explosion vent membrane 6211, in this embodiment, the explosion vent membrane 6211 is fixed to the first connecting pipe 621.

The second connecting pipe 622 above is configured to be connected to the explosion vent manifold, and the explosion vent manifold directs the thermal runaway gases from a plurality of battery modules 61 for collection. The second connecting pipe 622 may specifically adopt the following structures:
1. As shown in FIGS. 64, 65, and 70, the second connecting pipe 622 is a three-way pipe, a first port of the second explosion vent component being configured to be sealed to the ceramic pipe 623, and a second port of the second explosion vent component and a third port of the second explosion vent component thereof being configured to be connected to flexible pipe segments 631 forming an explosion vent manifold 63.

The second connecting pipe 622 is a three-way pipe, with the three-way pipe segments of adjacent battery modules 61 connected via flexible pipe segments 631 to form an explosion vent manifold 63. This design imposes relatively low requirements on the mounting accuracy of the explosion venting pipe assemblies 62 of the battery modules 61. Any mounting deviations of the explosion venting pipe assemblies 62 may be accommodated by deformation of the flexible pipe segments 631, reducing the difficulty of mounting the explosion vent manifold 63.

2. As shown in FIG. 66, the second connecting pipe 622 is a flexible hollow pipe member, one end of the flexible hollow pipe member being configured to be sealed to the ceramic pipe 623, and the other end being configured to be connected to the explosion vent manifold 63. In a specific connection, the second connecting pipe 622 may be fixed to the explosion vent manifold 63 by welding or by a threaded connection. The flexible hollow pipe member is a corrugated pipe, which may be a metal corrugated pipe or a plastic corrugated pipe. However, such a corrugated pipe at least needs to satisfy the requirements of high-temperature resistance and corrosion resistance.

The second connecting pipe 622 is a flexible hollow pipe member. The flexible hollow pipe member is connected to a non-segmented, integral explosion vent manifold 63, imposing relatively low requirements on the mounting accuracy of the explosion venting pipe assemblies 62 of the battery modules 61. Any mounting deviations of the explosion venting pipe assemblies 62 may be accommodated by deformation of the flexible hollow pipe members, reducing the difficulty of mounting the explosion venting pipe assemblies onto the explosion vent manifold 63. Moreover, by using a non-segmented, integral explosion vent manifold 63, the risk of leakage is reduced to some extent.

The first connecting pipe 621 and the second connecting pipe 622 described above achieve a sealed and insulated connection via the connecting assembly. As shown in FIGS. 64 and 65, the connecting assembly in this embodiment includes a ceramic pipe 623, a first sealing washer 624, and a second sealing washer 625. One end of the ceramic pipe 623 is connected to the first connecting pipe 621, while the other end is connected to the second connecting pipe 622. The ceramic pipe 623 is an insulating pipe, providing insulation between the explosion vent manifold 63 and the battery modules 61. Moreover, the ceramic pipe 623 is high-temperature resistant, ensuring that it does not deform during a thermal runaway event in the battery module 61, preventing leakage at the connection part. In addition, the ceramic pipe 623 is relatively low in cost and easy to manufacture. It may be made from ceramic materials such as cubic boron nitride, hexagonal boron nitride, aluminum oxide, silicon carbide, or the like.

The ceramic pipe 623 above is specifically connected to the first connecting pipe 621 by a threaded connection. In this configuration, the ceramic pipe 623 is provided with an internal thread, and the first connecting pipe 621 is provided with an external thread, allowing the connection of the ceramic pipe 623 to the first connecting pipe 621 by means of threads. Moreover, a first sealing washer 624 is disposed between the ceramic pipe 623 and the first connecting pipe 621, and the first sealing washer 624 achieves the sealing between the ceramic pipe 623 and the first connecting pipe 621.

The ceramic pipe 623 above is specifically connected to the second connecting pipe 622 by a threaded connection. In this configuration, the ceramic pipe 623 is provided with an external thread, and the second connecting pipe 622 is provided with an internal thread, allowing the connection of the ceramic pipe 623 to the second connecting pipe 622 by means of threads. Moreover, a second sealing washer 625 is disposed between the ceramic pipe 623 and the second connecting pipe 622, and the second sealing washer 625 achieves the sealing between the ceramic pipe 623 and the second connecting pipe 622.

This connection method above achieves sealing between the first connecting pipe 621, the second connecting pipe 622, and the ceramic pipe 623 via the first sealing washer 624 and the second sealing washer 625. Consequently, the threaded length of the ceramic pipe 623 may be shortened. With the shortened threaded length of the ceramic pipe 623, rotational resistance during assembly is reduced, making screwing easier. Furthermore, the end surfaces of the ceramic pipe 623 are no longer prone to cracking, ensuring a reliable connection between the battery module 61 and the explosion vent manifold 63. Moreover, the relatively short threaded length of the ceramic pipe 623 also reduces the difficulty of manufacturing the ceramic pipe 623.

The first sealing washer 624 and the second sealing washer 625 described above are generally made from materials that are high-temperature resistant and corrosion-resistant to meet operational requirements. This is necessary because thermal runaway gases may reach elevated temperatures and may contain corrosive gases or molten impurities. In this embodiment, the first sealing washer 624 and the second sealing washer 625 may specifically be made of PTFE gaskets reinforced with 20% glass fiber, or gaskets made of PEEK.

The first sealing washer 624 and the second sealing washer 625 described above may be flat gaskets. During actual connection, it has been observed that the end portion of the ceramic pipe 623 with external threads is more prone to stress concentration than the end portion with internal threads, making it more susceptible to cracking. In this case, to further enhance safety during operation, the sealing washer at the end portion of the ceramic pipe 623 with external threads is designed as a T-shaped sealing washer. A T-shaped sealing washer is described in an example where an external thread is disposed on the end portion of the ceramic pipe 623 connected to the second connecting pipe 622.

As shown in FIG. 65, in this embodiment, the second sealing washer 625 is a T-shaped sealing washer, and the T-shaped sealing washer includes a sealing portion 6241 and a bushing portion 6242. The sealing portion 6241 is disposed between the end portions of the second connecting pipe 622 and the ceramic pipe 623, and the bushing portion 6242 is disposed inside the ceramic pipe 623. The sealing portion 6241 of the T-shaped sealing washer is compressed between the first connecting pipe 621 and the end surface of the ceramic pipe 623, thereby achieving sealing between the ceramic pipe 623 and the first connecting pipe 621. The bushing portion 6242 is disposed inside the ceramic pipe 623 and, together with the sealing portion 6241, fully wraps the end portion of the ceramic pipe 623, protecting the end portion of the ceramic pipe 623 and further avoiding damage to the ceramic pipe 623 during mounting. Moreover, after mounting, the bushing portion 6242 positions the entire second sealing washer 625, avoiding misalignment or deformation of the sealing portion that could lead to unreliable sealing, thereby further ensuring sealing reliability.

### Embodiment 23

As shown in FIGS. 67 to 69, this embodiment provides a battery module 61, which includes a housing 611 and a plurality of battery cells 612 arranged within the housing 611 in the same direction. In this embodiment, the plurality of battery cells 612 are prismatic batteries, and the number thereof may be adjusted according to actual requirements. The inner cavity of each battery cell 612 includes an electrolyte region and a gas region. After the plurality of battery cells 612 are arranged within the housing 611 in the same direction, clearance holes corresponding to the polarity terminals 613 of the plurality of battery cells 612 are formed in the top plate of the housing 611. The polarity terminals 613 of the plurality of battery cells 612 extend through the corresponding clearance holes to serve as the polarity terminals of the battery module 61 (the polarity terminals of all of the plurality of battery cells on one side serve as the positive polarity terminal of the battery module, while the polarity terminals of all of the plurality of battery cells on the other side serve as the negative polarity terminal of the battery module). The regions of the top plate of the housing 611 corresponding to the clearance holes are fixedly sealed to the casings of the plurality of battery cells 612.

It is to be noted that the polarity terminal 613 of the battery cell 612 described herein may be the electrode post terminal of the battery cell 612. If the electrode post terminal of the battery cell 612 may not smoothly extend through the clearance hole when used directly as the polarity terminal 613, an electrode post terminal adapter member may be connected to the electrode post terminal of the battery cell 612, and the combined structure of the electrode post terminal and the electrode post terminal adapter member of the battery cell 612 may serve as the polarity terminal 613 of the battery cell 612.

As shown in FIG. 67, the inner cavity of the housing 611 above is in communication with the inner cavities of the plurality of battery cells 612. The communication described above may be achieved by providing a shared chamber in the housing 611, such that the inner cavity of the shared chamber is in communication with the inner cavities of all of the plurality of battery cells 612.

The shared chamber above may be at least one of the electrolyte shared chamber 6112 and the gas shared chamber 6111.

The inner cavity of the electrolyte shared chamber 6112 is in communication with the electrolyte regions of the inner cavities of all of the plurality of battery cells 612. The electrolyte shared chamber 6112 allows the plurality of battery cells 612 to be in a uniform electrolyte environment, ensuring the uniformity of the electrolyte within each battery cell 612 and thereby enhancing the performance and charge/discharge cycle life of the battery module 61. In this embodiment, the electrolyte shared chamber 6112 is a liquid channel disposed between the bottom plate of the housing 611 and the bottoms of the plurality of battery cells 612.

The inner cavity of the gas shared chamber 6111 is in communication with the gas regions of the inner cavities of all of the plurality of battery cells 612. The gas shared chamber 6111 enables gas balance of all of the plurality of battery cells 612, which may also enhance the performance and charge/discharge cycle life of the battery module 61. In this embodiment, the gas shared chamber 6111 is a gas channel disposed in the top plate of the housing 611. In this case, a protrusion extending along the arrangement direction of the plurality of battery cells 612 is disposed on the top plate of the housing 611, with a gas channel formed at the protrusion part.

The shared chamber above may be a gas-liquid shared chamber. The inner cavity of the gas-liquid shared chamber is in communication with the electrolyte regions and the gas regions of the inner cavities of all of the plurality of battery cells 612. A gas-liquid shared chamber allows the plurality of battery cells 612 to be in a uniform electrolyte and gas environment, thereby enhancing the performance and charge/discharge cycle life of the battery module 61.

As shown in FIGS. 64 and 67, to discharge thermal runaway gases from the housing 611 of the battery module 61 above, in this embodiment, explosion vent ports 6113 are formed in the housing 611 and are in communication with the inner cavity of the housing 611. Under normal circumstances, the explosion vent ports 6113 are in communication with the shared chamber above. An explosion venting pipe assembly 62, as described in Embodiment 22, is connected to the explosion vent port 6113. The explosion venting pipe assembly 62 directs the thermal runaway gases generated during thermal runaway of any battery cell 612 in the battery module 61 into the explosion vent manifold 63 in a controlled manner, avoiding potential safety hazards such as fire or explosion of the battery module 61.

As shown in FIG. 68, in this embodiment, a clamping portion is disposed in the part where the polarity terminals 613 of the plurality of battery cells 612 extend through the clearance holes. The clamping portion in this embodiment is a through groove or a through hole. The heat transfer pipe 614 is fixed within the through groove or the through hole. When the temperature of the battery module 61 exceeds a set threshold, a lower-temperature heat transfer medium is introduced into the heat transfer pipe 614 to cool the battery module 61. Conversely, when the temperature of the battery module 61 falls below the set threshold, a higher-temperature heat transfer medium is introduced into the heat transfer pipe 614 to heat the battery module 61. By controlling the temperature of the heat transfer medium, the battery module 61 may be maintained within the normal operating temperature range.

As shown in FIG. 69, to prevent condensation from the heat transfer pipe 614 from causing safety problems, in this embodiment, an insulating sealing layer may be laid on the top plate of the housing 611. Portions of the polarity terminals 613 of the plurality of battery cells 612 are covered by the insulating sealing layer, while the electrical connection parts (i.e., the upper end surfaces) of the polarity terminals 613 of the plurality of battery cells 612 extend through the insulating sealing layer to be connected to the electrical connectors (on the basis of which the plurality of battery cells 612 may be connected in parallel, or the plurality of battery modules 61 may be connected in series). The main body part of the heat transfer pipe 614 is entirely covered by the insulating sealing layer, while the inlet end and the outlet end of the heat transfer pipe 614 extend through the insulating sealing layer for connection to a liquid cooling device.

The polarity terminals 613 above are directly exposed to the external environment, posing significant potential safety hazards during operation due to the polarity terminals 613 being live. On the basis of this, an insulating protective cover 615 may be disposed on the top of the battery module 61 to provide insulation protection for the polarity terminals 613. This avoids potential safety hazards caused by exposed polarity terminals 613 during operation of the battery module 61 and also avoids foreign objects from the external environment from falling onto the polarity terminals 613 and causing a short circuit of the battery module 61, thereby enhancing the safety of the battery module 61.

It is to be noted that if the insulating protective cover 615 completely encloses the polarity terminals 613, the electrical connection of such battery modules 61 would be difficult. Therefore, in this embodiment, a slit is formed in the side wall of the insulating protective cover 615, through which the electrical connector may be connected to the polarity terminals 613, thereby enabling the electrical connection. It is also to be noted that channels for the inlet end and the outlet end of the heat transfer pipe 614 to extend through are further formed in the side wall of the insulating protective cover 615.

### Embodiment 24

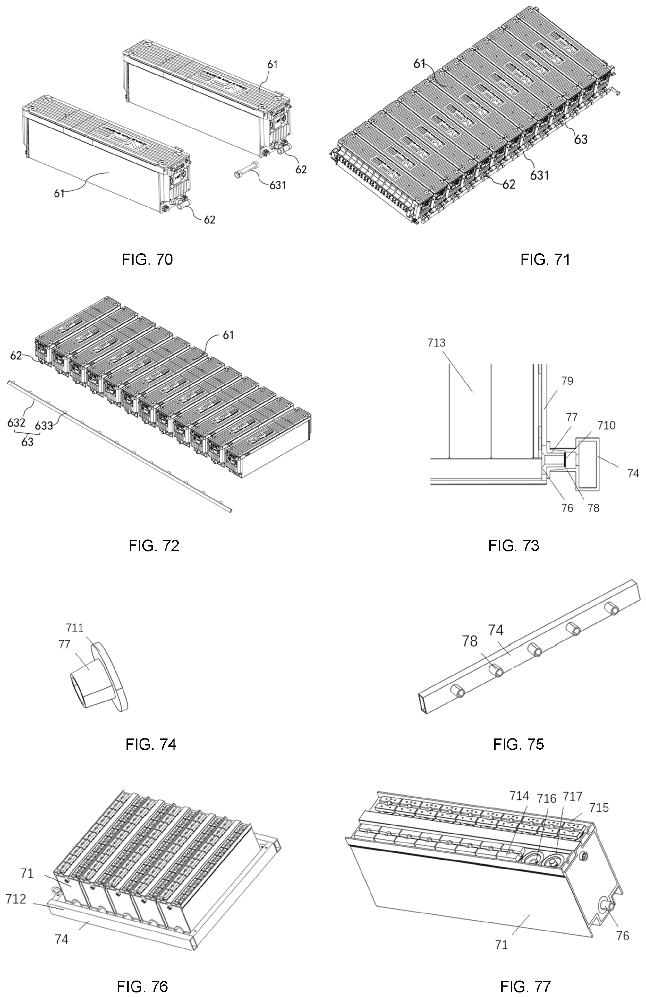

As shown in FIGS. 71 and 72, this embodiment provides a battery pack that includes at least two battery modules 61 as described in Embodiment 23. This configuration is intended to prevent thermal runaway gases from battery cells 612 within any single battery module 61 from spreading throughout the entire container, avoiding potential safety hazards. In this embodiment, the explosion venting pipe assemblies 62 of all the battery modules 61 in the battery pack are connected via the explosion vent manifold 63. After connection, one end of the explosion vent manifold 63 is sealed, while the other end remains open, serving as the thermal runaway gas outlet of the battery pack. When a battery cell 612 in any battery module 61 within the battery pack undergoes thermal runaway, the thermal runaway gases may be discharged via the explosion vent manifold 63, reducing the risk of fire or explosion of the battery module 61 or the battery pack.

When the explosion vent manifold 63 above is connected to the explosion venting pipe assemblies 62, it may specifically adopt the following structures:
1. The explosion vent manifold 63 may be a segmented structure, suitable when the second connecting pipe 622 is a three-way pipe.

As shown in FIGS. 70 and 71, the second connecting pipes 622 of adjacent battery modules 61 are connected via flexible pipe segments 631 to form an explosion vent manifold 63. The second connecting pipe 622 includes a horizontal pipe segment and a vertical pipe segment. The vertical pipe segment is fixedly connected to the ceramic pipe 623, i.e., the first port of the second explosion vent component is sealed to the ceramic pipe 623. The horizontal pipe segment is connected to two ends of the flexible pipe segment 631 by welding or by a threaded connection, i.e., the second port of the second explosion vent component and the third port of the second explosion vent component are connected to the flexible pipe segments 631. The flexible pipe segment 631 may specifically be a metal corrugated pipe, providing high-temperature resistance and a degree of flexibility. When the explosion vent manifold 63 is formed using the flexible pipe segments 631, the requirements on the mounting accuracy of the explosion venting pipe assemblies 62 of the battery module 61 are reduced. Any mounting deviations of the explosion venting pipe assemblies 62 may be accommodated by deformation of the flexible pipe segments 631, reducing the difficulty of mounting the explosion vent manifold 63.

The assembly process of the explosion vent manifold 63 with the explosion venting pipe assemblies 62 in this structure is as follows:
First, the battery modules 61 equipped with the first connecting pipe 621 are arranged in sequence. The first sealing washer 624 is inserted into the ceramic pipe 623, and the ceramic pipe 623 is then rotated, achieving the connection of the ceramic pipe 623 to the first connecting pipe 621 of each battery module 61.

Next, the second sealing washer 625 is sleeved over the end portion of the ceramic pipe 623, and the vertical pipe segment of the second connecting pipe 622 is connected to the ceramic pipe 623.

Finally, the horizontal pipe segment of the second connecting pipe 622 is connected to two ends of the flexible pipe segment 631 by welding or by a threaded connection.

In the segmented explosion vent manifold 63 above, part of the pipe segments of the explosion vent manifold 63 are flexible pipe segments 631. The deformation of the flexible pipe segments 631 may compensate for mounting errors of the explosion venting pipe assemblies 62 and spacing deviations between the battery modules 61, reducing the difficulty of mounting the explosion vent manifold 63.

2. The explosion vent manifold 63 may adopt a single-piece pipe structure, suitable when the second connecting pipe 622 is a flexible hollow pipe member.

As shown in FIG. 72, the explosion vent manifold 63 includes a main pipe 632 and a plurality of branch pipes 633 disposed on the main pipe 632. Each of the plurality of branch pipes 633 is correspondingly connected to the flexible hollow pipe member of a battery module 61. The flexible hollow pipe member may be connected to the branch pipe 633 of the explosion vent manifold 63 by welding or by a threaded connection.

During assembly of the explosion vent manifold 63 with the explosion venting pipe assembly 62 in this structure, the process is as follows: First, the battery modules 61 equipped with the first connecting pipe 621 are arranged in sequence. Each first sealing washer 624 is inserted into the ceramic pipe 623, and the ceramic pipe 623 is then rotated, achieving connection of the ceramic pipe 623 to the first connecting pipe 621 of each battery module 61. Next, the second sealing washer 625 is sleeved over the end portion of the ceramic pipe 623, and the second connecting pipe 622 is connected to the ceramic pipe 623. Finally, the second connecting pipe 622 is connected to the branch pipes 633 of the explosion vent manifold 63 by welding or by a threaded connection.

In this connection structure, the flexible hollow pipe member is connected to a non-segmented, integral explosion vent manifold 63. This design imposes relatively low requirements on the mounting accuracy of the explosion venting pipe assemblies 62 of the battery modules 61 and on the spacing deviations between battery modules 61. Any mounting deviations of the explosion venting pipe assemblies 62 or spacing variations between battery modules 61 may be compensated for by deformation of the flexible hollow pipe member, reducing the difficulty of mounting the explosion venting pipe assemblies onto the explosion vent manifold 63. Moreover, by using a non-segmented, integral explosion vent manifold 63, the risk of leakage is reduced to some extent compared with a segmented explosion vent manifold 63.

### Embodiment 25

In Embodiment 25, an explosion venting pipe assembly is disposed between the battery module and the explosion vent manifold, wherein the explosion venting pipe of the explosion venting pipe assembly and the explosion vent manifold are directly connected by plug-in engagement to enable communication between the battery module and the explosion vent manifold.

As shown in FIGS. 73 to 75, this embodiment provides an explosion venting pipe assembly including an explosion venting pipe 76, an insulating sealing sleeve 77, and a mating pipe 78. The explosion venting pipe 76 is disposed on the housing 79 of the battery module 71, and an explosion vent membrane 710 is disposed inside the explosion venting pipe 76. The insulating sealing sleeve 77 is sleeved over the explosion venting pipe 76. The mating pipe 78 is disposed on the explosion vent manifold 74, and the mating pipe 78 is inserted over the exterior of the insulating sealing sleeve 77. After connection, the explosion venting pipe 76, the insulating sealing sleeve 77, and the mating pipe 78 are substantially coaxial. The mating pipe 78 causes the insulating sealing sleeve 77 to deform, so that the outer surface of the explosion venting pipe 76 tightly engages the inner surface of the insulating sealing sleeve, and the outer surface of the insulating sealing sleeve 77 tightly engages the inner surface of the mating pipe 78, thereby ensuring airtightness.

The explosion venting pipe 76 is a straight pipe and may be directly fixed to the housing 79 of the battery module by welding, or mounted on the housing 79 of the battery module by a threaded connection (to ensure sealing, a layer of sealing adhesive may be applied on the explosion venting pipe before connection). After connection, it is necessary to ensure that the explosion venting pipe 76 is in communication with the inner cavity of the battery module 71. The explosion vent membrane 710 may be either a plastic sheet or a metal sheet. If a plastic sheet is used, the explosion vent membrane 710 would need to be fixed to the explosion venting pipe 76 by bonding. However, bonding may not provide sufficient pressure resistance, potentially causing unintended venting. Therefore, in this embodiment, the explosion vent membrane 710 is made of a metal sheet and is fixed to the explosion venting pipe 76 by welding. To facilitate welding, the explosion vent membrane is preferably made of an aluminum sheet. To facilitate welding of the explosion vent membrane 710, in this embodiment, the explosion vent membrane 710 is welded to the port of the explosion venting pipe 76 that is away from the side interfacing with the housing 79 of the battery module.

In addition, it is to be emphasized that, to ensure the structural strength of the explosion venting pipe 76 while satisfying the required venting capacity of the explosion vent membrane 710, in this embodiment, the explosion venting pipe 76 is made of 5-series, 6-series, or 7-series aluminum, whereas the explosion vent membrane 710 is made of 1-series aluminum.

In addition, in this embodiment, to further ensure that the explosion vent membrane 710 may rupture to relieve pressure under the force of thermal runaway gases, an annular groove is formed in the central region of the explosion vent membrane 710 to create a weakened explosion venting region. The annular groove may effectively ensure that the weakened explosion venting region ruptures when the pressure rises to 0.6 MPa to 0.8 MPa.

To ensure that the insulating sealing sleeve 77 has sufficient deformability and to facilitate mated mounting, in this embodiment, the insulating sealing sleeve 77 is formed in a frustoconical shape, with its larger-diameter end close to the battery module 71 and its smaller-diameter end close to the mating pipe 78.

In addition, in this embodiment, to ensure proper positioning of the insulating sealing sleeve 77 during mating between the explosion venting pipe 76 and the mating pipe 78, and to avoid the mating pipe 78 from directly contacting the housing 79 of the battery module (thereby ensuring insulation and avoiding the mating pipe from scratching the housing of the battery module), the insulating sealing sleeve 77 above is provided with an annular plate 711. The annular plate 711 is specifically disposed on the larger-diameter end of the insulating sealing sleeve 77 and is configured to abut against the housing of the battery module.

Since thermal runaway gases are at high temperatures and may contain corrosive gases or molten impurities, the insulating sealing sleeve 77 needs to be made of a material that is resistant to high temperatures and corrosion.

The mating pipe 78 may be fixed to the explosion vent manifold 74 by welding or by a threaded connection. To facilitate fabrication while ensuring airtightness, in this embodiment, the mating pipe 78 is mounted on the explosion vent manifold 74 by welding.

On the basis of the structure of the explosion venting pipe assembly above, the battery pack using this explosion venting pipe assembly is described as follows:
As shown in FIGS. 76 to 78, the battery pack includes N battery modules 71 and an installation platform 712, wherein N is greater than or equal to 2. In this embodiment, N is 5, and the number may be increased or decreased according to actual requirements.

In particular, each battery module 71 includes a housing 79 and a plurality of battery cells 713. In this embodiment, the plurality of battery cells 713 are disposed in parallel within the housing 79. At least one first through hole is disposed in a casing of each of the plurality of battery cells 713. The housing 79 is provided with an explosion venting pipe 76 in communication with an interior of the housing 79. Second through holes 716 through which first polarity terminals 714 and second polarity terminals 715 of the plurality of battery cells extend are disposed in the top of the housing 79, a region of a top of the housing 79 corresponding to each of the second through holes 716 being fixedly sealed to a top of a casing of each of the plurality of battery cells 713 corresponding to the second through hole 716.

The electrolyte within each battery cell is in communication with the electrolyte within the housing via the first through hole, thereby placing all of the plurality of battery cells in a shared electrolyte system.

It is to be noted that the first polarity terminal 714 may be the positive electrode post terminal of the battery cell or a positive electrode post terminal adapter member connected to the positive electrode post terminal. Similarly, the second polarity terminal 715 may be the negative electrode post terminal of the battery cell or a negative electrode post terminal adapter member connected to the negative electrode post terminal.

The explosion venting pipe 76 may be connected to the housing 79 by a threaded connection, such that the port on the housing 79 for mounting the explosion venting pipe 76 may be used to mount a vacuum device for vacuumizing the battery module, thereby facilitating subsequent injection of electrolyte into the battery module. The port may be used to mount an electrolyte injection/replacement device for performing electrolyte injection or replacement for the battery module.

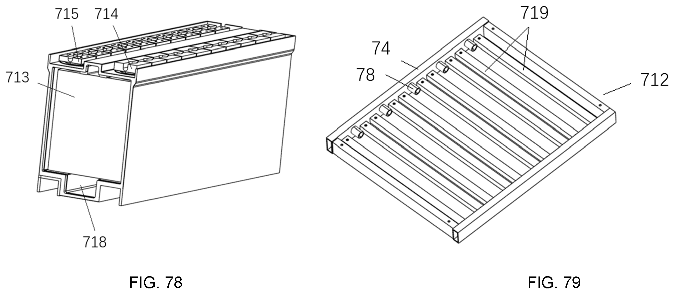

There are two ways in which the region of the top of the housing corresponding to each of the second through holes described above is fixedly sealed to the top of the housing of the battery cell corresponding to the second through hole, as shown in FIGS. 77 and 78:
1. A sealing connector is additionally disposed between the region of the top of the housing 79 corresponding to the second through hole 716 and the upper cover plate of the battery cell 713 corresponding to the second through hole 716, thereby achieving sealing. Referring to FIGS. 73 and 75, the sealing connector includes a hollow component 717. The bottom of the hollow component 717 is configured to be sealed to a first region of the battery cell 713, while the top of the hollow component 717 is sealed to a second region of the housing 79. The first region is the region surrounding any electrode post terminal on the upper cover plate of any battery cell 713, and the second region is the region at the top of the housing 79 corresponding to any one of the second through holes 716. The region corresponding to the second through hole 716 may be either the peripheral region on the outer surface of the housing 79 surrounding any one of the second through holes 716. Alternatively, the region corresponding to the second through hole 716 may be the wall of the second through hole 716. The region surrounding the electrode post terminal is the region surrounding an insulating sealing washer on the electrode post terminal. The insulating sealing washer is a component of the battery cell configured to insulate the electrode post terminal from the upper cover plate of the battery cell.
2. The region of the housing 79 surrounding the second through hole 716 may be fixedly sealed to the region of the upper cover plate surrounding the electrode post terminal of the battery cell by laser fusion welding. This method is generally applicable when the plurality of battery cells within the housing have relatively uniform dimensions in the height direction.

To facilitate smoother electrolyte injection and to achieve a more continuous liquid level of the electrolyte in the shared electrolyte system, in this embodiment, an integrally formed electrolyte channel 718 is disposed in the housing 79 of the battery module. The electrolyte channel 718 corresponds to the positions of the first through holes in the plurality of battery cells and may be formed in the top, bottom, or side wall of the housing 79.

In addition to the battery modules with a shared electrolyte system provided in this embodiment, some existing battery modules on the market are also compatible with the explosion venting pipe assembly of this embodiment. Such battery modules include a plurality of battery cells electrically connected in series, in parallel, or in a combination of series and parallel within a single housing. Each battery cell exists independently and does not remain in a shared electrolyte system. When any battery cell in such a battery module undergoes thermal runaway, the thermal runaway gas may also be discharged via the explosion venting pipe assembly.

As shown in FIG. 79, the installation platform 712 has a rectangular frame structure formed by four side beams. To save space in the energy storage device and mitigate the problem of the cumbersome assembly process resulting from separately mounting the explosion vent manifold 74, one side beam of the installation platform 712 may serve as the explosion vent manifold 74. A corresponding number of mating pipes may be disposed on this side beam according to the number of battery modules disposed on the installation platform.

To facilitate assembly, the installation platform 712 further includes a plurality of pairs of support beams 719. Each of the plurality of pairs of support beams 719 serves as a mounting position for a single battery module 71, and the position of each of the plurality of pairs of support beams 719 corresponds to a mating pipe 78.

When mounting a battery module on the installation platform, the insulating sealing sleeve 77 is first disposed over the explosion venting pipe 76. The battery module 71 is then positioned on a pair of support beams 719. Next, the battery module 71 is pushed forward so that the explosion venting pipe 76, provided with the insulating sealing sleeve 77, begins to be inserted into the mating pipe 78. The mounting of the battery module is complete when the end portion of the mating pipe 78 is in contact with the annular plate 711 on the insulating sealing sleeve 77.

It can be seen that the support beams not only serve as mounting positions for the battery modules, but also act as sliding guides when the explosion venting pipes of the battery modules are inserted into the mating pipes on the installation platform.

It is to be emphasized that, in this embodiment, the housing of the battery module is live. Therefore, insulation needs to be maintained between the housing of the battery module and the support beams. Insulation may be achieved by applying an insulating layer on the bottom of the battery module or on the support beams, or by providing a wrapping insulating film.

## Claims

1. A battery module, comprising: a housing; a plurality of battery cells arranged within the housing, inner cavities of the plurality of battery cells being in communication with an inner cavity of the housing; and an explosion venting pipe assembly disposed on the housing and in communication with the inner cavity of the housing, the explosion venting pipe assembly being configured to be connected to an explosion vent manifold.

2. The battery module as claimed in claim 1, wherein the explosion venting pipe assembly comprises a first explosion vent component and a second explosion vent component; the first explosion vent component comprises a first hollow pipe member connected to the housing, and an explosion vent membrane is disposed within the first hollow pipe member; and the second explosion vent component is a three-way pipe, a first port of the second explosion vent component being configured to be sealed to the first explosion vent component, and a second port of the second explosion vent component and a third port of the second explosion vent component being configured to be connected to flexible pipe segments forming an explosion vent manifold.

3. The battery module as claimed in claim 2, wherein the second explosion vent component is a union three-way pipe; external threads are disposed on an outer wall at an end of the first explosion vent component connected to the second explosion vent component; and a union joint of the second explosion vent component serves as the first port and is threaded to the external threads on the outer wall of the first explosion vent component.

4. The battery module as claimed in claim 3, wherein the first explosion vent component further comprises a second hollow pipe member connected to the first hollow pipe member; a material of the second hollow pipe member is an insulation material; external threads are disposed on an outer wall at an end of the first hollow pipe member connected to the second hollow pipe member; the second hollow pipe member comprises a connecting pipe and a union nut attached to one end of the connecting pipe; external threads are disposed on an outer wall at the other end of the connecting pipe; the union nut of the second hollow pipe member is threaded to the external threads on the outer wall of the first hollow pipe; and the other end of the second hollow pipe member is threaded to the union joint of the second explosion vent component.

5. The battery module as claimed in claim 4, wherein sealing washers are disposed at connection parts between the second hollow pipe member and the first hollow pipe member, and between the second hollow pipe member and the second explosion vent component.

6. The battery module as claimed in claim 1, wherein an explosion vent membrane is disposed within the explosion venting pipe assembly, and the explosion venting pipe assembly comprises a flexible hollow pipe member, one end of the flexible hollow pipe member being configured to be connected to the housing, and the other end of the flexible hollow pipe member being configured to be connected to the explosion vent manifold.

7. The battery module as claimed in claim 6, wherein the explosion venting pipe assembly further comprises a first hollow pipe member, an explosion vent membrane is disposed within the first hollow pipe member, and the flexible hollow pipe member is connected to the housing via the first hollow pipe member.

8. The battery module as claimed in claim 7, wherein the flexible hollow pipe member is a corrugated pipe having a union joint at least at one end, and the union joint of the flexible hollow pipe member is threaded to the first hollow pipe member.

9. The battery module as claimed in claim 7, wherein the explosion venting pipe assembly further comprises a second hollow pipe member made of an insulation material, one end of the second hollow pipe member being connected to the first hollow pipe member, and the other end of the second hollow pipe member being connected to the flexible hollow pipe member.

10. The battery module as claimed in claim 9, wherein the flexible hollow pipe member is a corrugated pipe having union joints at two ends, the union joints at the two ends being connected to one end of the second hollow pipe member and to the explosion vent manifold, respectively.

11. The battery module as claimed in claim 9, wherein sealing washers are disposed at connection parts between the second hollow pipe member and the first hollow pipe member, and between the second hollow pipe member and the flexible hollow pipe member.

12. The battery module as claimed in claim 1, wherein the explosion venting pipe assembly comprises a first explosion vent component and a second explosion vent component; the first explosion vent component is a hollow pipe member connected to the housing, and an explosion vent membrane is disposed within the hollow pipe member; the second explosion vent component is a three-way pipe, a first port of the second explosion vent component being configured to be sealed to the first explosion vent component, and a second port of the second explosion vent component and a third port of the second explosion vent component being configured to be connected to flexible pipe segments forming an explosion vent manifold; and the hollow pipe member and/or the three-way pipe is provided with a bending portion.

13. The battery module as claimed in claim 12, wherein the bending portion of the three-way pipe is located on a pipe segment between the second port of the second explosion vent component and the third port of the second explosion vent component.

14. The battery module as claimed in claim 13, wherein the three-way pipe is Y-shaped.

15. The battery module as claimed in claim 12, wherein the second explosion vent component is a union three-way pipe; external threads are disposed on an outer wall at an end of the hollow pipe member connected to the second explosion vent component; and a union joint of the second explosion vent component serves as the first port and is threaded to the external threads on the outer wall of the hollow pipe member.

16. The battery module as claimed in claim 1, wherein an explosion vent port is disposed in the housing, and the explosion venting pipe assembly comprises a first pipe segment, a second pipe segment, and a third pipe segment connected in sequence; the first pipe segment is a metal pipe sealed to the explosion vent port; the second pipe segment is a high-temperature resistant insulating pipe; and the third pipe segment is a metal pipe configured to be connected to the explosion vent manifold.

17. The battery module as claimed in claim 16, wherein the second pipe segment is a ceramic pipe.

18. The battery module as claimed in claim 16 or 17, wherein clearance holes corresponding to polarity terminals of each of the plurality of battery cells are disposed in a top plate of the housing; the polarity terminals of each of the plurality of battery cells extend through the clearance holes, and regions of the top plate of the housing corresponding to the clearance holes are fixedly sealed to casings of the plurality of battery cells; heat transfer pipe clamping portions are disposed at parts where the polarity terminals of each of the plurality of battery cells extend through the clearance holes; and heat transfer pipes are fixed to the heat transfer pipe clamping portions of the polarity terminals of each of the plurality of battery cells, the heat transfer pipes being insulated from the plurality of battery cells.

19. The battery module as claimed in claim 1, wherein a shared chamber is disposed within the housing, an inner cavity of the shared chamber being in communication with the inner cavities of all of the plurality of battery cells; an explosion vent port is disposed in the housing; and the explosion venting pipe assembly comprises a first connecting pipe, a second connecting pipe, and a connecting assembly; and
the first connecting pipe is connected to the explosion vent port of the battery module, and an explosion vent membrane is disposed within the first connecting pipe; the second connecting pipe is configured to be connected to the explosion vent manifold; the connecting assembly comprises a pipe seat, an insulating sleeve, a sealing member, and a locking nut; the pipe seat is fixed to an end portion of the second connecting pipe, through holes being formed inside the pipe seat and external threads being disposed on an outer wall of the pipe seat; the insulating sleeve is sleeved over the first connecting pipe; first stepped holes are formed in the locking nut, a large-diameter portion of each of the first stepped holes being a threaded hole; the locking nut and the pipe seat are sleeved over the insulating sleeve, and the locking nut is threaded to the pipe seat; and the sealing member is sleeved over the insulating sleeve and is compressed between a stepped surface of each of the first stepped holes of the locking nut and an end surface of the pipe seat to achieve sealing between the pipe seat and the locking nut.

20. The battery module as claimed in claim 19, wherein the second connecting pipe is a three-way pipe, a first port of the second explosion vent component being configured to be sealed to the pipe seat, and a second port of the second explosion vent component and a third port of the second explosion vent component being configured to be connected to flexible pipe segments forming an explosion vent manifold.

21. The battery module as claimed in claim 19, wherein the second connecting pipe is a flexible hollow pipe member, one end of the flexible hollow pipe member being configured to be sealed to the pipe seat, and the other end of the flexible hollow pipe member being configured to be connected to the explosion vent manifold.

22. The battery module as claimed in any one of claims 19 to 21, wherein each of the through holes in the pipe seat is a second stepped hole; an annular inner stop edge is disposed on an end portion of the insulating sleeve close to the second connecting pipe; the annular inner stop edge is compressed between an end surface of the first connecting pipe and a stepped surface of the second stepped hole, achieving sealing between the pipe seat and the first connecting pipe; and an inner diameter of the annular inner stop edge is smaller than an inner diameter of the first connecting pipe and is smaller than a small-diameter portion of the second stepped hole.

23. The battery module as claimed in claim 22, wherein an annular outer stop edge is disposed on an end portion of the insulating sleeve close to the explosion vent port of the battery module, the annular outer stop edge being configured to abut against the housing of the battery module.

24. The battery module as claimed in claim 22, wherein the sealing member comprises a first sealing ring and a second sealing ring arranged axially; and the first sealing ring is in contact with the stepped surface of each of the first stepped holes of the locking nut to form a first conical seal, the second sealing ring is in contact with an end surface of the pipe seat to form a second conical seal, and the first sealing ring is in contact with the second sealing ring to form a third conical seal, mating angles of the first conical seal, the second conical seal, and the third conical seal being different.

25. The battery module as claimed in claim 22, wherein an annular limiting boss is disposed on the first connecting pipe, the annular limiting boss being configured to cooperate with the explosion vent port of the battery module to fix the first connecting pipe.

26. The battery module as claimed in claim 1, wherein a shared chamber is disposed within the housing, an inner cavity of the shared chamber being in communication with the inner cavities of all of the plurality of battery cells; an explosion vent port is disposed in the housing; and the explosion venting pipe assembly comprises a first connecting pipe, a second connecting pipe, and a connecting assembly; and
the first connecting pipe is connected to the explosion vent port of the battery module, and an explosion vent membrane is disposed either within the first connecting pipe or within the explosion vent port of the battery module; the second connecting pipe is configured to be connected to the explosion vent manifold; the connecting assembly comprises a ceramic pipe, a first sealing washer, and a second sealing washer; one end of the ceramic pipe is threaded to the first connecting pipe, and the first sealing washer is disposed at a connection part between the first connecting pipe and the ceramic pipe, achieving sealing between the first connecting pipe and the ceramic pipe; and the other end of the ceramic pipe is threaded to the second connecting pipe, and the second sealing washer is disposed at a connection part between the second connecting pipe and the ceramic pipe, achieving sealing between the second connecting pipe and the ceramic pipe.

27. The battery module as claimed in claim 26, wherein external threads are disposed on one end of the ceramic pipe connected to the second connecting pipe; and the second sealing washer is a T-shaped sealing washer comprising a sealing portion and a bushing portion, the sealing portion being disposed on an end portion of the ceramic pipe, and the bushing portion being disposed inside the ceramic pipe.

28. The battery module as claimed in claim 26, wherein the first sealing washer and the second sealing washer are made of polytetrafluoroethylene or of PEEK.

29. The battery module as claimed in any one of claims 26 to 28, wherein an annular limiting boss is disposed on the first connecting pipe, the annular limiting boss being configured to cooperate with the explosion vent port of the battery module to achieve a fixed connection of the first connecting pipe.

30. The battery module as claimed in claim 29, wherein the second connecting pipe is a three-way pipe, a first port of the second explosion vent component being configured to be connected to the ceramic pipe, and a second port of the second explosion vent component and a third port of the second explosion vent component being configured to be connected to flexible pipe segments forming the explosion vent manifold.

31. The battery module as claimed in claim 29, wherein the second connecting pipe is a flexible hollow pipe member, one end of the flexible hollow pipe member being configured to be connected to the ceramic pipe, and the other end of the flexible hollow pipe member being configured to be connected to the explosion vent manifold.

32. The battery module as claimed in claim 26, wherein clearance holes corresponding to polarity terminals of the plurality of battery cells are disposed in a top plate of the housing; the polarity terminals of each of the plurality of battery cells extend through the clearance holes, and regions of the top plate of the housing corresponding to the clearance holes are fixedly sealed to casings of the plurality of battery cells; clamping portions are disposed at the parts where the polarity terminals of each of the plurality of battery cells extend through the clearance holes; and heat transfer pipes are fixed to the clamping portions of the polarity terminals of each of the plurality of battery cells, the heat transfer pipes being insulated from the plurality of battery cells.

33. The battery module as claimed in claim 1, wherein the plurality of battery cells are disposed in parallel within the housing; at least one first through hole is disposed in a casing of each of the plurality of battery cells; the housing is provided with an explosion venting pipe in communication with an interior of the housing; second through holes through which first polarity terminals and second polarity terminals of the plurality of battery cells extend are disposed in a top of the housing, a region of the top of the housing corresponding to each of the second through holes being fixedly sealed to a top of a casing of each of the plurality of battery cells corresponding to each of the second through holes; electrolytes within the plurality of battery cells are in communication with electrolytes within the housing, all of the plurality of battery cells are within a shared electrolyte system; the explosion venting pipe assembly comprises the explosion venting pipe; and an explosion vent membrane is disposed within the explosion venting pipe.

34. A battery pack, comprising an explosion vent manifold and at least two battery modules as claimed in claim 1, wherein explosion venting pipe assemblies of the at least two battery modules are in communication with the explosion vent manifold.

35. The battery pack as claimed in claim 34, comprising at least two battery modules as claimed in any one of claims 2 to 5, wherein second explosion vent components of two adjacent battery modules of the at least two battery modules are connected via a flexible pipe segment, a free end of a second explosion vent component of one of two outermost battery modules of the at least two battery modules is sealed, and a free end of a second explosion vent component of the other of the two outermost battery modules is open, serving as a thermal runaway gas outlet of the battery pack.

36. The battery pack as claimed in claim 35, wherein external threads are disposed on outer walls of joints at two ends of the second explosion vent component connected to the flexible pipe segment; union nuts are connected to two ends of the flexible pipe segment; and the union nuts of the flexible pipe segment are threaded to the external threads on the outer walls of the second explosion vent component.

37. The battery pack as claimed in claim 34, comprising n battery modules as claimed in any one of claims 6 to **11,** wherein n is an integer greater than 1; and flexible hollow pipe members of the n battery modules are all connected to the explosion vent manifold, one end of the explosion vent manifold being sealed and the other end of the explosion vent manifold being open, serving as a thermal runaway gas outlet of the battery pack.

38. The battery pack as claimed in claim 37, wherein the explosion vent manifold comprises a main pipe and n branch pipes disposed on the main pipe; the n branch pipes are in a one-to-one correspondence with the flexible hollow pipe members of the n battery modules; and each of the n branch pipes is threaded to a union joint of a corresponding flexible hollow pipe member of each of the n battery modules.

39. The battery pack as claimed in claim 34, comprising at least two battery modules as claimed in any one of claims 12 to 15, wherein second explosion vent components of two adjacent battery modules of the at least two battery modules are connected via a flexible pipe segment, a free end of a second explosion vent component of one of two outermost battery modules of the at least two battery modules is sealed, and a free end of a second explosion vent component of the other of the two outermost battery modules is open, serving as a thermal runaway gas outlet of the battery pack.

40. The battery pack as claimed in claim 39, wherein external threads are disposed on outer walls of joints at two ends of the second explosion vent component connected to the flexible pipe segment; union nuts are connected to two ends of the flexible pipe segment; and the union nuts of the flexible pipe segment are threaded to the external threads on the outer walls of the second explosion vent component.

41. The battery pack as claimed in claim 34, wherein the battery pack comprises a plurality of battery modules as claimed in any one of claims 16 to 18; the battery pack further comprises a battery pack support frame; and the plurality of battery modules are fixed to the battery pack support frame; and
third pipe segments of explosion venting pipe assemblies of the plurality of battery modules are sealed to the explosion vent manifold.

42. The battery pack as claimed in claim 41, wherein one side beam of the battery pack support frame is a hollow component serving as the explosion vent manifold; the explosion vent manifold is provided with a plurality of branch pipes in a one-to-one correspondence with the battery modules; and each of the plurality of branch pipes is sealed to each of the third pipe segments of the explosion venting pipe assembly of a corresponding battery module of the plurality of battery modules.

43. The battery pack as claimed in claim 41, wherein the explosion vent manifold comprises a plurality of three-way pipes in a one-to-one correspondence with the plurality of battery modules, and flexible pipe segments connected between adjacent three-way pipes of the plurality of three-way pipes; and a first port of each of the plurality of three-way pipes is sealed to a third pipe segment of the explosion venting pipe assembly of a corresponding battery module of the plurality of battery modules.

44. The battery pack as claimed in claim 43, wherein one side beam of the battery pack support frame is made of I-shaped steel, and the explosion vent manifold is embedded between an upper flange and a lower flange of the I-shaped steel.

45. The battery pack as claimed in claim 34, comprising n battery modules as claimed in any one of claims 19 to 25, wherein n is an integer greater than 1; and second connecting pipes of the n battery modules are all connected to the explosion vent manifold, one end of the explosion vent manifold being sealed and the other end of the explosion vent manifold being open, serving as a thermal runaway gas outlet of the battery pack.

46. The battery pack as claimed in claim 45, wherein the second connecting pipe is a three-way pipe, and the second connecting pipes of adjacent battery modules of the n battery modules are connected via flexible pipe segments to form the explosion vent manifold.

47. The battery pack as claimed in claim 45, wherein the second connecting pipe is a flexible hollow pipe member, and the explosion vent manifold comprises a main pipe and n branch pipes disposed on the main pipe, the n branch pipes being connected in a one-to-one correspondence with the second connecting pipes of the n battery modules.

48. The battery pack as claimed in claim 34, comprising n battery modules as claimed in any one of claims 26 to 32, wherein n is an integer greater than 1; and second connecting pipes of the n battery modules are all connected to the explosion vent manifold, one end of the explosion vent manifold being sealed and the other end of the explosion vent manifold being open, serving as a thermal runaway gas outlet of the battery pack.

49. The battery pack as claimed in claim 48, wherein the second connecting pipe is a three-way pipe, and the second connecting pipes of adjacent battery modules are connected via flexible pipe segments to form the explosion vent manifold.

50. The battery pack as claimed in claim 48, wherein the second connecting pipe is a flexible hollow pipe member, and the explosion vent manifold comprises a main pipe and n branch pipes disposed on the main pipe, the n branch pipes being connected in a one-to-one correspondence with the second connecting pipes of the n battery modules.

51. The battery pack as claimed in claim 34, comprising an installation platform and N battery modules as claimed in claim 33, wherein N is greater than or equal to 2; the installation platform is of a frame structure, and one side beam of the installation platform serves as an explosion vent manifold for thermal runaway gas; each of the N battery modules is sealingly and insulatedly connected to the explosion vent manifold via an explosion venting pipe assembly; the explosion venting pipe assembly further comprises an insulating sealing sleeve and a mating pipe; the insulating sealing sleeve is sleeved over the explosion venting pipe; and the mating pipe is disposed on the explosion vent manifold and is inserted over the insulating sealing sleeve.

52. The battery pack as claimed in claim 51, wherein the insulating sealing sleeve is of a truncated cone structure.

53. The battery pack as claimed in claim 51 or 52, wherein an annular plate is disposed on the insulating sealing sleeve for abutting against a housing of each of the N battery modules.

54. The battery pack as claimed in claim 53, wherein the explosion venting pipe is an aluminum straight pipe, one end of the explosion venting pipe being configured to be fixedly connected to the housing of the battery module and to communicate with an interior of the battery module, and the other end being provided with an aluminum sheet serving as an explosion vent membrane.

55. The battery pack as claimed in claim 54, wherein an annular groove is formed in a central region of the explosion vent membrane to form a weakened explosion venting region.

56. A battery module, comprising an explosion venting pipe assembly, a plurality of battery cells, and a shared chamber in communication with inner cavities of the plurality of battery cells, one end of the shared chamber serving as an explosion vent port, and the explosion venting pipe assembly comprising a first pipe segment, a second pipe segment, and a third pipe segment connected in sequence, wherein
the first pipe segment is a metal pipe sealed to the explosion vent port; the second pipe segment is a high-temperature resistant insulating pipe; and the third pipe segment is a metal pipe configured to be connected to an explosion vent manifold.

57. The battery module as claimed in claim 56, wherein the second pipe segment is a ceramic pipe.

58. A battery pack, comprising a battery pack support frame, an explosion vent manifold, and a plurality of battery modules as claimed in claim 56 or 57 fixed to the battery pack support frame, wherein a third pipe segment of an explosion vent transfer pipe of each of the plurality of battery modules is sealed to the explosion vent manifold.

59. The battery pack as claimed in claim 58, wherein one side beam of the battery pack support frame is a hollow component serving as the explosion vent manifold; the explosion vent manifold is provided with a plurality of branch pipes in a one-to-one correspondence with the battery modules; and each of the plurality of branch pipes is sealed to the third pipe segment of the explosion vent transfer pipe of a corresponding battery module.

60. The battery pack as claimed in claim 58, wherein the explosion vent manifold comprises a plurality of three-way pipes in a one-to-one correspondence with the plurality of battery modules, and flexible pipe segments connected between adjacent three-way pipes of the plurality of; and a first port of each of the plurality of three-way pipes is sealed to the third pipe segment of the explosion vent transfer pipe of a corresponding battery module of the plurality of battery modules.

61. The battery pack as claimed in claim 60, wherein one side beam of the battery pack support frame is made of I-shaped steel, and the explosion vent manifold is embedded between an upper flange and a lower flange of the I-shaped steel.

62. A battery pack, comprising N battery modules and an installation platform, wherein N is greater than or equal to 2; the installation platform is of a frame structure, and one side beam of the installation platform serves as an explosion vent manifold for thermal runaway gas; each of the N battery modules is sealingly and insulatedly connected to the explosion vent manifold via an explosion venting pipe assembly; the explosion venting pipe assembly comprises an explosion venting pipe, an insulating sealing sleeve, and a mating pipe; the explosion venting pipe is disposed on a housing of each of the N battery modules, and an explosion vent membrane is disposed within the explosion venting pipe; the insulating sealing sleeve is sleeved over the explosion venting pipe; and the mating pipe is disposed on the explosion vent manifold and is inserted over the insulating sealing sleeve.

63. The battery pack as claimed in claim 62, wherein the insulating sealing sleeve is of a truncated cone structure.

64. The battery pack as claimed in claim 62 or 63, wherein an annular plate is disposed on the insulating sealing sleeve for abutting against the housing of each of the N battery modules.

65. The battery pack as claimed in claim 64, wherein the explosion venting pipe is an aluminum straight pipe, one end of the explosion venting pipe being configured to be fixedly connected to the housing of each of the N battery modules and to communicate with an interior of each of the N battery modules, and the other end of the explosion venting pipe being provided with an aluminum sheet serving as an explosion vent membrane.

66. The battery pack as claimed in claim 65, wherein an annular groove is formed in a central region of the explosion vent membrane to form a weakened explosion venting region.

67. An explosion venting pipe assembly, wherein one end of the explosion venting pipe assembly is configured to be connected to a battery module, and the other end explosion venting pipe assembly is configured to be connected to an explosion vent manifold.

68. The explosion venting pipe assembly as claimed in claim 67, comprising a first pipe segment, a second pipe segment, and a third pipe segment connected in sequence, wherein the first pipe segment is a metal pipe configured to be sealed to an explosion vent port of the battery module; the second pipe segment is a high-temperature resistant insulating pipe; and the third pipe segment is a metal pipe configured to be connected to the explosion vent manifold.

69. The explosion venting pipe assembly as claimed in claim 68, wherein the second pipe segment is a ceramic pipe.

70. The explosion venting pipe assembly as claimed in claim 67, comprising a first connecting pipe, a second connecting pipe, and a connecting assembly, wherein the first connecting pipe is configured to be connected to the explosion vent port of the battery module, and an explosion vent membrane is disposed within the first connecting pipe; the second connecting pipe is configured to be connected to the explosion vent manifold; the connecting assembly comprises a pipe seat, an insulating sleeve, a sealing member, and a locking nut; the pipe seat is fixed to an end portion of the second connecting pipe, through holes being formed inside the pipe seat and external threads being disposed on an outer wall of the pipe seat; the insulating sleeve is sleeved over the first connecting pipe; first stepped holes are formed in the locking nut, a large-diameter portion of each of the first stepped holes being a threaded hole; the locking nut and the pipe seat are sleeved over the insulating sleeve, and the locking nut is threaded to the pipe seat; and the sealing member is sleeved over the insulating sleeve and is compressed between a stepped surface of each of the first stepped holes of the locking nut and an end surface of the pipe seat to achieve sealing between the pipe seat and the locking nut.

71. The explosion venting pipe assembly as claimed in claim 70, wherein the second connecting pipe is a three-way pipe, a first port of the second explosion vent component being configured to be sealed to the pipe seat, and a second port of the second explosion vent component and a third port of the second explosion vent component being configured to be connected to flexible pipe segments forming the explosion vent manifold.

72. The explosion venting pipe assembly as claimed in claim 70, wherein the second connecting pipe is a flexible hollow pipe member, one end of the flexible hollow pipe member being configured to be sealed to the pipe seat, and the other end of the flexible hollow pipe member being configured to be connected to the explosion vent manifold.

73. The explosion venting pipe assembly as claimed in any one of claims 70 to 72, wherein each of the through holes in the pipe seat is a second stepped hole; an annular inner stop edge is disposed on an end portion of the insulating sleeve close to the second connecting pipe; the annular inner stop edge is compressed between an end surface of the first connecting pipe and a stepped surface of the second stepped hole, achieving sealing between the pipe seat and the first connecting pipe; and an inner diameter of the annular inner stop edge is smaller than an inner diameter of the first connecting pipe and is smaller than a small-diameter portion of the second stepped hole.

74. The explosion venting pipe assembly as claimed in claim 73, wherein an annular outer stop edge is disposed on an end portion of the insulating sleeve close to the explosion vent port of the battery module, the annular outer stop edge being configured to abut against the housing of the battery module.

75. The explosion venting pipe assembly as claimed in claim 73, wherein the sealing member comprises a first sealing ring and a second sealing ring arranged axially; and the first sealing ring is in contact with the stepped surface of each of the first stepped holes of the locking nut to form a first conical seal, the second sealing ring is in contact with the end surface of the pipe seat to form a second conical seal, and the first sealing ring is in contact with the second sealing ring to form a third conical seal, mating angles of the first conical seal, the second conical seal, and the third conical seal being different.

76. The explosion venting pipe assembly as claimed in claim 73, wherein an annular limiting boss is disposed on the first connecting pipe, the annular limiting boss being configured to cooperate with the explosion vent port of the battery module to fix the first connecting pipe.

77. The explosion venting pipe assembly as claimed in claim 67, comprising a first connecting pipe, a second connecting pipe, and a connecting assembly, wherein the first connecting pipe is configured to be connected to the explosion vent port of the battery module, and an explosion vent membrane is disposed either within the first connecting pipe or within the explosion vent port of the battery module; the second connecting pipe is configured to be connected to the explosion vent manifold; the connecting assembly comprises a ceramic pipe, a first sealing washer, and a second sealing washer; one end of the ceramic pipe is threaded to the first connecting pipe, and the first sealing washer is disposed at a connection part between the first connecting pipe and the ceramic pipe, achieving sealing between the first connecting pipe and the ceramic pipe; and the other end of the ceramic pipe is threaded to the second connecting pipe, and the second sealing washer is disposed at a connection part between the second connecting pipe and the ceramic pipe, achieving sealing between the second connecting pipe and the ceramic pipe.

78. The explosion venting pipe assembly as claimed in claim 77, wherein external threads are disposed on one end of the ceramic pipe connected to the second connecting pipe; and the second sealing washer is a T-shaped sealing washer comprising a sealing portion and a bushing portion, the sealing portion being disposed on an end portion of the ceramic pipe, and the bushing portion being disposed inside the ceramic pipe.

79. The explosion venting pipe assembly as claimed in claim 77, wherein the first sealing washer and the second sealing washer are made of polytetrafluoroethylene or of PEEK.

80. The explosion venting pipe assembly as claimed in any one of claims 77 to 79, wherein an annular limiting boss is disposed on the first connecting pipe, the annular limiting boss being configured to cooperate with the explosion vent port of the battery module to achieve a fixed connection of the first connecting pipe.

81. The explosion venting pipe assembly as claimed in claim 80, wherein the second connecting pipe is a three-way pipe, a first port of the second explosion vent component being configured to be connected to the ceramic pipe, and a second port of the second explosion vent component and a third port of the second explosion vent component being configured to be connected to flexible pipe segments forming the explosion vent manifold.

82. The explosion venting pipe assembly as claimed in claim 80, wherein the second connecting pipe is a flexible hollow pipe member, one end of the flexible hollow pipe member being configured to be connected to the ceramic pipe, and the other end of the flexible hollow pipe member being configured to be connected to the explosion vent manifold.

83. The explosion venting pipe assembly as claimed in claim 67, comprising an explosion venting pipe, an insulating sealing sleeve, and a mating pipe, wherein the explosion venting pipe is configured to be disposed on a housing of the battery module, and an explosion vent membrane is disposed within the explosion venting pipe; the insulating sealing sleeve is sleeved over the explosion venting pipe; and the mating pipe is configured to be disposed on the explosion vent manifold and is inserted over the insulating sealing sleeve.

84. The explosion venting pipe assembly as claimed in claim 83, wherein the insulating sealing sleeve is of a truncated cone structure.

85. The explosion venting pipe assembly as claimed in claim 83 or 84, wherein an annular plate is disposed on the insulating sealing sleeve for abutting against the housing of the battery module.

86. The explosion venting pipe assembly as claimed in claim 85, wherein the explosion venting pipe is an aluminum straight pipe, one end of the explosion venting pipe being configured to be fixedly connected to the housing of the battery module and to communicate with an interior of the battery module, and the other end of the explosion venting pipe being provided with an aluminum sheet serving as an explosion vent membrane.

87. The explosion venting pipe assembly as claimed in claim 86, wherein an annular groove is formed in a central region of the explosion vent membrane to form a weakened explosion venting region.

88. An installation platform, applied to the battery pack as claimed in claim 62, wherein the installation platform is of a frame structure, one side beam of the installation platform serves as an explosion vent manifold for thermal runaway gas, and a plurality of mating pipes are disposed on the explosion vent manifold.

89. The installation platform as claimed in claim 88, further comprising a plurality of pairs of support beams fixed within the frame structure, wherein each of the plurality of pairs of support beams serves as one mounting position for the battery module, and the support beams are insulated from the battery module.

90. A battery pack assembly, comprising the battery pack as claimed in claim 35 or 36, a mounting bracket, and a battery pack support frame, wherein the battery pack is fixed to the battery pack support frame via the mounting bracket.

91. The battery pack assembly as claimed in claim 90, wherein the battery pack support frame is a rectangular frame, comprising a U-shaped frame and a first beam detachably fixed to an opening end of the U-shaped frame.

92. The battery pack assembly as claimed in claim 91, wherein the U-shaped frame comprises a second beam and third beams fixed to two ends of the second beam, the second beam is made of I-shaped steel, and the explosion vent manifold of the battery pack is positioned between an upper flange and a lower flange of the I-shaped steel.

93. A battery pack assembly, comprising a battery pack support frame and the battery pack as claimed in claim 37 or 38 fixed to the battery pack support frame, wherein one side beam of the battery pack support frame is made of I-shaped steel, and the explosion vent manifold is embedded into an inner space between an upper flange and a lower flange of the side beam.

94. A battery pack assembly, comprising the battery pack as claimed in claim 39 or 40 and a battery pack support frame, wherein the battery pack is fixed to the battery pack support frame.

95. The battery pack assembly as claimed in claim 94, wherein the battery pack support frame is a rectangular frame, comprising a U-shaped frame and a first beam detachably fixed to an opening end of the U-shaped frame.

96. The battery pack assembly as claimed in claim 95, wherein the U-shaped frame comprises a second beam and third beams fixed to two ends of the second beam, the first beam and the second beam are made of I-shaped steel, and the explosion vent manifold of the battery pack is positioned between an upper flange and a lower flange of the I-shaped steel of the first beam or the second steel.
